(19) Europäisches Patentamt
European Patent Office
Office européen des brevets

(11) **EP 1 958 782 B1**

(12) **EUROPEAN PATENT SPECIFICATION**

(45) Date of publication and mention of the grant of the patent:
**27.08.2014 Bulletin 2014/35**

(21) Application number: **08002039.9**

(22) Date of filing: **04.02.2008**

(51) Int Cl.:
***B41M 5/00*** *(2006.01)* ***B41M 5/52*** *(2006.01)*
***B41M 7/00*** *(2006.01)* ***B41J 11/00*** *(2006.01)*
***C09D 133/26*** *(2006.01)* ***C09D 175/16*** *(2006.01)*
***C09D 11/10*** *(2014.01)* ***C09D 133/14*** *(2006.01)*
***C08L 75/04*** *(2006.01)* ***C09D 11/00*** *(2014.01)*

(54) **Ink-jet recording method and apparatus**

Tintenstrahlaufzeichnungsverfahren und Vorrichtung

Procédé d'impression à jet d'encre et appareil

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.02.2007 JP 2007036427**
**20.06.2007 JP 2007162354**

(43) Date of publication of application:
**20.08.2008 Bulletin 2008/34**

(73) Proprietor: **FUJIFILM Corporation**
**Tokyo 106-0031 (JP)**

(72) Inventors:
- **Makuta, Toshiyuki**
**Ashigarakami-gun**
**Kanagawa (JP)**
- **Nakazawa, Yusuke**
**Ashigarakami-gun**
**Kanagawa (JP)**

(74) Representative: **HOFFMANN EITLE**
**Patent- und Rechtsanwälte**
**Arabellastrasse 4**
**81925 München (DE)**

(56) References cited:
**EP-A- 1 728 644** **EP-A- 1 902 849**
**EP-A- 1 905 608** **JP-A- 7 040 649**
**JP-A- H1 067 905** **JP-A- 2003 145 745**
**JP-A- 2004 042 525** **US-A1- 2006 075 917**
**US-A1- 2006 077 243**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND OF THE INVENTION

Field of the Invention

The present invention relates to an ink jet recording method and an ink jet recording apparatus.

Description of the Related Art

The ink jet processes, by discharging an ink as a liquid droplet from an ink discharge port, are utilized in various printers because of reasons of being compact and inexpensive and being capable of image formation on a recording medium in a non-contact state. Among such ink jet processes, a piezo ink jet process which utilizes deformation of a piezoelectric element for ink discharge, and a thermal ink jet process which utilizes a boiling phenomenon of the ink by thermal energy for discharging a liquid droplet of the ink, have features of a high resolution and of a high-speed printing ability.

Presently, in the printing by ink droplet deposition by an ink jet printer onto a plain paper or a water-non-absorbent medium such as plastics, achievements of a higher speed and a higher image quality are important issues.

The ink jet recording is executed by discharging ink liquid droplets according to image data to form a line or an image by such liquid droplets on a recording medium. In particular, in the recording on the aforementioned non-absorbent recording medium, when a time is required for drying of the liquid droplet after deposition thereof or for penetration thereof into the recording medium, there result practical problems that the image tends to be blotted and that the ink droplets adjacent on the recording medium are mixed thereby hindering formation of a clear image.

In the case of mixing among liquid droplets, as the deposited adjacent liquid droplets are united to cause a displacement thereof from a landed position, whereby an unevenness in a line width in case of drawing a fine line or an unevenness in a color in case of drawing a colored area. Also as the level of unevenness in the line width or of unevenness in the color on the colored area is different depending on the ink absorbing property or the wetting property of the surface of the recording medium, there results a problem that the image becomes different among various recording media, even when the ink to be used and the discharge conditions therefor are maintained constant.

For suppressing the blotting of the image or the unevenness in the line width, methods of promoting the fixation of the liquid droplet are proposed. As an example thereof, in order to realize a highly precise image drawing property, a method is proposed to utilize reactive inks of two-liquid type and to react both on the recording medium. The methods of inks of two-liquid type include a method, as disclosed in JP-A No. 63-60783, of depositing a liquid containing a basic polymer and then executing a recording with an ink containing an anionic dye, and a method, as disclosed in JP-A No. 8-174997, of applying a liquid composition containing a cationic substance and then applying an ink containing an anionic substance and a colorant.

Also proposed, as disclosed in JP-A No. 2004-42548, is an ink jet recording method of utilizing an ultraviolet-curable ink as the ink, irradiating dots of an ultraviolet-curable colored ink, discharged on a recording medium, with an ultraviolet light in synchronization with each discharge timing to increase the viscosity and to execute a pre-curing in such an extent that the adjacent dots are not mixed with each other, and further executing an ultraviolet irradiation to achieve a main curing.

Also proposed, as described in JP-A No. 2003-145745 and JP-A No. 2004-42525, is a technology of uniformly coating a radiation-curable white ink as an undercoat layer on a transparent or semi-transparent recording medium, causing a viscosity increase or a solidification therein by irradiation of a radiation, and then executing an ink jet recording with a radiation-curable color ink set to achieve improvements in the problems of visibility and blotting of the color inks and that the image becomes different among various recording media.

Further proposed, as disclosed in JP-A No. 2005-96254, is a technology of coating a substantially transparent actinic-light-curable ink by an ink jet head, instead of the radiation-curable white ink described above.

EP-A-1 728 644 discloses a method of ink-jet printing comprising forming a coated ink-receiving layer containing a polymer binder and a curable compound, at least partially curing the coated ink-receiving layer to form a first image, and forming a second image partially overlapping with the first image by ink-jet printing an ink onto the ink-receiving layer.

US-A-2006/077243 discloses a method for ink-jet printing on a non-absorbent or a semi-absorbent substrate comprising applying an ink-receptive coating to part of the substrate. The ink-receptive coating includes a polymer.

JP-A-2003 145745 discloses a method of ink-jet recording comprising applying a radiation-curable ink including a white pigment on a transparent or semi-transparent base material and depositing a radiation-curable ink including a colouring material on to at least part of the (semi-) transparent base material.

JP-A-07 040649 teaches a resin composition comprising a hydrophilic monomer having one radical-polymerizable double bond and a monomer having at least two radical-polymerizable double bonds.

JP-A-2004 042525 discloses an ink-jet printer comprising a recording head for ejecting an ink onto a recording medium and a spray gun for applying white ink onto the medium. The white ink is applied by a method other than ink-jet printing.

US-A-2006/075917 discloses a printing method comprising applying an ink-receptive coating to a substrate, printing an actinic radiation-curable ink-jet ink on the coating and curing the ink-jet ink.

EP-A-1 902 849, which is prior art according to Article 54(3) EPC, discloses an ink-jet recording method comprising applying an undercoating liquid comprising an oligomer onto a recording medium, partially curing the undercoating liquid, and recording an image by ejecting a curable ink onto the partially-cured undercoating.

JP-A-2001 181549 teaches a dispersion of coloured fine particles comprising fine particles which contain an oil-soluble dye and an oil-soluble polymer. The oil-soluble polymer is preferably a vinyl polymer.

EP-A-1 905 608, which is prior art according to Article 54(3) EPC, discloses an ink-jet recording method comprising applying an undercoating liquid containing a polymer onto a recording medium, partially curing the undercoating liquid, and recording an image by ejecting a curable ink onto the partially cured undercoating liquid.

JP-A-10 067 905 discloses a curable composition containing a hydrophilic resin having ethylenically-unsaturated groups in a side chain and a hydrophilic oligomer having 2-4 terminal ethylenically-unsaturated groups and a weight-average molecular weight of 400-3000.

## SUMMARY OF THE INVENTION

A first aspect of the present invention is an ink jet recording method comprising providing a recording medium with an undercoat liquid containing a polymer and an oligomer in a mass ratio of 1:5 - 5:1, semi-curing the provided undercoat liquid, and recording an image by discharging an ink curable by irradiation with an energy ray onto the semi-cured undercoat liquid.

A second aspect of the present invention is an ink jet recording apparatus including an undercoat liquid-providing apparatus for providing a recording medium with an undercoat liquid containing a polymer and an oligomer in a mass ratio of 1:5 - 5:1, an undercoat liquid curing apparatus which is disposed at a downstream side of the undercoat liquid-providing apparatus in a moving direction of the recording medium and which provides at least a part of the undercoat liquid with an actinic energy ray to semi-cure the undercoat liquid, and an image recording apparatus which is disposed at a downstream side of the undercoat liquid curing apparatus in the moving direction of the recording medium and which records an image by discharging an ink, curable by irradiation with the actinic energy ray, onto the semi-cured undercoat liquid.

## BRIEF DESCRIPTION OF THE DRAWINGS

Fig. 1 is a schematic cross-sectional view illustrating a state when ink liquid droplets are deposited on an undercoat layer;
Figs. 2A and 2B are schematic cross-sectional views illustrating a state when ink droplets are deposited on an undercoat layer in an uncured state;
Fig. 2C is a schematic cross-sectional view illustrating a state when ink droplets are deposited on a completely cured undercoat layer;
Fig. 3 is a schematic cross-sectional view illustrating a state when droplets of an ink B are deposited on a layer of an ink A;
Figs. 4A and 4B are schematic cross-sectional views illustrating a state when ink droplets of an ink B are deposited on a layer of an ink A in an uncured state;
Fig. 4C is a schematic cross-sectional view illustrating a state when ink droplets of an ink B are deposited on a completely cured ink A;
Figs. 5A to 5D are views illustrating process steps for describing a principle of image formation;
Fig. 6 is a schematic cross-sectional view illustrating an entire construction of an image recording apparatus, for recording an image by the ink jet recording method of the present invention;
Fig. 7A is a plan view illustrating an example of a basic entire structure of a droplet depositing head shown in Fig. 6;
Fig. 7B is a cross-sectional view along a line b-b in Fig. 7A;
Fig. 8 is a schematic view illustrating an example of a liquid supply system constituting the image recording apparatus; and
Fig. 9 is a block diagram showing an example of a control system constituting the image recording apparatus.

DETAILED DESCRIPTION OF THE INVENTION

In the following, an exemplary embodiment of the ink jet recording method and the ink jet recording apparatus of the present invention will be described in detail.

The method described in JP-A No. 2004-42548 mentioned above can suppress the blotting but still has the persisting problem of image becoming different among various recording media, and is therefore insufficient for solving the line width unevenness or the color unevenness arising out of the mixing of liquid droplets. Also in case of forming an image by depositing, on a color ink deposited on the transparent ink, droplets of another color ink, the obtained image becomes distorted.

Also the methods described in JP-A No. 2003-145745 and JP-A No. 2004-42525 are insufficient for solving the line width unevenness or the color unevenness arising out of the mixing of liquid droplets.

Also in the method described in JP-A No. 2005-96254, the problem of the line width unevenness or the color unevenness arising out of the mixing of liquid droplets still persists, and the dot diameter becomes different depending on the recording medium.

Also in an image forming method by an ink jet process, since image formation is executed by depositing color inks in succession onto the substrate, there result a case where a later deposited ink is deposited on a previously deposited ink and a case where the later deposited ink is deposited in an area where the previously deposited ink is absent. A problem of image quality deterioration arises when the dot diameter (and dot shape) is different among these cases.

The present invention has been made in view of such circumstances, and an object thereof is to provide an ink jet recording method and an ink jet recording apparatus, excellent in image uniformity regardless of the recording medium and among various recording media, capable of suppressing occurrence of an ink blotting and an unevenness in the line width and in the color, and capable, even in case of depositing droplets of inks in overlapping manner, of maintaining a uniform dot diameter, thereby realizing a reproducible recording with a high density and a high definition, regardless of the form of the image.

When recording an image by discharging an ink onto a recording medium, an undercoat liquid is provided on the recording medium prior to the ink droplet deposition, and the undercoat liquid contains a polymer and an oligomer to be described later.

The ink jet recording method of the present invention includes providing a recording medium with an undercoat liquid containing a polymer and an oligomer in a mass ratio of 1:5-5:1 (undercoat liquid providing process), semi-curing the provided undercoat liquid (curing process), and recording an image by discharging, on the semi-cured undercoat liquid, an ink curable by irradiation of an actinic energy ray (recording process). Also it may further include other processes such as a process of semi-curing the ink, according to necessity.

In a general ink jet recording method, the adjacent liquid droplets deposited with a mutually overlapping portion in order to obtain a high image density remain in contact with each other, prior to drying, on the recording medium, such adjacent ink droplets are united with each other to cause an image blotting or an unevenness in the line width of a fine line, thus liable to hinder the formation of a high definition image.

However, in the ink jet recording method of the present invention, as the undercoat liquid is provided on the recording medium and is semi-cured, even when the ink droplets are deposited with a mutually overlapping portion on thus semi-cured undercoat liquid, the uniting of such adjacent ink droplets can be suppressed by an interaction between the undercoat liquid and the ink droplet. It is thus rendered possible to effectively prevent the image blotting, the line width unevenness for example in a fine line in the image and the color unevenness in a colored area.

More specifically, as the undercoat liquid used in the present invention contains a polymer and an oligomer, a satisfactory image can be formed in case of depositing droplets of inks in overlapping manner, particularly in case of depositing droplets of inks of plural colors. For example, even in case of drawing an image by discharging an ink onto the undercoat liquid and drawing a dot or a line with a different ink on such image, the dot or line can be suppressed from spreading and can be drawn in the same manner as in a case where the image is not present.

Besides, as the undercoat liquid used in the present invention contains a polymer and an oligomer in a mass ratio of 1:5-5:1, the deposited ink droplets suitably spread and are connected therebetween, but the spreading can be suppressed to an extent not causing a deterioration in the dot shape or a distortion or a blotting in the image.

The adjacent ink droplets mean droplets deposited from an ink discharge port with an overlapping portion by an ink of a single color, or droplets deposited from an ink discharge port with an overlapping portion by inks of different colors. The adjacent ink droplets may be those deposited at the same time, or may be a preceding droplet and a succeeding droplet, deposited respectively in advance and in succession.

Thus, the invention enables to provide an ink jet recording method and an ink jet recording apparatus, excellent in image uniformity regardless of the recording medium and among various recording media, capable of suppressing occurrence of an ink blotting and an unevenness in the line width and in the color, and capable, even in case of depositing droplets of inks in overlapping manner, of maintaining a uniform dot diameter, thereby realizing a reproducible recording

with a high density and a high definition, regardless of the form of the image.

Also it is found important that the dot diameter (and dot shape) is not changed between a case where a color ink is deposited in an area where a color ink is absent and a case where a color ink is deposited on a previously deposited color ink, and the present invention has been made based on such finding.

Therefore, the dot diameter (and dot shape) is not changed between the case where a color ink is deposited in an area where a color ink is absent and the case where a color ink is deposited on a previously deposited color ink, thereby providing a high quality image.

The present invention utilizes, as liquids for forming an image, at least an ink and at least an undercoat liquid. The undercoat liquid preferably has a formulation different from that of the ink. Also the undercoat liquid is preferably applied in a same area of an image to be formed by the ink droplet discharge on a recording medium or in an area wider than the image.

Also the ink used in the present invention is preferably utilized as ink of plural colors (multiple colors) in a multi-color ink set. Also in case of utilizing multi-color inks of such multi-color ink set, it is preferable to adopt a construction, after ink discharge of each color, of semi-curing the droplets of such ink.

In a specific construction of the ink jet recording method of the present invention, the ink droplets of plural colors to be deposited on the recording medium contain polymerizable or crosslinking materials for forming an image, and the method includes a process of providing the recording medium with an undercoat liquid different in formulation from the inks and containing a polymer and an oligomer in an area same as or wider than the image to be formed by the ink droplets, a process of semi-curing the undercoat liquid provided on the recording medium by applying an actinic energy ray or heat, and, after such semi-curing with the actinic energy ray or heat, a process of depositing ink droplet of plural colors on the undercoat liquid.

It is also preferable, after providing the undercoat liquid in advance and then depositing all the droplets of at least a desired ink (preferably the droplets of multi color inks), in view of obtaining a satisfactory fixing property to the inks, to provide a process of further promoting the curing of the undercoat liquid and the discharged ink for example by applying an actinic energy ray thereby fixing the recorded image (such process being hereinafter called a fixing process).

- Undercoat liquid providing process, recording process -

In the undercoat liquid providing process, the undercoat liquid is provided on the recording medium. The undercoat liquid contains a polymer and an oligomer in a mass ratio of 1:5-5:1, and preferably contains further a radical polymerizable compound and a surfactant. Also it may further contain other components according to the necessity. The details of the components constituting the undercoat layer and the recording medium will be described later.

In the recording process, an image is recorded by discharging, on the undercoat liquid semi-cured in a curing process to be described later, an ink curable by irradiation of an actinic energy ray. The ink is deposited as a liquid droplet formed for example by an ink jet nozzle, onto the semi-cured undercoat liquid.

In the ink jet recording method of the present invention, the undercoat liquid can be provided on the recording medium by a coating apparatus or an ink jet nozzle.

(i) Coating by coating apparatus

In the present invention, preferred is an embodiment of coating the undercoat liquid by a coating apparatus on the recording medium, and then recording an image by depositing ink droplets by an ink jet nozzle. The ink jet nozzle will be described later.

The coating apparatus is not particularly restricted, and may be suitably selected from known coating apparatuses according to the purpose, and examples thereof include an air doctor coater, a blade coater, a rod coater, a knife coater, a squeeze coater, a dip coater, a reverse roll coater, a transfer roll coater, a gravure coater, a kiss roll coater, a cast coater, a spray coater, a curtain coater, and an extrusion coater. For details, reference may be made to Yuji Harasaki, *"Coating Engineering"*.

(ii) Discharge by ink jet nozzle

In the present invention, preferred also is an embodiment of discharging the undercoat liquid by an ink jet nozzle, and then recording an image by depositing ink droplets by an ink jet nozzle. The ink jet nozzle will be described later. For coating the undercoat liquid by an ink jet nozzle, it is desirable to dispose a head, having a larger discharged liquid droplet amount and a lower nozzle density than in a head for ink drawing, as a full-line head in a transversal direction of the recording medium, and to discharge the undercoat liquid by such head. The head of such larger discharged liquid droplet amount, generally having a higher discharge power, is capable of matching the undercoat liquid of a high viscosity and is advantageous against the nozzle clogging. Also the head having a larger discharged liquid droplet amount allows

to reduce the resolution of droplet deposition in the conveying direction of the recording medium, thus providing an advantage that an inexpensive head of a low drive frequency can be utilized.

Also in any of the aforementioned embodiments, a liquid other than the undercoat liquid and the inks may be further deposited. Such other liquid may be deposited on the recording medium by any method such as a coating by a coating apparatus or a discharge by an ink jet nozzle, and the timing of deposition is not particularly restricted. In the case that the other liquid contains a colorant, it is preferably deposited by a discharge from an ink jet nozzle and is preferably deposited after the undercoat liquid is provided.

In the following, a discharge process by the ink jet nozzle (ink jet recording process) will be explained.

In the present invention, advantageously employable are already known processes, such as an electrostatic attraction process in which the ink is discharged by an electrostatic force, a drop-on-demand process (pressure pulse process) utilizing a vibration pressure of a piezoelectric element, an acoustic ink jet process in which an electrical signal is converted into an acoustic beam that irradiates the ink to cause a discharge thereof by a radiation pressure, and a thermal ink jet process of heating the ink to generate a bubble and utilizing the pressure thereof.

The ink jet recording process further includes a process of discharging a low-density ink, called photo ink, with a small volume in a large number, a process of improving the image quality by utilizing plural inks having a substantially same color but different in density, and a process of utilizing a colorless transparent ink.

In the present invention, the ink to be discharged on the semi-cured undercoat liquid is preferably deposited (preferably by an ink jet nozzle) with a droplet size of from 0.1 to 100 pL (pico-liter, hereinafter represented in the same manner). The liquid droplet size within such range is effective in that an image of a high sharpness can be drawn with a high density. It is more preferably within a range of from 0.5 to 50 pL.

Also an amount of the ink droplet (in mass ratio per unit area) is, taking the ink droplet amount as unity, preferably within a range of from 0.05 to 5, more preferably from 0.07 to 4 and particularly preferably from 0.1 to 3.

A deposition interval from the semi-curing of the undercoat liquid to the deposition of the ink droplet is preferably within a range of from 5 $\mu$sec to 10 seconds. The deposition interval within such range is effective in conspicuously exhibiting the effect of the present invention. The deposition interval of the ink droplet is more preferably from 10 $\mu$sec to 5 seconds, and particularly preferably from 20 $\mu$sec to 5 seconds.

In the recording process, a multi-color image can be recorded utilizing an ink set, including plural color inks. In such case, in view of reproduction of a detailed image and color reproducibility, preferable is a construction of providing a process of semi-curing a color ink or two or more color inks among the inks of plural colors to be deposited on the recording medium, and executing an exposure (so-called pinning exposure) for each color ink or for inks of every predetermined colors.

An actinic energy ray is advantageously used for the pinning exposure, and the details of the actinic energy ray are similar to the case of fixing process to be described later. It includes, for example, an ultraviolet light, a visible light, an $\alpha$-ray, a $\gamma$-ray, an X-ray and an electron beam, and, in consideration of cost and safety, an ultraviolet light and a visible light are preferable and an ultraviolet light is particularly preferable.

The energy amount required for the semi-curing is variable depending on the type and content of the polymerization initiator, but is generally within a range preferably of from 1 to 500 mJ/cm$^2$, more preferably from 1 to 200 mJ/cm$^2$ and preferably from 1 to 100 mJ/cm$^2$.

- Curing process -

In the present invention, a curing process for semi-curing the provided undercoat liquid within an interval from the deposition of the undercoat liquid in the undercoat liquid providing process to the deposition of droplets of at least an ink in the recording process.

Now the semi-curing of the undercoat liquid will be described.

In the present invention, "semi-curing" and "semi-cured" means "partial curing" and "partially cured", namely a state in which the undercoat layer (undercoat liquid) is partially cured but is not completely cured. In the case that the undercoat layer applied on the recording medium (substrate) is semi-cured, the level of the curing may be inhomogeneous. For example, the curing in the undercoat layer preferably proceeds in the direction of depth.

In the case of using an undercoat layer having a radical polymerizing property in the air or in the air partially substituted with an inert gas, the radical polymerization tends to be inhibited at the surface of the undercoat layer because of the radical polymerization inhibiting effect of oxygen. Therefore, the curing becomes uneven, and tends to proceed more in the interior of the undercoat layer but to be delayed on the surface.

Also in the case of using an undercoat layer having a cationic polymerizing property in the air having humidity, the radical polymerization tends to proceed in the interior of the undercoat layer and to be inhibited at the surface of the undercoat layer because of the cationic polymerization inhibiting effect of moisture.

In the invention, when the undercoat layer having a radical photopolymerizing property is used in the presence of oxygen having a radical polymerization inhibiting effect and is partially photocured, the curing of the undercoat layer

becomes higher in the internal part than in the external part.

Droplet deposition of ink (colored liquid) on the undercoat layer in a semi-cured state provides a preferable technical effect on the quality of the image formed on the recording medium. Also the functioning mechanism thereof can be confirmed by a cross-sectional observation of the recording medium, bearing an image thereon.

Now there will be explained, as an example, a high density portion in a case where an ink droplet of about 12 pL is deposited on a semi-cured undercoat layer of a thickness of about 5 μm.

According to the present invention, the undercoat layer is in a semi-cured state, and the level of curing is higher in a side closer to the substrate than in a side farther from the substrate. In such case, three features are observed. As illustrated in Fig. 1:

(1) a part of the ink 24 emerges at the surface of the undercoat layer 22;
(2) a part of the ink 24 is embedded in the undercoat layer 20; and
(3) between the ink 24 and the substrate 26, the undercoat layer 20 is present.

Thus, the recording medium, having an image obtained by depositing the ink 24 on the semi-cured undercoat layer 20, has a cross section as schematically illustrated in Fig. 1. In the case that the states (1), (2) and (3) are satisfied, the ink can be considered to be deposited on the semi-cured undercoat layer. In such case, the ink droplets deposited at a high density are mutually connected to form a colored film, thereby providing a uniform and high color density.

On the other hand, in the case that the ink droplet is deposited on the undercoat layer in an uncured state, the ink assumes at least either one of a state in which the ink 24 is entirely embedded in the undercoat layer 20 as shown in Fig. 2A, and a state in which the undercoat liquid 20 is absent between the ink 24 and the substrate 26 as shown in Fig. 2B. In these cases, the liquid droplets remain independent even when deposited at a high density, thus leading to a decrease in the color density. Thus, the recording medium, having an image obtained by depositing the ink 24 on the uncured undercoat layer 20, has a cross section as schematically illustrated in Figs. 2A and 2B.

Also in the case that the ink droplet is deposited on the completely cured undercoat layer, the ink 24 assumes a state not embedded in the undercoat layer 20, as shown in Fig. 2C. Such state induces occurrence of interference of deposited droplets, and is incapable of forming a uniform ink film, thus leading to a deterioration in the color reproducibility. Thus, the recording medium, having an image obtained by depositing the ink 24 on the completely cured undercoat layer 20, has a cross section as schematically illustrated in Fig. 2C.

In view of forming a uniform ink liquid layer, instead of independent liquid droplets, when the ink droplets are deposited at a high density and of suppressing occurrence of the interference of deposited droplets, an amount of the uncured portion of the undercoat layer per unit area is preferably sufficiently smaller than the maximum droplet amount of the ink to be deposited per unit area.

More specifically, a relation between a mass M(undercoat liquid) of the uncured portion of the undercoat layer per unit area and a maximum mass m of the ink to be discharged per unit area is preferably "m(ink)/30 < M(undercoat layer) < m(ink)", more preferably "m(ink)/20 < M(undercoat layer) < m(ink)/3" and particularly preferably "m(ink)/10 < M(undercoat layer) < m(ink)/5". The maximum mass m of the ink to be discharged per unit area is a maximum mass per one color.

A relation m(ink)/30 < M(undercoat layer) enables to prevent occurrence of the interference of the deposited droplets, and to provide an excellent dot size reproducibility. Also a relation M(undercoat layer) < m(ink) enables to form a uniform ink liquid layer thereby obtaining a high density.

The mass of the uncured portion of the undercoat layer per unit area can be determined by a following transfer test. It can be determined by pressing, after the semi-curing process (for example after the irradiation of the actinic energy ray) and before the deposition of the ink droplet, a permeating medium such as a plain paper to the undercoat layer in the semi-cured state, and measuring the mass of the liquid of the undercoat layer, transferred to the permeating medium.

For example, in the case of a droplet deposition density of 600 x 600 dpi and a maximum ink discharge amount of 12 pL per pixel, the maximum mass m of the ink discharged per unit area becomes 0.74 $mg/cm^2$ (assuming that the density of ink as about 1.1 $g/cm^3$). Therefore, the preferable mass of the uncured portion of the undercoat layer per unit area becomes from 0.025 to 0.74 $mg/cm^2$, more preferably from 0.037 to 0.25 $mg/cm^2$, and particularly preferably from 0.074 to 0.148 $mg/cm^2$.

Also in case of forming a secondary color by two color inks (assumed as ink A and ink B), it is possible to semi-cure either ink, and for example to deposit the ink B on the ink A in a semi-cured state. In the case of depositing the ink B on the ink A in the semi-cured state, obtained is a state as illustrated in Fig. 3, in which an ink 28, constituting the ink B, is partially embedded in an ink A (24), and the ink 24 as the ink A is present underneath the ink 28 as the ink B. Thus, the recording medium on which an image is formed by depositing the ink 28, constituting the ink B, onto the ink 24, as the ink A, has a cross section as schematically illustrated in Fig. 3. Thus a satisfactory color reproduction is made possible by a laminated state of the cured film of the ink A and the cured film of the ink B.

On the other hand, in the case of depositing the ink B on the ink A in an uncured state, the inks assume at least

either one of a state in which the ink 28, constituting the ink B, is entirely embedded in the ink 24, constituting the ink A, as shown in Fig. 4A, and a state in which the ink 24, as the ink A, is absent underneath the ink 28 as the ink B, as shown in Fig. 4B. In these cases, the liquid droplets remain independent even when the ink B droplets are deposited at a high density, thus leading to a decrease in the saturation of the secondary color. Thus, the recording medium, having an image obtained by depositing the ink 28, as the ink B, on the ink 24, as the uncured ink A, has a cross section as schematically illustrated in Figs. 4A and 4B.

Also in the case that the droplets of the ink B are deposited on the completely cured ink A, the ink 28 constituting the ink B assumes a state not embedded in the in the ink 24 constituting the ink A, as shown in Fig. 4C. Such state induces occurrence of interference of deposited droplets, and is incapable of forming a uniform ink layer, thus leading to a deterioration in the color reproducibility. Thus, the recording medium, having an image obtained by depositing the ink 28 as the ink B on the ink 24 as the completely cured ink A, has a cross section as schematically illustrated in Fig. 4C.

In view of forming a uniform ink liquid layer of the ink B, instead of independent liquid droplets, when the droplets of the ink B are deposited at a high density and of suppressing occurrence of the interference of deposited droplets, an amount of the uncured portion of the ink A per unit area is preferably sufficiently smaller than the maximum droplet amount of the ink B to be deposited per unit area. More specifically, a relation between a mass M (ink A) of the uncured portion of the ink A layer per unit area and a maximum mass m (ink B) of the ink B layer to be discharged per unit area is preferably "m (ink B)/30 < M (ink A) < m (ink B)", more preferably "m (ink B)/20 < M (ink A) < m (ink B)/3" and particularly preferably "m (ink B)/10 < M (ink A) < m (ink B)/5".

A relation m (ink B)/30 < M (ink A) enables to prevent occurrence of the interference of the deposited droplets, and to provide an excellent dot size reproducibility. Also a relation M (ink A) < m (ink B) enables to form a uniform ink liquid layer thereby obtaining a high density.

The mass of the uncured portion of the ink A per unit area can be determined by a following transfer test. It can be determined by pressing, after the semi-curing process (for example after the irradiation of the actinic energy ray) and before the deposition of the ink B, a permeating medium such as a plain paper to the ink A layer in the semi-cured state and measuring the mass of the liquid of the ink A layer, transferred to the permeating medium.

For example, in the case of a droplet deposition density of 600 x 600 dpi and a maximum discharge amount of the ink B of 12 pL per pixel, the maximum mass m of the ink B (ink) discharged per unit area becomes 0.74 $mg/cm^2$ (assuming that the density of ink B as about 1.1 $g/cm^3$). Therefore, the preferable mass of the uncured portion of the ink A layer per unit area becomes from 0.025 to 0.74 $mg/cm^2$, more preferably from 0.037 to 0.25 $mg/cm^2$, and particularly preferably from 0.074 to 0.148 $mg/cm^2$.

In case of a curing reaction based on an ethylenic unsaturated compound or a cyclic ether, an unpolymerized rate can be quantitatively measured by a reaction rate of the ethylenic unsaturated compound or the cyclic ether (to be explained later).

In the case that the semi-cured state of the undercoat liquid or at least either one of the inks is realized by a polymerization reaction initiated by irradiation of an actinic energy ray or by heating, of a polymerizable compound, in view of improving a friction resistance of a print, the unpolymerized rate (A (after polymerization)/A (before polymerization)) is preferably from 0.2 to 0.9, more preferably from 0.3 to 0.9 and particularly preferably from 0.5 to 0.9.

The A (after polymerization) means an absorbance of an infrared absorption peak attributed to a polymerizing group after the polymerization reaction, and A (before polymerization) means an absorbance of an infrared absorption peak attributed to the polymerizing group after the polymerization reaction. For example, in the case that the polymerizable compound contained in the undercoat liquid and/or the ink is an acrylate monomer or a methacrylate monomer, an absorption peak attributable to the polymerizable group (acrylate group or methacrylate group) can be observed at about 810 $cm^{-1}$, and the unpolymerized rate is preferably defined by the absorbance of such peak. Also in the case that the polymerizable compound is an oxetane compound, an absorption peak attributable to the polymerizable group (oxetane ring) can be observed at about 986 $cm^{-1}$, and the unpolymerized rate is preferably defined by the absorbance of such peak. In the case that the polymerizable compound is an epoxy compound, an absorption peak attributable to the polymerizable group (epoxy group) can be observed at about 750 $cm^{-1}$, and the unpolymerized rate is preferably defined by the absorbance of such peak.

The infrared absorption spectrum can be measured by a commercially available infrared spectrophotometer, which may be a transmission type or a reflective type that can be suitably selected according to the state of the sample. For example the measurement can be executed with an infrared spectrophotometer FTS-6000 manufactured by Bio-Rad Inc.

Furthermore, the preferable semi-cured state can be judged by observing a cross section of ink droplet, deposited on an undercoat layer in a semi-cured state.

The method of cross-sectional observation is not particularly restricted, and may be executed, for example, with a commercial microtome (such as Microtome RM2255 manufactured by Leitz GmbH) and a commercial optical microscope (such as Measuring Microscope MM-40 manufactured by Nikon Corp.). Also the size of the ink droplet deposited on the undercoat layer in the semi-cured state is preferably within a range of from 1 to 100 pico-liters, and is further preferably

equal to the size of the actually employed ink droplet. Also at the cross-sectional observation, the semi-cured film is preferably solidified by any method. The solidifying method is not particularly restricted, and a freezing or a curing by polymerization may be utilized.

Examples of the method for semi-curing the undercoat layer include already known viscosifying methods such as (1) a method of utilizing so-called coagulation phenomenon such as providing an acidic polymer with a basic compound or providing a basic polymer with an acidic compound or a metal compound, (2) a method of preparing the undercoat liquid in advance at a high viscosity, then reducing the viscosity by adding a low-boiling organic solvent, and evaporating the low-boiling organic solvent to restore the original high viscosity, (3) a method of changing a undercoat liquid, prepared with a high viscosity, to a low viscosity by heating, and returning it to the original high viscosity by cooling, and (4) a method of providing the undercoat liquid with an actinic energy ray to induce a curing reaction. Among these, preferable is the method (4) of providing the undercoat liquid with an actinic energy ray to induce a curing reaction.

The method of providing the undercoat liquid with an actinic energy ray to induce a curing reaction, is a method of insufficiently executing a polymerization reaction of the polymerizable compound, at the surface of the undercoat layer provided on the recording medium. As described above, the polymerization reaction tends to be inhibited at the surface of the undercoat layer, in comparison with the interior thereof, by the influence of oxygen in the air. Therefore, a semi-cured state of the undercoat layer can be induced by controlling the condition of providing the actinic energy ray or the heat.

An energy amount necessary for semi-curing the undercoat liquid is variable dependent on the type and content of the polymerization initiator, but, in case of providing the energy by an actinic energy ray, it is preferably within a range of about from 1 to 500 $mJ/cm^2$. Also in case of providing the energy by heating, it is preferable to execute heating for a period of from 0.1 to 1 second under a condition that the recording medium reaches a surface temperature within a range of from 40 to 80°C.

Application of the actinic energy ray such as an actinic light or application of heat promotes the generation of active species by a decomposition of the polymerization initiator, and an increase in the active species or a temperature elevation promotes a curing reaction by polymerization or crosslinking of the polymerizable or crosslinking material, induced by the active species.

Also a viscosification (increase in viscosity) can be advantageously executed by irradiation of the actinic light or by heating.

The semi-curing has been explained principally on the undercoat layer, but it is similar also in the case of an ink.

A level of polymerization degree of the polymerizable compound at the surface of the semi-cured undercoat liquid is preferably from 1 to 70%, more preferably from 5 to 60% and particularly preferably from 10 to 50%. The polymerization degree can be measured for example by IR.

The details of the actinic energy ray is similar to those in the case of the fixing process to be described later, and includes, for example, an ultraviolet light, a visible light, an $\alpha$-ray, a $\gamma$-ray, an X-ray and an electron beam, and, in consideration of cost and safety, an ultraviolet light and a visible light are preferable and an ultraviolet light is particularly preferable.

- Fixing process -

The fixing process is preferably executed after the undercoat liquid providing process, the curing process and the recording process described above. The fixing process, for example by an energy application, further promotes the curing of the undercoat liquid and the discharged ink, thereby fixing the recorded image.

In the case that a polymerizable or crosslinking material is contained, the application of energy promotes a curing reaction by polymerization or crosslinking thereof to form a firmer image more efficiently. For example in a system containing a polymerizable compound, application of an activation energy by an actinic energy ray or by heating promotes generation of active species by the decomposition of the polymerization initiator, and an increase in the active species or a temperature elevation promotes a curing reaction by polymerization or crosslinking of the polymerizable or crosslinking material, induced by the active species.

The application of energy can be executed advantageously by irradiation with an actinic energy ray or by heating. The actinic energy ray to be used may be similar to the actinic light in the fixing process to be described later, and includes, for example, an ultraviolet light, a visible light, an $\alpha$-ray, a $\gamma$-ray, an X-ray and an electron beam, and, in consideration of cost and safety, an ultraviolet light and a visible light are preferable and an ultraviolet light is particularly preferable.

Also the heating may be executed by non-contact type heating means, and heating means for passing a heating oven heating means by a flush exposure with an ultraviolet, visible or infrared light can be used advantageously. Examples the light source suitable for the exposure as heating means include a metal halide lamp, a xenon lamp, a tungsten lamp, a carbon arc light and a mercury lamp.

An energy amount necessary for the curing reaction is variable dependent on the type and content of the polymerization initiator, but, in case of providing the energy by irradiation with an actinic energy ray, it is preferably within a range of about from 100 to 10,000 $mJ/cm^2$. Also in case of providing the energy by heating, it is preferable to execute

heating for a period of from 0.1 to 1 second under a condition that the recording medium reaches a surface temperature within a range of from 40 to 80°C.

(Curing sensitivity of ink and undercoat liquid)

In the present invention, the curing sensitivity of the ink is same as or higher than the curing sensitivity of the undercoat liquid. More preferably, the curing sensitivity of the ink is equal to or higher than the curing sensitivity of the undercoat liquid but is equal to or lower than 4 times of the curing sensitivity of the undercoat liquid. Further preferably, the curing sensitivity of the ink is equal to or higher than the curing sensitivity of the undercoat liquid but is equal to or lower than 2 times of the curing sensitivity of the undercoat liquid.
A curing sensitivity of the ink, equal to or higher than the curing sensitivity of the undercoat liquid, enables to obtain a uniform dot diameter and a uniform dot shape, in a multi-color printing, both in a case where the ink droplet is deposited on the undercoat liquid and in a case where the ink droplet is deposited on the previously deposited ink liquid.
The curing sensitivity means, in case of curing at least either of the ink and the undercoat liquid with a mercury lamp (ultra-high pressure type, high pressure type or medium pressure type, preferably an ultra-high pressure mercury lamp), an energy amount necessary for complete curing, and a smaller energy amount corresponds to a higher sensitivity. Therefore, a twice curing sensitivity means that the necessary energy amount is 1/2.

(Physical properties of ink and undercoat liquid)

The physical properties of the ink (liquid droplet) to be discharged onto the recording medium by the ink jet recording process are variable depending on the apparatus, but, in general, a viscosity at 25°C is preferably within a range of from 5 to 100 mPa·s, more preferably from 10 to 80 Pa.s. Also a viscosity (25°C) of the undercoat liquid in the semi-cured state is preferably within a range of from 100 to 5,000 mPa·s, more preferably from 200 to 3,000 Pa·s.
In the present invention, in view of forming a dot of an intended size on the recording medium, the undercoat liquid preferably contains a surfactant, satisfying all the following conditions (A), (B) and (C):

(A) The surface tension of the surfactant is smaller than the surface tension of any one of the inks;
(B) At least one of the surfactants contained in the undercoat liquid satisfies a relation:

$$\gamma s(0) - \gamma s(\text{saturation}) > 0 \text{ (mN/m)};$$

(C) The surface tension of the undercoat liquid satisfies a relation:

$$\gamma s < (\gamma s(0) + \gamma s(\text{saturation})^{max}) / 2.$$

In the foregoing, $\gamma s$ indicates the surface tension of the undercoat liquid; $\gamma s(0)$ means the surface tension of a liquid excluding all the surfactants from the formulation of the undercoat liquid; and $\gamma s$(saturation) means the surface tension, when one of the surfactants in the formulation of the undercoat liquid is added to the aforementioned "liquid excluding all the surfactants" and when the surface tension of the liquid is saturated by increasing the concentration of the surfactant. Also $\gamma s(\text{saturation})^{max}$ means a largest value among the values of $\gamma s$(saturation) determined for all the surfactants satisfying the condition (B).

(Condition (A))

In the present invention, as described above, in order to form an ink dot of a desired size on the recording medium, it is preferable to select the surface tension $\gamma s$ of the undercoat liquid smaller than the surface tension $\gamma k$ of any of the inks.
Also in view of effectively preventing the enlargement of the ink dot in the interval from the droplet deposition to the exposure, more preferable is a condition $\gamma s < \gamma k - 3$ (mN/m), and further preferable is a condition $\gamma s < \gamma k - 5$ (mN/m).
Also in case of printing a full-color image, in view of improving the sharpness of the image, the surface tension $\gamma s$ of the undercoat liquid is preferably made smaller than at least the surface tension of an ink containing a colorant of a high visual sensitivity, and more preferably made smaller than the surface tensions of all the inks. Examples of the colorant having a high visual sensitivity include colorants of magenta, black and cyan colors.

Also, even when the surface tension γk of the ink and the surface tension γs of the undercoat liquid satisfy the aforementioned relation, the droplet formation at the droplet deposition in the ink jet process may become difficult to cause a discharge failure in the case that both values are less than 15 mN/m. On the other hand, a value exceeding 50 mN/m may deteriorate the wetting property on the ink jet head, thereby resulting in a discharge failure. Therefore, in view of achieving a proper discharge, each of the surface tension γk of the ink and the surface tension γs of the undercoat liquid is preferably within a range of from 15 to 50 mN/m, more preferably from 18 to 40 mN/m, and particularly preferably from 20 to 38 mN/m.

The surface tension mentioned above is obtained by a measurement with an ordinary surface tension meter (for example Surface Tension Meter CBVP-Z, manufactured by Kyowa Interface Science Co., Ltd.), by the Wilhelmy method at a liquid temperature of 20°C and a humidity 60%RH.

(Condition (B) and condition (C))

In the present invention, in order to form an ink dot of a desired size on the recording medium, the undercoat liquid preferably contains at least a surfactant. In such case, at least one of the surfactants contained in the undercoat liquid preferably satisfies the following condition (B):

$$\gamma s(0) - \gamma s(\text{saturation}) > 0 \ (\text{mN/m}): \quad \text{condition (B)}$$

Also the surface tension of the undercoat liquid preferably satisfies the following relation (C):

$$\gamma s < (\gamma s(0) + \gamma s(\text{saturation})^{\max}) / 2: \quad \text{condition (C)}$$

As described above, γs indicates the surface tension of the undercoat liquid; γs(0) means the surface tension of a liquid excluding all the surfactants from the formulation of the undercoat liquid; γs(saturation) means the surface tension, when one of the surfactants in the formulation of the undercoat liquid is added to the aforementioned "liquid excluding all the surfactants" and when the surface tension of the liquid is saturated by increasing the concentration of the surfactant; and $\gamma s(\text{saturation})^{\max}$ means a largest value among the values of γs(saturation) determined for all the surfactants satisfying the condition (B).

The aforementioned value γs(0) can be obtained by measuring the surface tension of the liquid excluding all the surfactants from the formulation of the undercoat liquid. Also γs(saturation) is obtained, when one of the surfactants in the formulation of the undercoat liquid is added to the aforementioned "liquid excluding all the surfactants" and when, upon increasing the concentration of the surfactant stepwise by 0.01 % by mass, a change in the surface tension becomes 0.01 mN/m or less, by measuring the surface tension of the liquid.

In the following, γs(0), γs(saturation) and $\gamma s(\text{saturation})^{\max}$ will be explained in more details.

For example, in the case that the undercoat liquid (Example 1) contains the components of a high-boiling solvent (diethyl phthalate, manufactured by Wako Pure Chemical Industries, Ltd.), a polymerizable material (dipropylene glycol diacrylate, manufactured by Akcros Chemicals Inc.), a polymerization initiator (TPO, following initiator-1), a fluorinated surfactant (Megafac F475, manufactured by Dai-Nippon Ink and Chemicals, Ltd.) and a hydrocarbon type surfactant (di-2-ethylhexylsodium sulfosuccinate), the values of γ s(0), $\gamma s(\text{saturation})^1$ (in case of addition of fluorinated surfactant), $\gamma s(\text{saturation})^2$ (in case of addition of hydrocarbon type surfactant), γs(saturation) and $\gamma s(\text{saturation})^{\max}$ become as follows.

[kagaku 1]

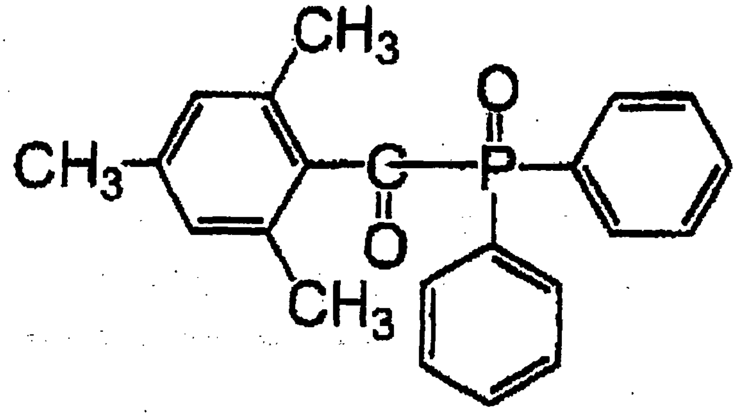

initiator-1

The value $\gamma s(0)$ is the surface tension of the liquid excluding all the surfactants from the undercoat liquid, and becomes 36.7 mN/m. Also the value $\gamma$ s(saturation)$^1$, which is a saturated value of the surface tension of such liquid when the fluorinated surfactant is added to such liquid with an increasing concentration, becomes 20.2 mN/m. Further, the value $\gamma$s(saturation)$^2$, which is a saturated value of the surface tension of such liquid when the hydrocarbon type surfactant is added to such liquid with an increasing concentration, becomes 30.5 mN/m.

As this undercoat liquid (Example 1) contains two surfactants satisfying the condition (B), $\gamma$s(saturated) may assume two values, namely when the fluorinated surfactant is added ($\gamma$s(saturated)$^1$) and when the hydrocarbon type surfactant is added ($\gamma$s(saturated)$^2$). The surface tension $\gamma$s(saturated)$^{max}$, being the largest value among $\gamma$s(saturated)$^1$ and $\gamma$ s(saturated)$^2$, assumes a value of $\gamma$ s(saturated)$^2$.
The foregoing can be summarized as follows:

$$\gamma s(0) = 36.7 \text{ mN/m};$$

$\gamma$s(saturation)$^1$ = 20.2 mN/m (in case of addition of fluorinated surfactant);
$\gamma$s(saturation)$^2$ = 30.5 mN/m (in case of addition of hydrocarbon type surfactant);
$\gamma$s(saturation)$^{max}$ = 30.5 mN/m.

Based on the foregoing results, the surface tension $\gamma$s preferably satisfies a following relation:

$$\gamma s < (\gamma s(0) + \gamma s(\text{saturation})^{max})/2 = 33.6 \text{ mN/m}.$$

As to the condition (C), in view of more effectively preventing the enlargement of the ink droplet in the interval from the droplet deposition to the exposure, more preferably satisfied is a relation:

$$\gamma s < \gamma s(0) - 3 \times \{ \gamma s(0) - \gamma s(\text{saturation})^{max}\}/4$$

and particularly preferably satisfied is a relation:
$\gamma$ s $\leq \gamma$ s(saturation)$^{max}$.

The formulations of the ink and the undercoat liquid may be so selected as to obtain a desired surface tension, and these liquids preferably contain surfactants. As described above, in order to form an ink dot of a desired size on the recording medium, the undercoat liquid preferably contains at least a surfactant. The surfactant will be explained further below.

(Surfactant)

The surfactant to be employed in the present invention is a substance having a strong surface activating property to at least one solvent among hexane, cyclohexane, p-xylene, toluene, ethyl acetate, methyl ethyl ketone, butylcarbitol, cyclohexanone, triethylene glycol monobutyl ether, 1,2-hexanediol, propylene glycol monomethyl ether, isopropanol, methanol, water, isobornyl acrylate, 1,6-hexanediol diacrylate, and polyethylene glycol diacrylate, preferably a substance having a strong surface activating property to at least one solvent among hexane, toluene, propylene glycol monomethyl ether, isobornyl acrylate, 1,6-hexanediol diacrylate, and polyethylene glycol diacrylate, more preferably a substance having a strong surface activating property to at least one solvent among propylene glycol monomethyl ether, isobornyl acrylate, 1,6-hexanediol diacrylate, and polyethylene glycol diacrylate, and particularly preferably a substance having a strong surface activating property to at least one solvent among isobornyl acrylate, 1,6-hexanediol diacrylate, and polyethylene glycol diacrylate.

Whether a compound is a substance having a strong surface activating property to the above-listed solvents can be judged by the following procedure.

(Procedure)

A solvent is selected from those listed above, and a surface tension $\gamma_{solvent}(0)$ of such solvent is measured. The compound is added to the solvent for which $\gamma_{solvent}(0)$ is measured, with a concentration stepwise increased by 0.01% by mass, and a surface tension$\gamma_{solvent}$(saturation) of the solution is measured when the change in the surface tension becomes 0.01 mN/m or less for a stepwise concentration change of the compound. The compound can be judged as a substance having a strong surface activating property to the solvent, when $\gamma_{solvent}(0)$ and $\gamma_{solvent}$(saturation) satisfies a relation:

$$\gamma_{solvent}(0) - \gamma_{solvent}(0) > 1 \text{ (mN/m)}.$$

Specific examples of the surfactant to be contained in the undercoat liquid include anionic surfactants such as dialkylsulfosuccinate salts, alkylnaphthalenesulfonate salts and fatty acid salts; nonionic surfactants such as polyoxyethylene alkyl ethers, polyoxyethylene alkyl allyl ethers, acetylene glycols and polyoxyethylene-polyoxypropylene block copolymers; cationic surfactants such as alkylamine salts, and quaternary ammonium salts; and fluorinated surfactants. Other examples of the surfactant include those described in JP-A No. 62-173463 and JP-ANo. 62-183457.

- Recording medium -

In the ink jet recording method of the present invention, any of a permeable recording medium, a non-permeable recording medium and a slow-permeable recording medium may be employed as the recording medium. Among these, in view of more conspicuously exhibiting the effect of the present invention, a non-permeable recording medium or a slow-permeable recording medium is preferable. The permeable recording medium means a recording medium, in which, when a liquid droplet of 10 pL (pico-liter) is dropped thereon, permeation of all the liquid amount requires a time less than 100 ms. Also the non-permeable recording medium means a recording medium on which the liquid droplet does not substantially permeate. The expression "does not substantially permeate" means that the permeation rate of the liquid droplet after 1 minute is 5% or less. Also the slow-permeable recording medium means a recording medium, in which, when a liquid droplet of 10 pL is dropped thereon, permeation of all the liquid amount requires a time of 100 ms or longer.

Examples of the permeable recording medium include a plain paper, a porous paper and other recording media capable of liquid absorption.

Examples of the non-permeable or slow-permeable recording medium include an art paper, a synthetic resin, a rubber, a resin-coated paper, a glass, a metal, a porcelain and a wood. In the present invention, also employable is a recording material formed as a composite material by combining plurality of these material for the purpose of adding functionality.

As the synthetic resin, any synthetic resin may be employed, and examples thereof include polyesters such as polyethylene terephthalate and polybutadiene terephthalate; polyolefins such as polyvinyl chloride, polystyrene, polyethylene, polyurethane and polypropylene; acrylic resin, polycarbonate, acrylonitrile-butadiene-styrene copolymers, diacetate, triacetate, polyimide, cellophane and celluloid. In the case of utilizing the synthetic resin, the recording medium is not particularly restricted in the thickness or the shape, and may be any of a film shape, a card shape and a block shape and may be transparent or opaque.

The synthetic resin may advantageously be used in a film shape, employed in so-called soft packing, and

various non-absorbent plastics and films thereof may be employed. Examples of the plastic film include a PET film, an OPS film, an OPP film, a PNy film, a PVC film, a PE film, a TAC film and a PP film. As other plastics, polycarbonate, acrylic resin, ABS, polyacetal, PVA or a rubber may also be usable.

Examples of the resin-coated paper include a transparent polyester film, an opaque polyester film, an opaque polyolefin resin film and a paper substrate prepared by laminating a polyolefin resin on both surfaces of a paper. Particularly preferable is a paper substrate prepared by laminating a polyolefin resin on both surfaces of a paper.

The metal is not particularly restricted, and for example aluminum, iron, gold, silver, copper, nickel, titanium, chromium, molybdenum, silicon, lead, zinc, stainless steel and a composite material thereof may be employed advantageously.

Furthermore, a read-only optical disc such as a CD-ROM or a DVD-ROM, an add-on type optical disc such as a CD-R or a DVD-R, or a rewritable optical disc may also be used, and an ink jet recording is possible on a label surface thereof.

- Ink and undercoat liquid -

In the following, detailed explanation will be given on the ink and the undercoat liquid to be employed in the ink jet recording method of the present invention.

The ink is so constructed as to have a formulation for at least forming an image. The ink preferably contains at least one polymerizable or crosslinking material, and is constructed with a polymerization initiator, an oleophilic solvent, a colorant and other components according to the necessity.

The undercoat liquid contains at least a polymer and an oligomer.

Such a configuration enables satisfactory image recording when droplets of a single-colored ink or multi-colored inks are deposited on the undercoat liquid.

For example, even when drawing an image with an ink on the undercoat liquid and drawing a dot or a line with a same or different ink on the image, the dot or the line is prevented from spreading and may be drawn in the same manner as in a case where the image is not present. Also, when drawing a solid image with an ink on the undercoat liquid and drawing a grid image with a different ink on the image, an area where the grid is not drawn (an area surrounded by a grid) can be prevented from becoming smaller so that the grid image may be drawn in the same manner as in a case where the image is not present.

The undercoat liquid preferably has a formulation different from that of the ink. Also, the undercoat liquid preferably contains at least one polymerizable or crosslinking material, and may advantageously include a polymerization initiator, an oleophilic solvent, a colorant and other components according to necessity.

The polymerization initiator is preferably one capable of initiating a polymerization reaction or a crosslinking reaction via an actinic energy ray. Thus, the undercoat liquid provided on the recording medium can be semi-cured by irradiation with an actinic energy ray.

Also the undercoat liquid preferably contains a radical polymerization initiator. In this manner, the semi-curing reaction of the undercoat liquid can be executed at a high sensitivity and within a short time.

The ink in the present invention is preferably one containing a colorant. Also the undercoat liquid to be used in combination therewith has either one of a construction not containing the colorant or having a content of the colorant less than 1% by mass, and a construction containing a white pigment as the colorant. In the following, detailed description will be given on the components constituting these liquids.

(Polymer)

The undercoat liquid used in the present invention contains a polymer. The polymer contained in the undercoat liquid enables to provide a function, when an ink is discharged onto the undercoat liquid, of suppressing the spreading of the deposited ink, by the undercoat liquid in the semi-cured state.

The mechanism of such effect expressed by the polymer addition has not been clarified, but is estimated as follows.

As the polymer addition elevates the viscosity of the undercoat liquid, in the case that the deposited ink droplet has a small droplet size, the ink does not reach the lower part of the undercoat liquid but is maintained in an isolated dot shape. It is therefore estimated that, with an increase in the liquid droplet size, the ink flows out from the position on the undercoat liquid and is eventually connected to an adjacent ink droplet.

The polymer to be employed in the present invention may be any polymer, but it is preferably water-insoluble and oil-soluble, since it is used, in a preferred embodiment of the present invention, by dissolving in an oil-soluble monomer. As the water-insoluble polymer to be employed in the present invention, those described in WO88/00723 pamphlet and JP-A No. 63-44658 may be used advantageously. Among these, the polymer particularly preferably employed in the present invention includes a vinylic polymer and a polyester type polymer, in which the repeating unit

contains a -(C=O)- bond.

As the vinylic monomers advantageously employable for synthesizing the vinylic polymer, two or more monomers may be used as co-monomers according to various purposes (for example improvement of solubility). Also for the purpose of regulating the color developing property and the solubility, a monomer having an acid group may also be used as a co-monomer, within such an extent that the copolymer does not become water-soluble. Also a monomer having two or more ethylenic unsaturated components, capable of crosslinking, may also be employed. For such monomer, those described in JP-A No. 60-151636 may be employed advantageously.

In the case of utilizing a hydrophilic monomer (meaning to become water-soluble when formed into a single polymer) as a co-monomer among the vinylic monomers to be employed in the present invention, the proportion of the hydrophilic monomer in the copolymer is not particularly restricted so far as the copolymer does not become water-soluble, but is preferably 40 mol% or less, more preferably 20 mol% or less and particularly preferably 10 mol% or less. Also in the case that the hydrophilic co-monomer, to be copolymerized with the monomers in the present invention, includes an acid group, in consideration of the image storability, the proportion of the co-monomer having the acid group in the copolymer is normally 20 mol% or less, preferably 10 mol% or less and most preferable is a case where such co-monomer is absent. The monomer to be employed for synthesizing the polymer is preferably a methacrylate type, an acrylamide type or a methacrylamide type, and particularly preferably an acrylamide type or a methacrylamide type.

The polymer of methacrylate type, acrylamide type or methacrylamide type, employable in the present invention, has a number-average molecular weight preferably of from 5,000 to 150,000, preferably from 10,000 to 100,000. Also preferable is a case where the polymer employed in the present invention is constituted solely of α-methylstyrene, β -methylstyrene or a monomer having a substituent on the benzene ring thereof, and, in such case, the preferable range of the number-average molecular weight of the polymer is from 500 to 5,000.

Examples of the polyester type polymer employable in the present invention include a polyester type resin obtained by condensing a polyhydric alcohol and a polybasic acid, and a polyester type resin obtained by a ring-opening polymerization. As the polyhydric alcohol for preparing the former polyester, a glycol having a structure of $HO-R_1-OH$ ($R_1$ being a hydrocarbon chain, particularly an aliphatic hydrocarbon chain, having 2 to 12 carbon atoms) or a polyalkylglycol can be used effectively, and as the polybasic acid, a compound having a structure of $HOOC-R_2-COOH$ ($R_2$ representing a single bond or a hydrocarbon chain having 1 to 12 carbon atoms) is effective. As the polyhydric alcohol or the polybasic acid employable in the present invention, for example those described in JP-A No. 6-250331 may be employed advantageously.

Also as the monomer to be used for forming the latter polyester, lactones having a 4-to 9-membered ring are preferable, such as β-propiolactone, ε-caprolactone and dimethylpropiolactone. Also as in the case of vinylic polymer, the polyester type polymer may utilize polyhydric alcohols, polybasic acids or lactone monomers of two or more types according to various purposes.

In the case of polyester type polymer, as in the case of vinylic polymer, a hydrophilic monomer (meaning to become water-soluble when formed into a single polymer) may be used as a co-monomer, and the proportion of the hydrophilic monomer in the copolymer in such case is preferably same as that described for the vinylic polymer. In the present invention, the water-insoluble polymer means a polymer having a solubility, in 100g of distilled water (25°C), of 3 g or less, preferably 1 g or less.

A part of specific examples of the polymer to be employed in the present invention is shown below, but the present invention is not limited thereto. In the following specific examples, the copolymerization ratio of the copolymer is represented by a molar ratio.

Among the polymers employable in the present invention, an acrylamide type polymer is particularly preferable. The acrylamide type polymer is a polymer obtained by polymerizing a monomer of acrylamide or methacrylamide (hereinafter also collectively called "acrylamide"). The acrylamide type polymer, including an amide bond, is estimated to have a particularly strong effect of suppressing the spreading of the ink droplet by an interaction with the undercoat liquid. The acrylamide type polymer to be employed in the present invention may be a homopolymer or a copolymer. In case of a copolymer, it may be a copolymer of two or more acrylamide monomers or a copolymer of an acrylamide monomer and another monomer. The proportions of the monomers may be selected arbitrarily, but, in the case of a copolymer of an acrylamide monomer and another monomer, the number-average content of the acrylamide monomer is preferably 20% or more, more preferably 50% or more and particularly preferably 70% or more. Also particularly preferable is a polymer in which acrylamide monomer represents 100%. In view of ease of synthesis, a homopolymer is preferable. Acrylamide to be employed in the present invention may have a substituent, such as an alkyl group, an alkoxy group, an aryl group, an aryloxy group, a heterocyclic group, a heterocyclic oxy group, an acyl group, an acyloxy group or a halogen atom.

In the present invention, in view of the viscosity, solubility and suppression of spreading of deposited dot when employed as the undercoat liquid and of ease of coating, the acrylamide type polymer preferably has an average polymerization degree of the acrylamide unit (hereinafter also simply called "average polymerization degree") of from 30 to 1,000, preferably from from 40 to 800 and particularly preferably from 50 to 600.

The acrylamide type polymer preferably has a weight-average molecular weight, arbitrarily selectable from known compounds called acrylamide polymers, within a range of from 5,000 to 150,000 and more preferably from 10,000 to 100,000.

The acrylamide type polymer in the present invention is preferably an alkyl group-substituted acrylamide type polymer or an aromatic group-substituted acrylamide type polymer, and more preferably an alkyl group-substituted acrylamide type polymer. In the present invention, alkyl group includes all of linear ones, branched ones and cyclic ones. Examples of the alkyl group-substituted acrylamide type polymer include acrylamide type polymers substituted with an alkyl group having 1 to 20 carbon atoms (preferably from 1 to 12 carbon atoms and more preferably from 2 to 12 carbon atoms), preferably such as polyethylacrylamide, poly-t-butylacrylamide, polyactylacrylamide, poly-t-octylacrylamide, polylaurylacrylamide, polycyclohexylacrylamide, poly-t-butylmethacrylamide and polylaurylmethacrylamide.

A part of specific examples of the polymer to be employed in the present invention is shown below, but the present invention is not limited thereto. In the following specific examples, the copolymerization ratio of the copolymer is represented by a molar ratio.

P-1) polymethacrylate
P-2) polyethyl methacrylate
P-3) polyisopropyl methacrylate
P-4) polymethyl chloroacrylate
P-5) poly(2-tert-butylphenyl acrylate)
P-6) poly(4-tert-butylphenyl acrylate)
P-7) ethyl methacrylate-n-butyl acrylate copolymer (70:30)
P-8) methyl methacrylate-acrylonitrile copolymer (65:35)
P-9) methyl methacrylate-styrene copolymer (90:10)
P-10) N-tert-butyl methacrylamide-methyl methacrylate-acrylic acid copolymer (60:30:10)
P-11) methyl methacrylate-styrene-vinylsulfonamide copolymer (70:20:10)
P-12) methyl methacrylate-cyclohexyl methacrylate copolymer (50:50)
P-13) methyl methacrylate-acrylic acid copolymer (95:5)
P-14) methyl methacrylate-n-butyl methacrylate copolymer (65:35)
P-15) methyl methacrylate-N-vinyl-2-pyrrolidone copolymer (90:10)
P-16) poly(N-sec-butylacrylamide)
P-17) poly(N-tert-butylacrylamide)
P-18) polycyclohexyl methacrylate-methyl methacrylate copolymer (60:40)
P-19) n-butyl methacrylate-methyl methacrylate-acrylamide copolymer (20:70:10)
P-20) diacetonacrylamide-methyl methacrylate copolymer (20:80)
P-21) N-tert-butylacrylamide-methyl methacrylate copolymer (40:60)
P-22) poly(N-n-butylacrylamide)
P-23) tert-butyl methacrylate-N-tert-butylacrylamide copolymer (50:50)
P-24) tert-butyl methacrylate-methyl methacrylate copolymer (70:30)
P-25) poly(N-tert-butylmethacrylamide)
P-26) N-tert-butylacrylamide-methyl methacrylate copolymer (60:40)
P-27) methyl methacrylate-acrylonitrile copolymer (70:30)
P-28) methyl methacrylate-styrene copolymer (75:25)
P-29) methyl methacrylate-hexyl methacrylate copolymer (70:30)
P-30) poly(4-biphenyl acrylate)
P-31) poly(2-chlorophenyl acrylate)
P-32) poly(4-chlorophenyl acrylate)
P-33) poly(pentachlorophenyl acrylate)
P-34) poly(4-ethoxycarbonylphenyl acrylate)
P-35) poly(4-methoxycarbonylphenyl acrylate)
P-36) poly(4-cyanophenyl acrylate)
P-37) poly(4-methoxyphenyl acrylate)
P-38) poly(3,5-dimethyladamantyl acrylate)
P-39) poly(3-dimethylaminophenyl acrylate)
P-40) poly(2-naphthyl acrylate)
P-41) poly(phenyl acrylate)
P-42) poly(N,N-dibutylacrylamide)
P-43) poly(isohexylacrylamide)
P-44) poly(isooctylacrylamide)
P-45) poly(N-methyl-N-phenylacrylamide)

P-46) poly(adamantyl methacrylate)
P-47) poly(sec-butyl methacrylate)
P-48) N-tert-butylacrylamide-acrylic acid copolymer (97:3)
P-49) poly(2-chloroethyl methacrylate)
P-50) poly(2-cyanoethyl methacrylate)
P-51) poly(2-cyanomethylphenyl methacrylate)
P-52) poly(4-cyanophenyl methacrylate)
P-53) poly(cyclohexyl methacrylate)
P-54) poly(2-hydroxypropyl methacrylate)
P-55) poly(4-methoxycarbonylphenyl methacrylate)
P-56) poly(3,5-dimethyladamantyl methacrylate)
P-57) poly(phenyl methacrylate)
P-58) poly(4-butoxycarbonylphenylmethacrylamide)
P-59) poly(4-carbonylphenylmethacrylamide)
P-60) poly(4-ethooxycarbonylphenylmethacrylamide)
P-61) poly(4-methooxycarbonylphenylmethacrylamide)
P-62) poly(cyclohexyl chloroacrylate)
P-63) poly(ethyl chloroacrylate)
P-64) poly(isobutyl chloroacrylate)
P-65) poly(isopropyl chloroacrylate)
P-66) poly(phenylacrylamide)
P-67) poly(cyclohexylacrylamide)
P-68) poly(phenylmethacrylamide)
P-69) poly(cyclohexylmethacrylamide)
P-70) poly(butylene adipate)
P-71) polystyrene
P-72) poly(α-methylstyrene)
P-73) poly(β-methylstyrene)
P-74) poly(4-chlorostyrene)
P-75) poly(4-methoxystyrene)
P-76) poly(4-methylstyrene)
P-77) poly(2,4-dimethylstyrene)
P-78) poly(4-isopropylstyrene)
P-79) poly(4-t-butylstyrene)
P-80) poly(3,4-dichlorostyrene)
P-81) poly(N-ethylacrylamide)
P-82) poly(N-n-octylacrylamide)
P-83) poly(N-t-octylacrylamide)
P-84) poly(N-laurylacrylamide)
P-85) poly(N-methoxyethylacrylamide)
P-86) poly(N-laurylacrylamide)
P-87) poly(t-butyl acrylate)
P-88) poly(t-butyl methacrylate)

The polymer may be employed singly or in a combination of plural types.

A content of the polymer in the undercoat liquid, with respect to the total mass thereof, is preferably from 1 to 50% by mass, more preferably from 2 to 40% by mass and particularly preferably from 5 to 30% by mass.

The polymer content within such range is effective, while suppressing the spreading so as not to deteriorate the dot shape or not to cause a distortion or a blotting in the image, in securing the spreading of the deposited ink droplet and the linked state between the dots. It also provides an advantage of maintaining the undercoat liquid at a low viscosity, thereby enabling a coating with a higher precision by an inexpensive roll coater or the like.

(Oligomer)

The undercoat liquid used in the present invention contains an oligomer. When the ink is discharged onto the undercoat liquid, presence of the oligomer therein reduces the function of the semi-cured undercoat liquid that suppresses the spreading of the deposited ink droplet, thereby promoting the spreading of the ink to a certain extent. Thus, the dot formed by the deposited droplet spreads within a certain extent, but not broadly, and the dot shape can be maintained

even when the dots are connected with each other. For example, when the dot density is low, the linking between the dots prevents formation of a white space, thereby providing a high density image even in detailed parts of the image.

The oligomer is a polymer generally formed by bonding monomers of a finite number (generally from 5 to 100), and may be arbitrarily selected from known compounds called oligomers, but, in the present invention, it is preferable to select a polymer having a weight-average molecular weight of from 400 to 10,000 (more preferably from 500 to 5,000).

The oligomer used in the present invention may be any oligomer, and examples thereof include olefin type (such as ethylene oligomer, propylene oligomer and butene Oligomer), vinyl type (such as styrene oligomer, vinyl alcohol oligomer, vinylpyrrolidone oligomer, acrylate oligomer, methacrylate oligomer), diene type (such as butadiene oligomer, chloroprene rubber and pentadiene oligomer), ring-opening polymerization type (such as di-, tri- and tetra-ethylene glycol, polyethylene glycol, and polyethylimine), polycondensation type (such as oligoester acrylate, polyamide oligomer and polyisocyanate oligomer), and addition-condensation oligomers (such as phenolic resin, amino resin, xylene resin and ketone resin). Among these, oligoester acrylate is preferable, among which an urethane acryl type, a polyester acrylate type and an epoxy acrylate type are more preferable, and the urethane acrylate type is particularly preferable.

Examples of the urethane acrylate type include aliphatic urethane acrylate, and aromatic urethane acrylate. For more details, reference may be made to *Oligomer Handbook* (Edited by Junji Yoshikawa, published by Nikkan Kogyo Shimbun Co.).

Examples of commercial product, in the urethane acrylate type, include R1204, R1211, R1213, R1217, R1218, R1301, R1302, R1303, R1304, R1306, R1308, R1901 and R1150 manufactured by Dai-ichi Kogyo Seiyaku Co., Ltd.; Ebecryl series (for example Ebecryl 230, 270, 4858, 8402, 8804, 8807, 8803, 9260, 1290, 1290K, 5129, 4842, 8210, 210, 4827, 6700, 4450 and 220) manufactured by Daicel-Cytec Co., Ltd.; NK Oligo U-4HA, U-6HA, U-15HA, U-108A and U200A manufactured by Shin-Nakamura Chemical Co., Ltd.; and Aronix M-1100, M-1200, M-1210, M-1310, M-1600 and M-1960 manufactured by Toagosei Co., Ltd. Examples of the polyester acrylate type include Ebecryl series (for example Ebecryl 1770, IRR467, 81, 84, 83, 80, 675, 800, 810, 812, 1657, 1810, IRR302, 450, 670, 830, 870, 1830, 1870, 2870, IRR267, 813, IRR483 and 811) manufactured by Daicel-Cytec Co., Ltd.; and Aronix M-6100, M-6200, M-6250, M-6500, M-7100,M-8030, M-8060, M-8100, M-8530, M-8560, and M-9050 manufactured by Toagosei Co., Ltd. Also examples of the epoxy acrylate type include Ebecryl series (for example Ebecryl 600, 860, 2958, 3411, 3600, 3605, 3700, 3701, 3703, 3702, 3708, RDX63182 and 6040) manufactured by Daicel-Cytec Co., Ltd.

Among the oligomers, the urethane acrylate oligomer is preferable in view of providing a dot linking property.

The oligomer may be employed singly, or in a combination of plural types.

A content of the oligomer in the undercoat liquid, with respect to the total mass thereof, is preferably from 5 to 50% by mass, and more preferably from 10 to 40% by mass. An oligomer content within such a range is effective for providing the spreading of the deposited ink droplet and the linked state between the dots, while suppressing the spreading so as not to deteriorate the dot shape or cause distortion or blotting in the image.

The undercoat liquid used in the present invention, due to the presence of the polymer and the oligomer described above, is capable of providing images of excellent uniformity on various recording media, and is capable of clearly suppressing the occurrence of ink blotting and unevenness in the line width and in the color. Also, the undercoat liquid of the present invention is capable of maintaining a uniform dot diameter and a uniform line width without spreading, even when where a single-color ink or multi-color inks are deposited in an overlapping manner, and capable of reproducing an image with an extremely high density even in detailed parts, regardless of the form of the image. These effects are conspicuous effects that cannot be anticipated from the effects that result when either the polymer or the oligomer is used alone in the undercoat liquid.

The undercoat liquid used in the present invention contains the polymer and the oligomer described above, and the preferable combination thereof is a combination of methacrylate type, acrylamide type or methacrylamide type and an oligomer, more preferably a combination of methacrylate type, acrylamide type or methacrylamide type and an urethane acrylate oligomer, and particularly preferably a combination of an acrylamide type polymer and an urethane acrylate oligomer.

The respective contents of the polymer and the oligomer contained in the undercoat liquid used in the invention are as described above, and a total content of the polymer and the oligomer, with respect to the total mass of the undercoat liquid, is preferably from 1 to 50% by mass, more preferably from 2 to 40% by mass, and particularly preferably from 5 to 30% by mass. The total content of the polymer and the oligomer within such range is preferable in exhibiting the effects of the invention and in securing a sufficient curing property.

The mass ratio of the polymer and the oligomer is 1:5-5:1. This mass ratio provides the effects of the invention, particularly small dot reproducibility.

(Polymerizable or crosslinking material)

The polymerizable or crosslinking material employed in the present invention has a function of inducing a polymerization or crosslinking reaction by initiating species such as a radical, generated for example from the polymerization initiator to be described later, thereby curing the composition containing the material.

As the polymerizable or crosslinking material, a polymerizable or crosslinking material capable of inducing a known polymerization or crosslinking reaction such as a radical polymerization reaction or a dimerization reaction can be employed. Examples of such material include an addition-polymerizable compound having at least an ethylenic unsaturated double bond, a high molecular weight compound having a maleimide group in a side chain, and a high molecular weight compound having, in a side chain, a cinnamyl group, a cinnamylidene group or a calcon group, that containing a photodimerizable unsaturated double bond adjacent to an aromatic nucleus.
Among these, more preferable is an addition-polymerizable compound having at least an ethylenic unsaturated double bond, and it is particularly preferably selected from compounds (monofunctional or polyfunctional compounds) having at least a terminal ethylenic unsaturated bond and more preferably two or more thereof.
More specifically, it can be suitably selected from those widely known in the industrial field relating to the present invention, including those having a chemical structure of a monomer, a prepolymer (namely a dimer, a trimer and an oligomer), a mixture thereof and a copolymer thereof.
The polymerizable or crosslinking material may be employed singly or in a combination of two or more types.

The polymerizable or crosslinking material in the present invention is preferably a known radical-polymerizable monomer, capable of inducing a polymerization reaction by initiating species, generated a radical initiator.
Examples of the radical polymerizable monomer include (meth)acrylates, (meth)acrylamides, aromatic vinylic compounds, vinyl ethers and compounds having an internal double bond (such as maleic acid). In the expression, "(meth)acrylate" indicates "acrylate" and/or "methacrylate", and "(meth)acryl" indicates "acryl" and/or "methacryl".

Examples of (meth)acrylates include those shown below.
Specific examples of monofunctional (meth)acrylate include hexyl (meth)acrylate, 2-ethylhexyl (meth)acrylate, tert-octyl (meth)acrylate, isoamyl (meth)acrylate, decyl (meth)acrylate, isodecyl (meth)acrylate, stearyl (meth)acrylate, isostearyl (meth)acrylate, cyclohexyl (meth)acrylate, 4-n-butylcyclohexyl (meth)acrylate, bornyl (meth)acrylate, isobornyl (meth)acrylate, benzyl (meth)acrylate, 2-ethylhexyl diglycol (meth)acrylate, butoxyethyl (meth)acrylate, 2-chloroethyl (meth)acrylate, 4-bromobutyl (meth)acrylate, cyanoethyl (meth)acrylate, benzyl (metha)acrylate, butoxymethyl (meth)acrylate, 3-methoxybutyl (meth)acrylate, alkoxymethyl (meth)acrylate, alkoxyethyl (meth)acrylate, 2-(2-methoxyethoxy)ethyl (meth)acrylate, 2-(2-butoxyethoxy)ethyl (meth)acrylate, 2,2,2-trifluoroethyl (meth)acrylate, 1 H, H,2H,2H-perfluorodecyl (meth)acrylate, 4-butylphenyl (meth)acrylate, phenyl (meth)acrylate, 2,3,4,5-tetramethylphenyl (meth)acrylate, 4-chlorophenyl (meth)acrylate, phenoxymethyl (meth)acrylate, phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, hydroxyalkyl (meth)acrylate, 2-hydroxyethyl (meth)acrylate, 3-hydroxypropyl (meth)acrylate,

2-hydroxypropyl (meth)acrylate, 2-hydroxybutyl (meth)acrylate, 4-hydroxybutyl (meth)acrylate, dimethylaminoethyl (meth)acrylate, diethylaminoethyl (meth)acrylate, dimethylaminopropyl (meth)acrylate, diethylaminopropyl (meth)acrylate, trimethoxysilylpropyl (meth)acrylate, trimethylsilylpropyl (meth)acrylate, polyethylene oxide monomethyl ether (meth)acrylate, oligoethylene oxide monomethyl ether (meth)acrylate, polyethylene oxide (meth)acrylate, oligoethylene oxide (meth)acrylate, oligoethylene oxide monoalkyl ether (meth)acrylate, polyethylene oxide monoalkyl ether (meth)acrylate, dipropylene glycol (meth)acrylate, polypropylene oxide monoalkyl ether (meth)acrylate, oligopropylene oxide monoalkyl ether (meth)acrylate, 2-methacryloyloxyethylsuccinic acid, 2-methyacryloyloxyhexahydrophthalic acid, 2-methacryloyloxyethyl-2-hydroxypropyl phthalate, butoxydiethylene glycol (meth)acrylate, trifluoroethyl (meth)acrylate, perfluorooctylethyl (meth)acrylate, 2-hydroxy-3-phenoxypropyl (meth)acrylate, EO-denatured phenol (meth)acrylate, EO-denatured cresol (meth)acrylate, EO-denatured nonylphenol (meth)acrylate, PO-denatureed nonylphenol (meth)acrylate, and EO-denatured 2-ethylhexyl (meth)acrylate.

Specific examples of bifunctional (meth)acrylate include 1,6-hexanediol di(meth)acrylate, 1,10-decanediol di(meth)acrylate, neopentyl glycol di(meth)acrylate, 2,4-dimethyl-1,5-pentanediol di(meth)acrylate, butylethylpropanediol (meth)acrylate, ethoxylated cyclohexanemethanol di(meth)acrylate, polyethylene glycol di(meth)acrylate, oligoethylene glycol di(meth)acrylate, ethylene glycol di(meth)acrylate, 2-ethyl-2-butyl-butanediol di(meth)acrylate, neopentyl glycol hydroxypivalate di(meth)acrylate, EO-denatured bisphenol-A di(meth)acrylate, bisphenol-F polyethoxy di(meth)acrylate, polypropylene glycol di(meth)acrylate, oligopropylene glycol di(meth)acrylate, 1,4-butanediol di(meth)acrylate, 2-ethyl-2-butylpropanediol di(meth)acrylate, 1,9-nonane di(meth)acrylate, propoxylated ethoxylated bisphenol-A di(meth)acrylate, and tricyclodecane di(meth)acrylate.

Specific examples of trifunctional (meth)acrylate include trimethylolpropane tri(meth)acrylate, trimethylolethane tri(meth)acrylate, alylene oxide-denatured tri(meth)acrylate of trimethylolpropane, pentaerythritol tri(meth)acrylate, dipentaerythritol tri(meth)acrylate, trimethylolpropane tris((meth)acryloyloxypropyl) ether, alkylene-denatured tri(meth)acrylate of isocyanuric acid, dipentaerythritol propionate tri(meth)acrylate, tris((meth)acryloyloxyethyl) isocyanurate, hydroxypivalyl aldehyde-denatured dimethylolpropane tri(meth)acrylate, sorbitol tri(meth)acrylate, propoxylated trimethylolpropane tri(meth)acrylate, and ethoxylated glycerin triacrylate.

Specific examples of tetrafunctional (meth)acrylate include pentaerythritol tetra(meth)acrylate, sorbitol tetra(meth)acrylate, ditrimethylolpropane tetra(meth)acrylate, dipentaerythritol propionate tetra(meth)acrylate, and ethoxylated pentaerythritol tetra(meth)acrylate.

Specific examples of pentafunctional (meth)acrylate include sorbitol penta(meth)acrylate, and dipentaerythritol penta(meth)acrylate.

Specific examples of hexafunctional (meth)acrylate include dipentaerythritol hexa(meth)acrylate, sorbitol hexa(meth)acrylate, alkylene oxide-denatured hexa(meth)acrylate of phosphazene, and captolactone-denatured dipenaerythritol hexa(meth)acrylate.

Examples of the (meth)acrylamides include (meth)acrylamide, N-meethyl(meth)acrylamide, N-ethyl(meth)acrylamide, N-propyl(meth)acrylamide, N-n-butyl(meth)acrylamide, N-t-butyl(meth)acrylamide, N-butoxymethyl(meth)acrylamide, N-isopropyl(meth)acrylamide, N-methylol(meth)acrylamide, N,N-dimethyl(meth)acrylamide, N,N-diethyl(meth)acrylamide, and (meth)acryloylmorpholine.

Specific examples of the aromatic vinyl compound include styrene, methylstyrene, dimethylstyrene, trimethylstyrene, ethylstyrene, isopropylstyrene, chloromethylstyrene, methoxystyrene, acetoxystyrene, chlorostyrene, dichlorostyrene, bromostyrene, vinylbenzoic acid methyl ester, 3-methylstyrene, 4-methylstyrene, 3-ethylstyrene, 4-ethylstyrene, 3-propylstyrene, 4-propylstyrene, 3-butylstyrene, 4-butylstyrene, 3-hexylstyrene, 4-hexylstyrene, 3-octylstyrene, 4-octylstyrene, 3-(2-ethylhexyl)styrene, 4-(2-ethylhexyl)styrene, allylstyrene, isopropenylstyrene, butenylstyrene, octenylstyrene, 4-t-butoxycarbonylstyrene, 4-methoxystyrene, and 4-t-butoxystyrene.

Specific examples of the vinyl ethers, in the case of a monofunctional vinyl ether, include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexylmethyl vinyl ether, 4-methylcyclohexylmethyl vinyl ether, penzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, and phenoxypolyethylene glycol vinyl ether.

Also examples of polyfunctional vinyl ether include divinyl ethers such as ethylene glycol divinyl ether, diethylene glycol divinyl ether, polyethylene glycol divinyl ether, propylene glycol divinyl ether, butylene glycol divinyl ether, hexanediol divinyl ether, bisphenol-A alkylene oxide divinyl ether, and bispenol-F alkylene oxide divinyl ether; and polyfunctional vinyl ethers such as trimethylolethane trivinyl ether, trimethylolpropane trivinyl ether, ditrimethylolpropane tetravinyl ether, glycerin trivinyl ether, pentaerythritol tetravinyl ether, dipentaerythritol pentavinyl ether, dipentaerythritol hexavinyl ether, ethylene oxide-added trimethylolpropane trivinyl ether, propylene oxide-added trimethylolpropane trivinyl ether, ethylene oxide-added ditrimethylolpropane tetravinyl ether, propylene oxide-added ditrimethylolpropane tetravinyl ether, ethylene oxide-added pentaerythritol tetravinyl ether, propylene oxide-added pentaerythritol tetravinyl ether, ethylene oxide-added dipentaerythritol hexavinyl ether, and propylene oxide-added dipentaerythritol hexavinyl ether.

As the vinyl ether compound, a di- or tri-vinyl ether compound is preferable in view of curing property, adhesion to the recording medium, and surface hardness of the formed image, and a divinyl ether compound is particularly preferable.

In addition to the foregoing, the radical polymerizable monomer in the present invention may be a vinyl ester [such as vinyl acetate, vinyl propionate, or vinyl versatate], an allyl ester [such as allyl acetate], a halogen-containing monomer [such as vinylidene chloride or vinyl chloride], a cyanated vinyl [such as (meth)acrylonitrile], or an olefin [such as ethylene or propylene].

Among the foregoing, as the radical polymerizable monomer, (meth)acrylates and (meth)acrylamides are preferable in view of the curing speed, and tetra- or higher-functional (meth)acrylates are particularly preferable in view of the curing speed. Also in view of the viscosity of the ink composition, a combination of a polyfunctional (meth)acrylate and a mono- or bi-functional (meth)acrylate or (meth)acrylamide is preferable.

A content of the radical polymerizable monomer, with respect to the total solid (mass) of each liquid droplet, is preferably within a range of from 50 to 99.6% by mass, more preferably from 70 to 99.0% by mass, and further preferably from 80 to 99.0% by mass.

Also a content in the liquid droplet, with respect to the total mass of each liquid droplet, is preferably within a range of from 20 to 98% by mass, more preferably from 40 to 95% by mass, and particularly preferably from 50 to 90% by mass.

(Polymerization initiator)

The ink and the undercoat liquid can be constructed with at least a polymerization initiator, which is preferably employed at least in the undercoat liquid. The polymerization initiator is a compound generating initiating species such as a radical by the energy application by an actinic light and/or heat, to initiate and promote a polymerization or crosslinking reaction of the above-described polymerizable or crosslinking material, thereby curing the same.

In a mode utilizing polymerization, a polymerization initiator inducing a radical polymerization is preferably

contained, and it is particularly preferably a photopolymerization initiator.
The photopolymerization initiator is a compound capable of undergoing a chemical change by an action of light and an interaction with an excited electron state of a sensitizing dye to generate at least either one of a radical, an acid and a base, and is preferably a photoradical generator in view of a fact that the polymerization can be initiated by a simple method of exposure to light.

The photopolymerization initiator in the present invention may be suitably selected from those having a sensitivity to an irradiating actinic light, such as an ultraviolet light of 200 to 400 nm, a far ultraviolet light, g-line, h-line, i-line, a KrF excimer laser light, an ArF excimer laser light, an electron beam, an X-ray, a molecular beam or an ion beam.

As the specific photopolymerization initiator, compounds already known to those skilled in the art may be employed without any particularly restriction. Many such compounds are described for example in Bruce M. Monroe et al., Chemical Revue, 93, 435(1993), R. S. Davidson, Journal of Photochemistry and biology A: Chemistry, 73. 81 (1993), J. P. Faussier "Phtoinitiaed Polymerization - Theory and Application": Repra Review Vol. 9, Report Repra Technology (1998), and M. Tsunooka et al., Prog. Polym. Sci., 21, 1(1996).
Also usable are compounds generating an oxidative or reductive bond cleavage through an interaction with an electron excited state of a sensitizing dye, described for example in F. D. Saeva, Topics in Current Chemistry, 156, 59(1990), G. G. Maslak, Topic in Current Chemistry, 168, 1(1993), H. B. Shuster et al., JACS, 112, 6329(1990), and I. D. F. Eason et al., JACS, 102, 3298(1980).

Examples of the preferable photopolymerization initiator include (a) an aromatic ketone, (b) an aromatic onium compound, (c) an organic peroxide, (d) a hexaarylbiimidazole compound, (e) a keto-oxime ester compound, (f) a borate compound, (g) an azinium compound, (h) a metallocene compound, (i) an active ester compound, and (j) a compound having a carbon-halogen bond.

Preferable examples of the aromatic ketone (a) include a compound having a benzophenone skeleton or a thioxanthone skeleton as described in J. P. Fouassier and J. F. Rabek, "Radiation Curing in Polymer Science and Technology" (1993), p. 77 - 117. More preferable examples of the aromatic ketone (a) include an α-thiobenzophenone compound described in JP-B No. 47-6416, a benzoin ether compound described in JP-B No. 47-3981, an α -substituted benzoin compound described in JP-B No. 47-22326, a benzoin derivative described in JP-B No. 47-23664, an aroylphosphonic acid ester described in JP-A No. 57-30704, dialkyoxybenzophenone described in JP-B No. 60-26483, benzoin ethers described in JP-B No. 60-26403 and JP-A No. 62-81345, α-aminobenzophenones described in JP-B No. 1-34242, USP 4,318,791 and EP 0284561A1, p-di(dimethylaminobenzoyl)-benzene described in JP-ANo. 2-211452, thio-substituted aromatic ketone described in JP-ANo. 61-194062, acylphosphine sulfide described in JP-B No. 2-9597, acylphosphine described in JP-B No. 2-9596, thioxanthones described in JP-B No. 63-61950, and coumarins describes in JP-B No. 59-42864.

The aromatic onium compound (b) includes aromatic onium salts of elements of groups V, VI and VII of the periodic table, specifically N, P, As, Sb, Bi, O, S, Se, Te or I. For example, advantageously employable examples include iodonium salts described EP 104143, USP 4,837,124, JP-A No. 2-150848 and JP-A No. 2-96514; sulfonium salts described in EP 370693, EP 233567, EP 297443, EP 297442, EP 279210, EP 422570, USP 3,902,144, USP 4,933,377, USP 4,760,013, USP 4,734,444 and USP 2,833,827; diazonium salts (such as benzenediazonium that may have a substituent); diazonium salt resins (such as formaldehyde resin of diazodiphenylamine); N-alkoxypyridinium salts (such as those described in USP 4,743,528, JP-A No. 63-138345, JP-A No. 63-142345, JP-A No. 63-142346 and JP-B No. 46-42363 and specifically such as 1-methoxy-4-phenylpyridinium tetrafluoroborate); and compounds described in JP-B No. 52-147277, JP-B No. 52-14278 and JP-B No. 52-14279. These compounds generate a radical or an acid as active species.

The "organic peroxide" (c) includes most of the organic compounds having at least an oxygen-oxygen bond within the molecule, among which preferred are peroxyesters such as 3,3',4,4'-tetrakis(t-butylperoxycarbonyl)benzophenone, 3,3',4,4'-tetrakis(t-amylperoxycarbonyl)benzophenone, 3,3',4,4'-tetrakis(t-hexylperoxycarbonyl)benzophenone, 3,3',4,4'-tetrakis(t-octylperoxycarbonyl)benzophenone, 3,3',4,4'-tetrakis(cumylperoxycarbonyl)benzophenone, 3,3',4,4'-tetrakis(p-isopropylperoxycarbonyl)benzophenone, and di-t-butyl peroxyisophthalate.

Examples of the hexaarylbiimidazole (d) include lophine dimers described in JP-B No. 45-37377 and JP-B No. 44-86516, such as 2,2'-bis(o-chlorophenyl)-4,4',5,5'-tetraphenylbiimidazole, 2,2'-bis(o-bromophenyl)-4,4',5,5'-tetraphenylbiimidazole, 2,2'-bis(o,p-dichlorophenyl)-4,4',5,5'-tetraphenylbiimidazole, 2,2'-bis(o-chlorophenyl)-4,4',5,5'-tetrakis(m-methoxyphenyl)- biimidazole, 2,2'-bis(o,o'-dichlorophenyl)-4,4',5,5'-tetraphenylbiimidazole, 2,2'-bis(o-nitrophenyl)-4,4',5,5'-tetraphenylbiimidazole, 2,2'-bis(o-methylphenyl)-4,4',5,5'-tetraphenylbiimidazole, and 2,2'-bis(o-trifluorophenyl)-4,4',5,5'-tetraphenylbiimidazole.

Examples of the keto-oxime ester (e) include 3-benzoyloxyiminobutan-2-one, 3-acetoxyiminobutan-2-one, 3-propionyloxyiminobutan-2-one, 2-acetoxyiminopentan-3-one, 2-acetoxyimino-1-phenylpropan-1-one, 2-benzoyloxyimino-1-phenylpropan-1-one, 3-p-toluenesulfonyloxyiminobutan-2-one, and 2-ethoxycarbonyloxyimino-1-phenylpropan-1-one.

Examples of the borate compound (f) include compounds described in USP 3,567,453, USP 4,343,891, EP

109,772 and EP 109,773.

Examples of the azinium compound (g) include compounds having an N-O bond, described in JP-A No. 63-138345, JP-A No. 63-142345, JP-A No. 63-142346, JP-A No. 63-143537, and JP-B No. 46-42363.

Examples of the metallocene compound (h) include titanocene compounds described in JP-A No. 59-152396, JP-A No. 61-151197, JP-A No. 63-41484, JP-A No. 2-249 and JP-A No. 2-4705, and iron-allene complexes described in JP-A No. 1-304453 and JP-A No. 1-152109.

Specific examples of the titanocene compound include di-cyclopentadienyl-Ti dichloride, di-cyclopentadienyl-Ti-bis-phenyl, di-cyclopentadienyl-Ti-bis-2,3,4,5,6-pentafluorophen-1-yl, di-cyclopentadienyl-Ti-bis-2,3,5,6-tetrafluorophen-1-yl, di-cyclopentadienyl-Ti-bis-2,4,6-trifluorophen-1-yl, di-cyclopentadienyl-Ti-bis-2,6-difluorophen-1-yl, di-cyclopentadienyl-Ti-bis-2,4-difluorophen-1-yl, di-methylcyclopentadienyl-Ti-bis-2,3,4,5,6-pentafluorophen-1-yl, di-methylcyclopentadienyl-Ti-bis-2,3,5,6-tetrafluorophen-1-yl, di-methylcyclopentadienyl-Ti-bis-2,4-difluorophen-1-yl, bis(cyclopentadienyl)-bis(2,6-difluoro-3-(pyr-1-yl)phneyl) titanium, bis(cyclopentadienyl)-bis[2,6-difluoro-3-(methylsulfonamide)phenyl] titanium, and bis(cyclopentadienyl)-bis[2,6-difluoro-3-(N-butylbialloylamino) phenyl] titanium.

Examples of the active ester compound (i) include nitrobenzyl ester compounds described in EP 0290750, EP 046083, EP 156153, EP 271851 and EP 0388343, USP 3,901,710, USP 4,181,531, JP-ANo. 60-198538 and JP-ANo. 53-133022; iminosulfonate compounds described in EP 0199672, EP 84151, EP 199672, EP 044115, EP 0101122, USP 4,618,564, USP 4,371,605, USP 4,431,774, JP-A No. 64-18143, JP-A No. 2-245756 and JP-A No. 4-365048; and compounds described in JP-B No. 62-6223, JP-B No. 63-14340 and JP-A No. 59-174831.

Preferable examples of the compound having carbon-halogen bond (j) include compounds described in Wakabayashi et al., Bull. Chem. Soc. Japan, 42, 2924(1969), compounds described in BP 1388492, compounds described in JP-A No. 53-133428, and compounds described in GP 3337024.

Examples also include a compound described in F. C. Schaefer et al., J. Org. Chem., 29, 1527(1964), a compound described in JP-ANo. 62-58241, and a compound described in JP-A No. 5-281728, Further examples include a compound described in GP 2641100, a compound described in GP 3333450, compounds described in GP 3021590 and compounds described in GP 3021599.

Examples of the photopolymerization initiator in the present invention are shown below, but these examples are not exhaustive.

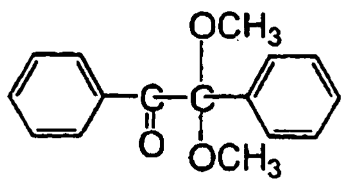

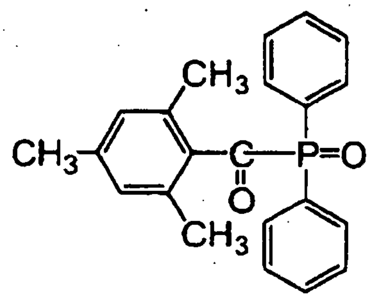

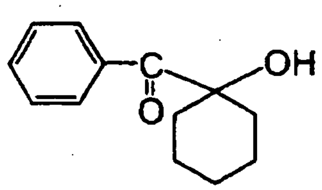

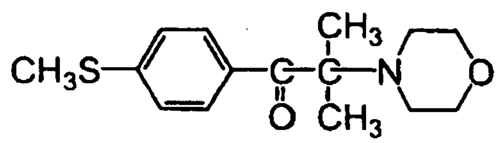

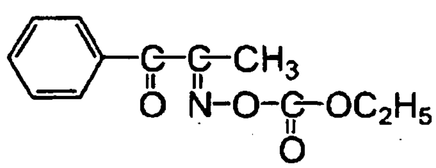

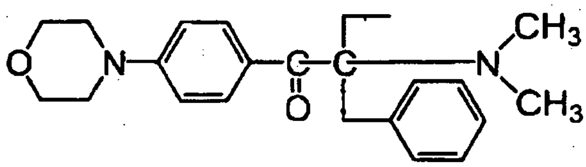

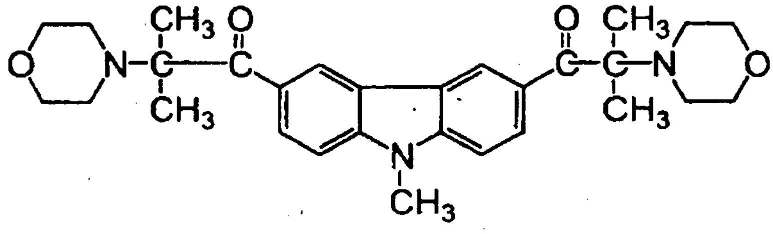

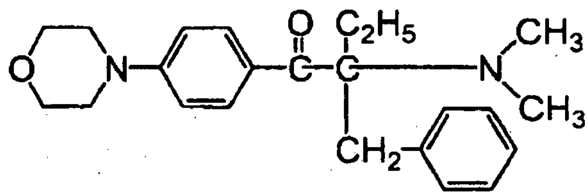

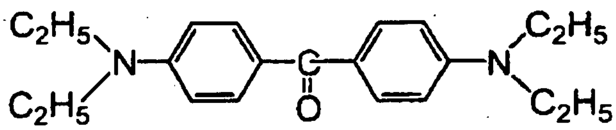

[kagaku 3]

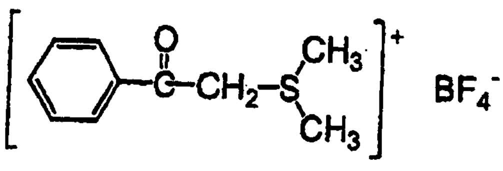

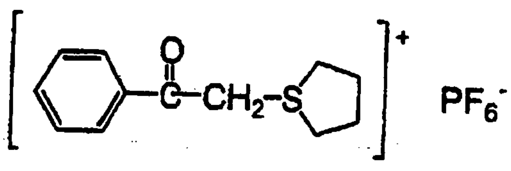

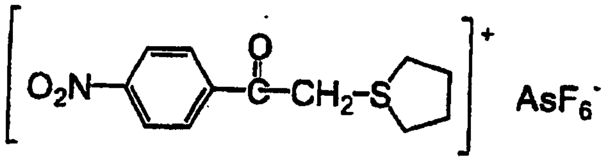

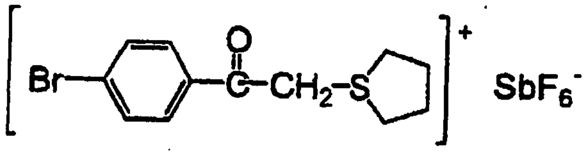

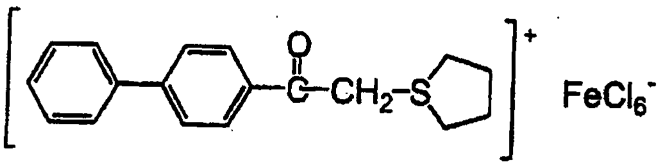

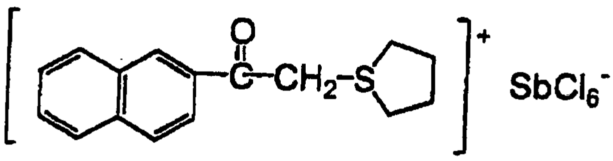

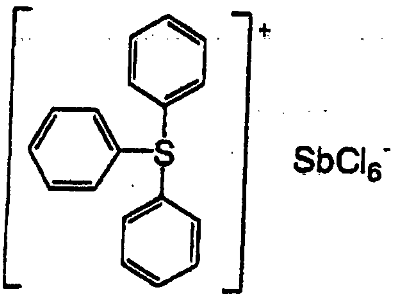

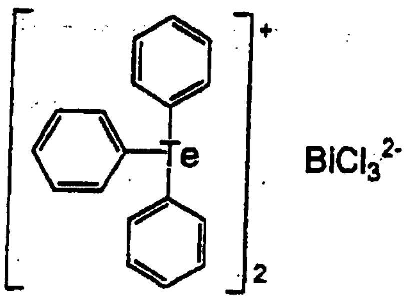

[kagaku 4]

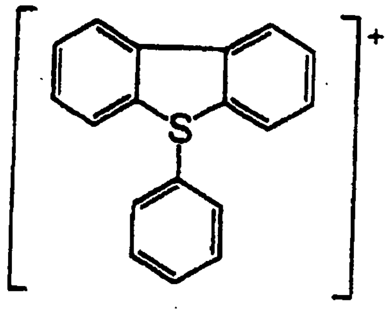

$BF_4^-$

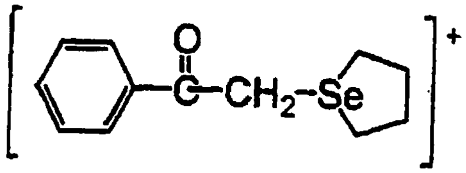

$PF_6^-$

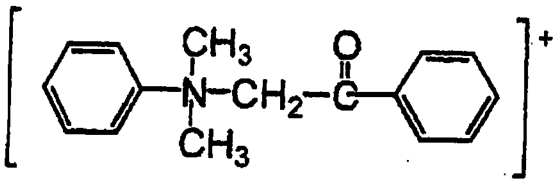

$BF_4^-$

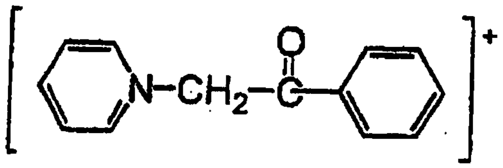

$SbF_6^-$

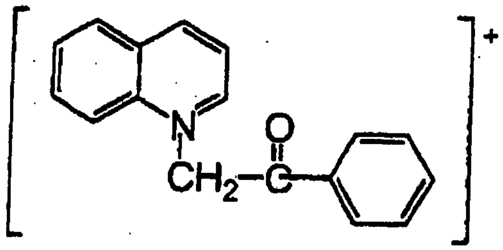

$BF_4^-$

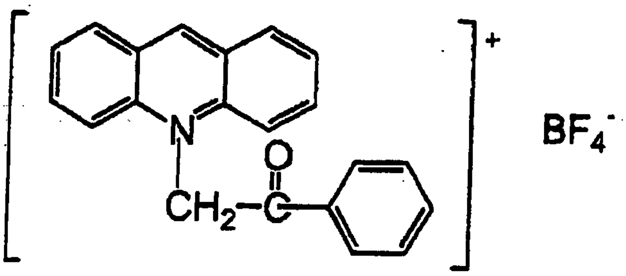

[kagaku 5]

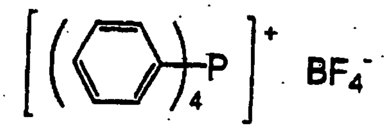

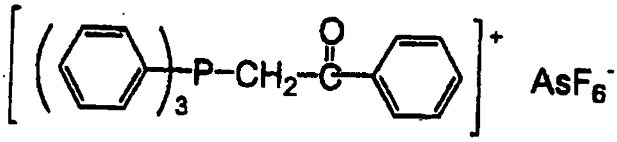

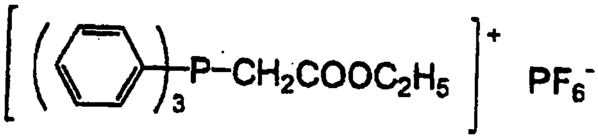

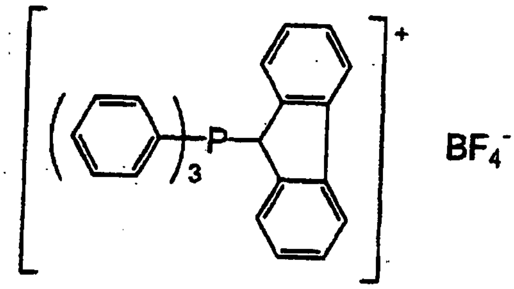

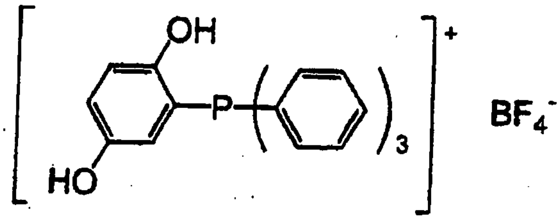

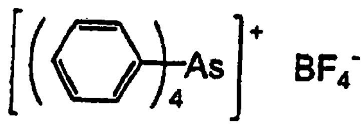

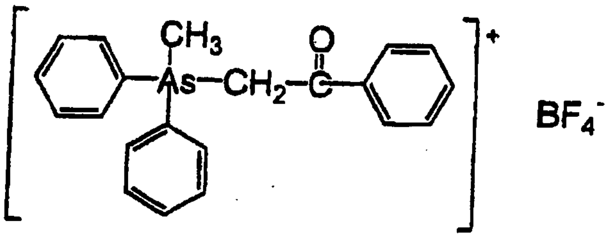

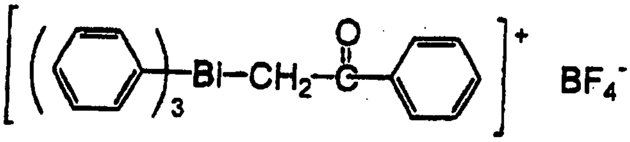

[kagaku 6]

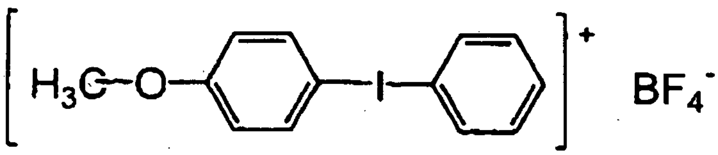

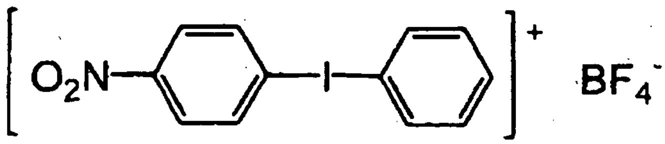

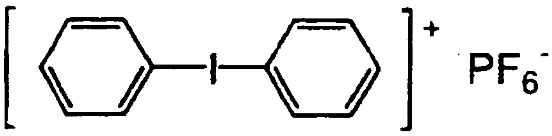

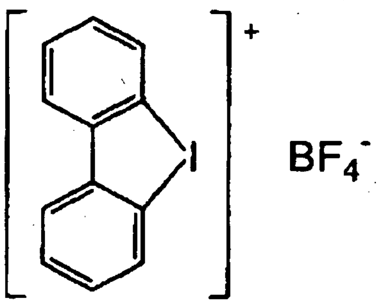

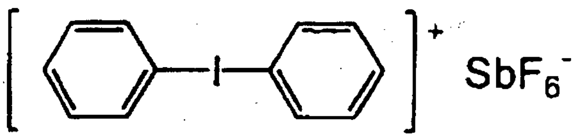

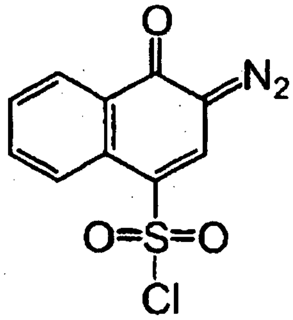

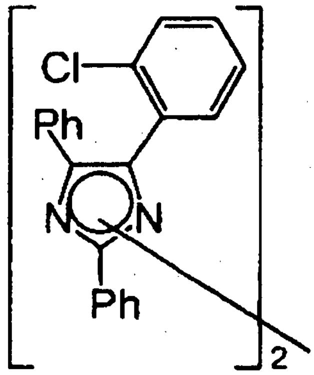

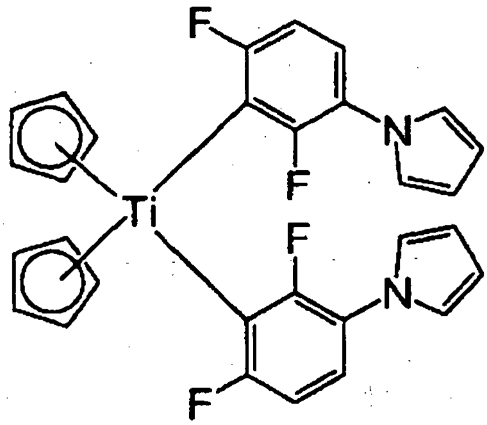

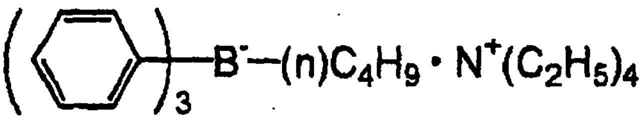

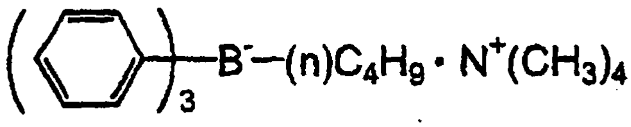

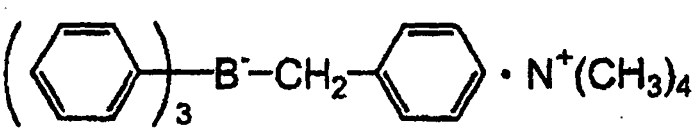

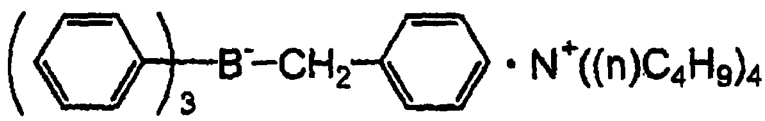

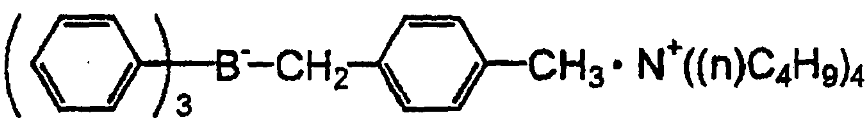

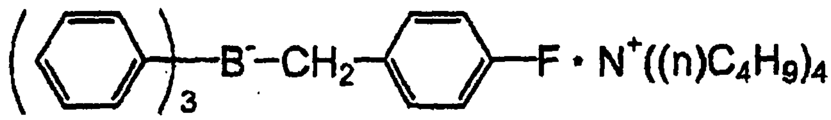

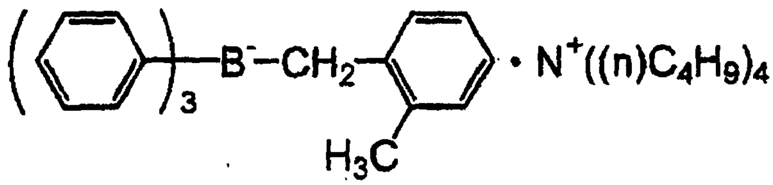

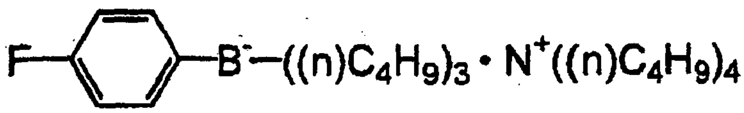

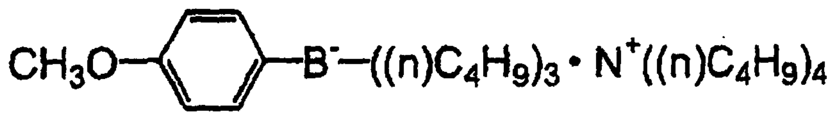

[kagaku 8]

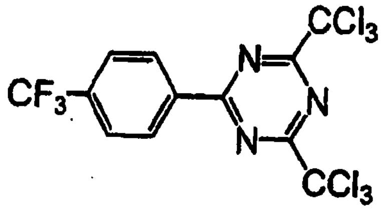

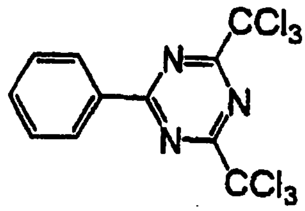

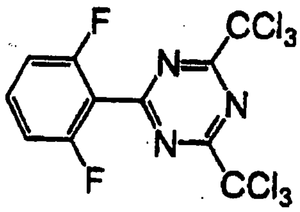

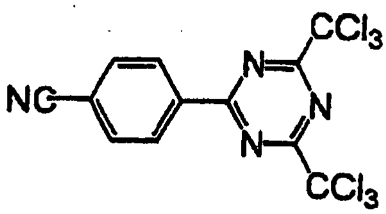

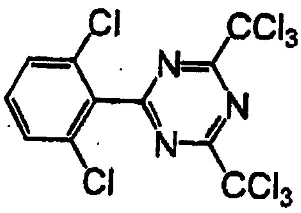

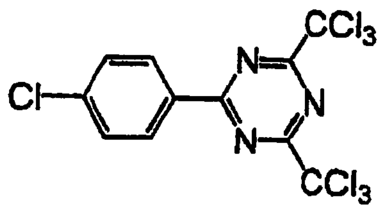

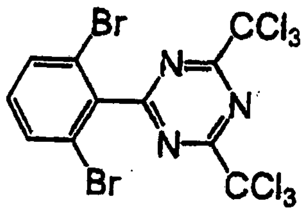

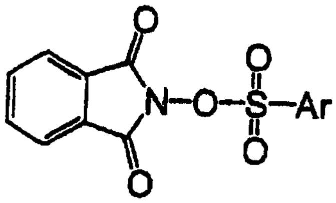

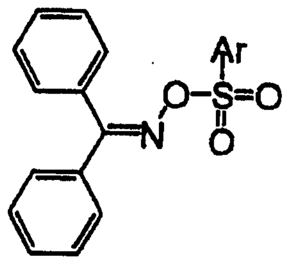

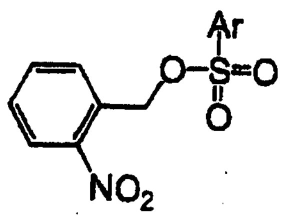

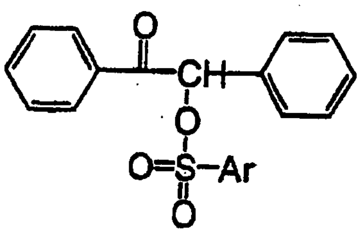

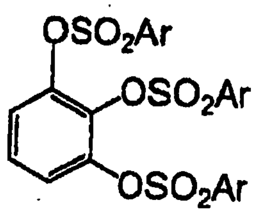

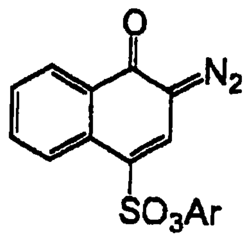

[kagaku 9]

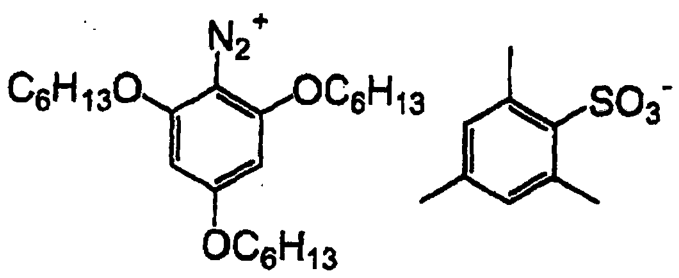

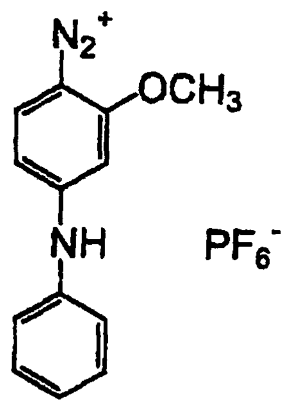

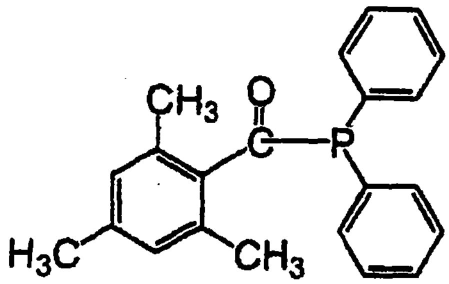

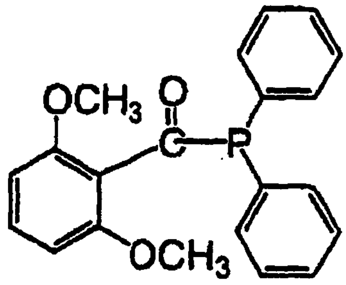

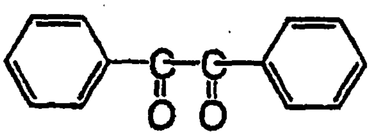

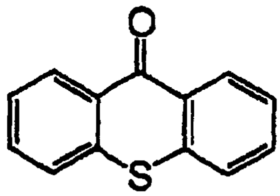

The polymerization initiator preferably has a better sensitivity, but, in view of storage stability, a polymerization initiator not causing a thermal decomposition up to 80°C is preferably selected.

The polymerization initiator may be employed singly or in a combination of two or more types. Also for the purpose of sensitivity improvement, a known sensitizer may be used in combination, within an extent not inhibiting the effects of the present invention.

A content of the polymerization initiator in the undercoat liquid, in view of the stability in time, the curing property and the curing speed, is preferably within a range of from 0.5 to 20% by mass with respect to the polymerizable material in the undercoat liquid, more preferably from 1 to 15% by mass and particularly preferably from 3 to 10% by mass. The content within such range enables to suppress occurrence of a deposition or a separation in time and deterioration in the performance of the ink after curing, such as a strength or a friction resistance.

The polymerization initiator may be contained in the ink as well as contained in the undercoat liquid, and, in such case, it may be contained within such a suitably selected range as to maintain the storage stability of the ink at a desired level. In such case, the content in the ink droplet, with respect to the polymerizable or crosslinking compound in the ink, is preferably from 0.5 to 20% by mass, more preferably from 1 to 15% by mass.

(Sensitizing dye)

In the present invention, a sensitizing dye may be added for the purpose of improving the sensitivity of the photopolymerization initiator. Examples of the preferable sensitizing dye include those belonging to the following compound groups and having an absorption wavelength within a region of from 350 to 450 nm.

The compound groups include: polynucleic aromatic compounds (such as pyrene, perylene and triphenylene); xanthenes (such as fluorescein, eosin, erythrosine, Rhodamine B and Rose Bengal); cyanines (such as thiacarbocyanine, and oxacarbocyanine); merocyanines (such as merocyanine, and carbonylmerocyanine); thiazines (such as thionine, methylene blue, and toluidine blue); acridines (such as acridine orange, chloroflavin and acriflavin); anthraquinnes (such as anthraquinone); squaliums (such as squalium); and coumarines (such as 7-diethylamino-4-methylcoumarine).

Examples of the more preferably sensitizing dye include compounds represented by the following general formulae (IX) to (XIII):

[kagaku 10]

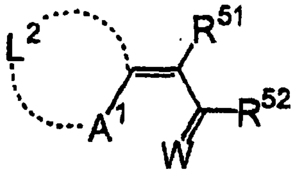

(IX)

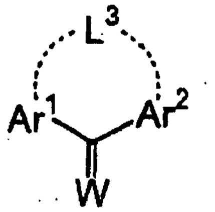

(X)

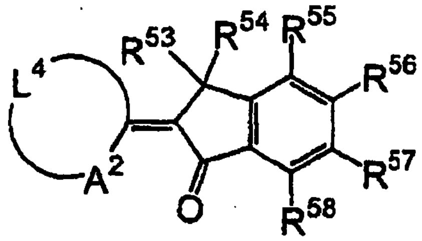

(XI)

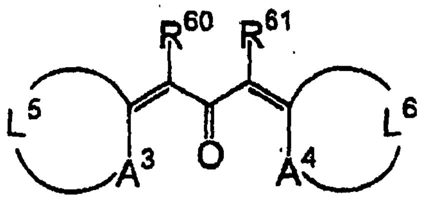

(XII)

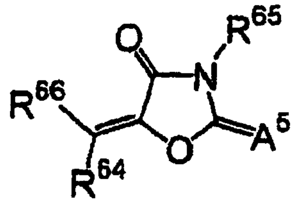

(XIII)

In the formula (IX), $A^1$ represents a sulfur atom or $-NR^{50}$ -; $R^{50}$ represents an alkyl group or an aryl group; $L^2$ represents a metal atom group constituting a basic nucleus of the dye in cooperation with adjacent $A^1$ and an adjacent carbon atom; $R^{51}$ and $R^{52}$ each independently represent a hydrogen atom or a monovalent non-metal atom group, with a proviso that $R^{51}$ and $R^{52}$ may be bonded with each other to form an acidic nucleus of the dye; and W represents an oxygen atom or a sulfur atom.

In the formula (X), $Ar^1$ and $Ar^2$ each independently represents an aryl group and are connected across a bond $-L^3$-; $L^3$ represents -O- or -S-; and W has the same meaning as in the general formula (IX).

In the formula (XI), $A^2$ represents a sulfur atom or $-NR^{59}$-; $L^4$ represents a metal atom group constituting a basic nucleus of the dye in cooperation with adjacent $A^2$ and a carbon atom; $R^{53}$, $R^{54}$, $R^{55}$ , $R^{56}$ , $R^{57}$ and $R^{58}$ each independently represent a monovalent non-metal atom group; and $R^{59}$ represents an alkyl group or an aryl group.

In the formula (XII), $A^3$ and $A^4$ each independently represents -S-, $NR^{62}$- or $NR^{63}$-; $R^{62}$ and $R^{63}$ each independently represents a substituted or non-substituted alkyl group or a substituted or non-substituted aryl group; $L^5$ and $L^6$ each independently represents a non-metal atom group constituting a basic nucleus of the dye in cooperation with adjacent $A^3$ or $A^4$ and an adjacent carbon atom; and $R^{60}$ and $R^{61}$ each independently represents a hydrogen atom or a monovalent non-metal atom group with the proviso that they may be bonded with each other to form an aliphatic or aromatic ring.

In the formula (XIII), $R^{66}$ represents an aromatic ring or a heterocycle that may have a substituent; $A^5$ represents an oxygen atom, a sulfur atom or $-NR^{67}$ -; $R^{64}$, $R^{65}$ and $R^{67}$ each independently represent a monovalent non-metal atom group, with the proviso that $R^{67}$ and $R^{64}$, or $R^{65}$ and $R^{67}$ may be bonded with each other to form an aliphatic or an aromatic ring.

Preferable specific examples of the compounds represented by the general formulae (IX) to (XIII) include following example compounds (A-1) to (A-20).

[kagaku 11]

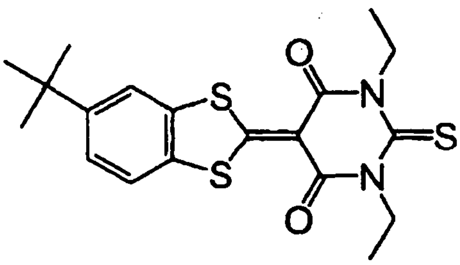

(A-1)

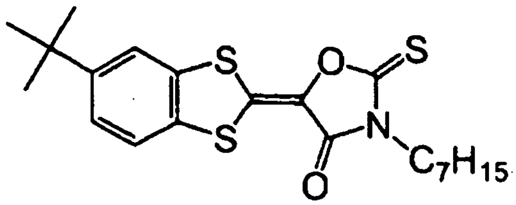

(A-2)

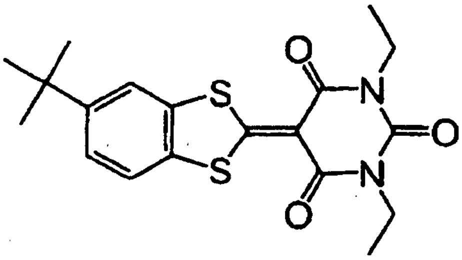

(A-3)

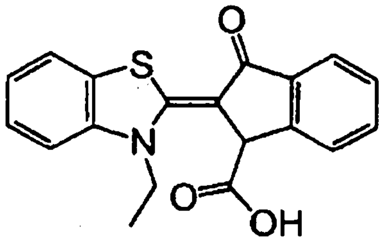

(A-4)

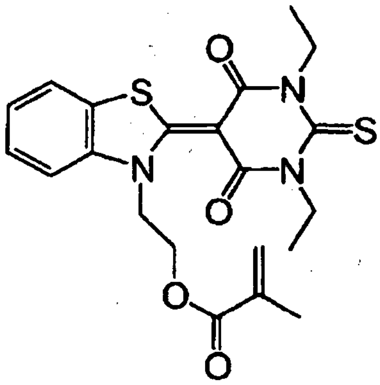

(A-5)

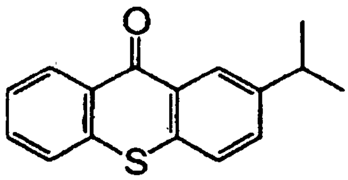

(A-6)

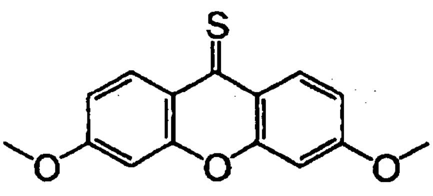

(A-7)

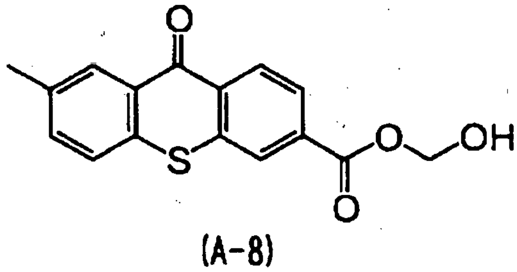

(A-8)

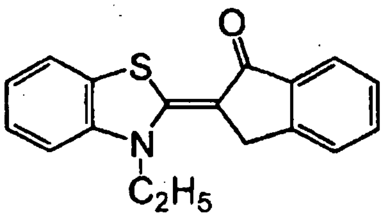

(A-9)

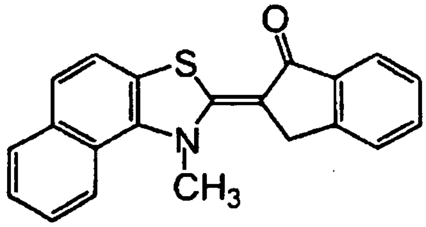

(A-10)

[kagaku 12]

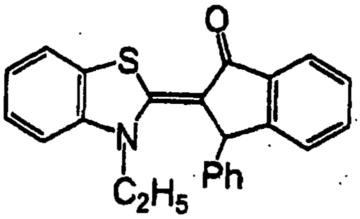

(A-11)

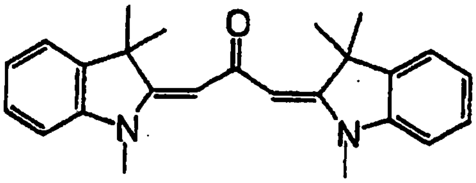

(A-12)

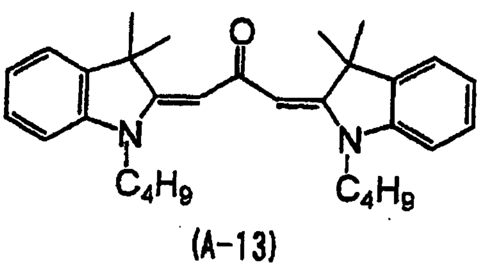

(A-13)

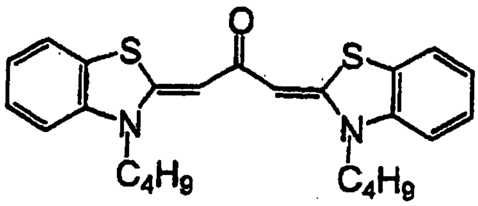

(A-14)

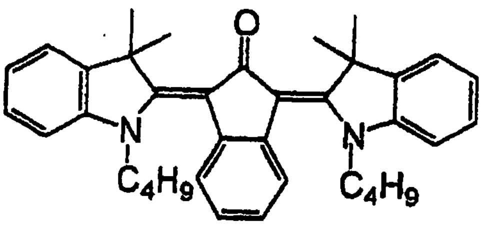

(A-15)

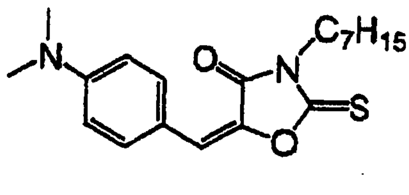

(A-16)

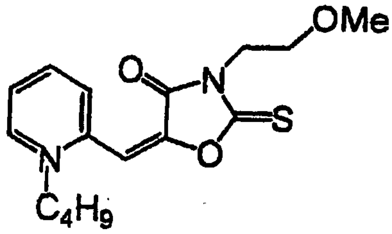

(A-17)

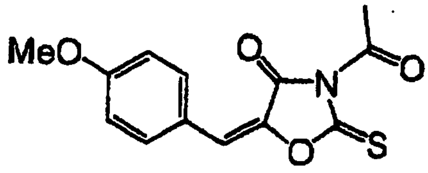

(A-18)

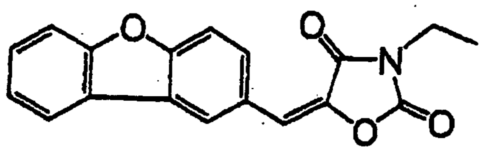

(A-19)

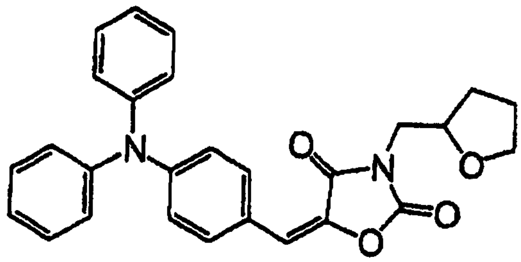

(A-20)

(Co-sensitizer)

Further, a known compound, having a function of further improving the sensitivity or suppressing the inhibition of polymerization by oxygen, may be added as a co-sensitizer.
Examples of the co-sensitizer include amines, such as described in M. R. Sanders et al., Journal of Polymer Society, vol. 10, 3173(1972), JP-B No. 44-20189m JP-A No. 51-82102, JP-A No. 52-134692, JP-A No. 59-138205, JP-A No. 60-84305, JP-A No. 62-18537, JP-A No. 64-33104 and Research Disclosure No. 33825, and specifically include triethanolamine, p-dimethylaminobenzoic acid ethyl ester, p-formyldimethylaniline, and p-methylthiodimethylaniline.

Other examples include thiols and sulfides, including thiol compounds described in JP-A No. 53-702, JP-B No. 55-500806, and JP-A No. 5-142772, and disulfide compounds described in JP-A No. 56-75643, and specifically include 2-mercaptobenzothiazole, 2-mercaptobenzoxazole, 2-mercaptobenzimidazole, 2-mercapto-4-(3H)-quinazoline and β -mercaptonaphthalene.
Still other examples include amino acid compounds (such as N-phenylglycine), organometallic compounds described in JP-B No. 48-42965 (such as tributyl tin acetate), hydrogen donating substances described in JP-B No. 55-34414, sulfur compounds described in JP-A No. 6-308727 (such as trithiane), phosphorus compounds described in JP-A No. 6-250387 (such as diethyl phosphite), and Si-H and Ge-H compounds described in JP-A No. 8-65779.

(Colorant)

The ink and the undercoat liquid can be advantageously constructed with at least a colorant, that is preferably used at least in the ink. The colorant may be contained, in addition to the ink, in the undercoat liquid or in another liquid.

The colorant is not particularly restricted, and may be suitably selected from water-soluble dyes, oil-soluble dyes and pigments already known. In particular, the ink and the undercoat liquid used in the present invention are preferably constructed, in view of the effects of the present invention, as a system of a water-insoluble organic solvent, and an oil-soluble dye or pigment that can be uniformly dispersed or dissolved in a water-insoluble medium, is preferably employed.

The colorant has a content, in the ink, preferably of from 1 to 30% by mass, more preferably from 1.5 to 25% by mass, and particularly preferably from 2 to 15% by mass. Also in the case that the undercoat liquid contains a white pigment, the content thereof in the undercoat liquid is preferably from 2 to 45% by mass, more preferably from 4 to 35% by mass.

In the following, pigments, that are suitable for the present invention, will be explained principally.

(Pigment)

In the present invention, a mode of employing a pigment is preferable. The pigment may be any of an organic pigment and an inorganic pigment, and a preferred example of a black pigment is a carbon black pigment In general employed are a black-colored pigment and pigments of three primary colors of cyan, magenta and yellow, but pigments of other colors such as red, green, blue, brown and white, metal luster pigments such as of gold color and silver color, and colorless or pale-colored extender pigments may also be utilized according to the purpose.

The organic pigments are not restricted in color hue, and examples thereof include pigments of perylene type, perynone type, quinacridone type, quinacridonequinone type, anthraquinone type, anthanthrone type, benzimidazolone type, disazo condensation type, disazo type, azo type, indanthrone type, phthalocyanine type, triarylcarbonium type, dioxazine type, aminoanthraquinone type, diketopyrrolopyrrole type, thioindigo type, isoindoline type, isoindolinone type, pyranthrone type, and isoviolanthrone type, and a mixture thereof.

More specifically, examples include a perylene type pigment such as C.I. Pigment Red 190 (C.I. No. 71140), C.I. Pigment Red 224 (C.I. No. 71127), or C.I. Pigment Violet 29 (C.I. No. 71129); a perynone type pigment such as C.I. Pigment Orange 43 (C.I. No. 71105), or C.I. Pigment Red 194 (C.I. No. 71100); a quinacridone type pigment such as C.I. Pigment Violet 19 (C.I. No. 73900), C.I. Pigment Violet 42, C.I. Pigment Red 122 (C.I. No. 73915), C.I. Pigment Red 192, C.I. Pigment Red 202 (C.I. No. 73907), C.I. Pigment Red 207 (C.I. No. 73900, 73906), or C.I. Pigment Red 209 (C.I. No. 73905); a quinacridonequinone type pigment such as C.I. Pigment Red 206 (C.I. No. 73900/73920), C.I. Pigment Orange 48 (C.I. No. 73900/73920), or C.I. Pigment Orange 49 (C.I. No. 73900/73920); an anthraquinone type pigment such as C.I. Pigment Yellow 147 (C.I. No. 60645); an anthanthrone type pigment such as C.I. Pigment Red 168 (C.I. No. 59300), a benzimidazolone type pigment such as C.I. Pigment Brown 25 (C.I. No. 12510), C.I. Pigment Violet 32 (C.I. No. 12517), C.I. Pigment Yellow 180 (C.I. No. 21290), C.I. Pigment Yellow 181 (C.I. No. 11777), C.I. Pigment Orange 62 (C.I. No. 11775), or C.I. Pigment Red 185 (C.I. No. 12516); a disazo condensed type pigment such as C.I. Pigment Yellow 93 (C.I. No. 20710), C.I. Pigment Yellow 94 (C.I. No. 20038), C.I. Pigment Yellow 95 (C.I. No. 20034), C.I. Pigment Yellow 128 (C.I. No. 20037), C.I. Pigment Yellow 166 (C.I. No. 20035), C.I. Pigment Orange 34 (C.I. No. 21115), C.I. Pigment Orange 13 (C.I. No. 21110), C.I. Pigment Orange 31 (C.I. No. 20050), C.I. Pigment Red 144 (C.I. No. 20735), C.I. Pigment Red 166 (C.I. No. 20730), C.I. Pigment Red 220 (C.I. No. 20055), C.I. Pigment Red 221 (C.I. No. 20065), C.I. Pigment Red 242 (C.I. No. 20067), C.I. Pigment Red 248, C.I. Pigment Red 262, or C.I. Pigment Brown 23 (C.I. No. 20060);

a disazo type pigment such as C.I. Pigment Yellow 13 (C.I. No. 21100), C.I. Pigment Yellow 83 (C.I. No. 21108), or C.I. Pigment Yellow 188 (C.I. No. 21094); an azo type pigment such as C.I. Pigment Red 187 (C.I. No. 12486), C.I. Pigment Red 170 (C.I. No. 12475), C.I. Pigment Yellow 74 (C.I. No. 11714), C.I. Pigment Yellow 150 (C.I. No. 48545), C.I. Pigment Red 48 (C.I. No. 15865), C.I. Pigment Red 53 (C.I. No. 15585), C.I. Pigment Orange 64 (C.I. No. 12760), C.I. Pigment Red 247 (C.I. No. 15915); an indanthrone type pigment such as C.I. Pigment Blue 60 (C.I. No. 69800); a phthalocyanine type pigment such as C.I. Pigment Green 7 (C.I. No. 74260), C.I. Pigment Green 36 (C.I. No. 74265), C.I. Pigment Green 37 (C.I. No. 74255), C.I. Pigment Blue 16 (C.I. No. 74100), C.I. Pigment Blue 75 (C.I. No. 74160:2), or C.I. Pigment Blue 15 (C.I. No. 74160); a triarylcarbonium type pigment such as C.I. Pigment Blue 56 (C.I. No. 42800), or C.I. Pigment Blue 61 (C.I. No. 42765:1); a dioxazine type pigment such as C.I. Pigment Violet 23 (C.I. No. 51319), or C.I. Pigment Violet 37 (C.I. No. 51345); an aminoanthraquinone type pigment such as C.I. Pigment Red 177 (C.I. No. 65300); a diketopyrrolopyrrol type pigment such as C.I. Pigment Red 254 (C.I. No. 56110), C.I. Pigment Red 255 (C.I. No. 561050), C.I. Pigment Red 264, C.I. Pigment Red 272 (C.I. No. 561150), C.I. Pigment Orange 71, or C.I. Pigment Orange 73; a thioindigo type pigment such as C.I. Pigment Red 88 (C.I. No. 73312); an isoindoline type pigment such as C.I. Pigment Yellow 139 (C.I. No. 56298), or C.I. Pigment Orange 66 (C.I. No. 48210); an isoindolinone type pigment such as C.I. Pigment Yellow 109 (C.I. No. 56284), or C.I. Pigment Orange 61 (C.I. No. 11295); a pyranthrone type pigment such as C.I. Pigment Orange 40 (C.I. No. 59700), or C.I. Pigment Red 216 (C.I. No. 59710); and an isoviolanthrone type pigment such as C.I. Pigment Violet 31 (C.I. No. 60010).

In the present invention, two or more types of organic pigments or a solid solution of organic pigments may also be used.

Also a particle, having a particle of silica, alumina, a resin or the like as a core material and bearing a dye or a pigment adhered to the surface, or an insoluble lake substance, a colored emulsion or a colored latex of a dye, may also be used as a pigment. Furthermore, a resin-coated pigment may also be used. This is called a microencapsulated pigment, and is commercially available from Dai-Nippon Ink and Chemicals, Ltd., Tokyo Ink Mfg. Co., Ltd. and the like.

The pigment particles contained in a liquid has a volume-average particle diameter preferably within a range of from 10 to 250 nm, more preferably from 50 to 200 nm, in view of the balance of the optical density and the storage stability. The volume-average particle diameter of the pigment particles can be measured by a particle size distribution measuring apparatus such as LB-500 (manufactured by Horiba, Ltd.).

The colorant may used not only singly, but also as a mixture of two or more types. Also different colorants or a same colorant may be used in the deposited liquid droplets and the liquid.

(Other components)

In addition to the components described above, known additives and the like may be used according to the purpose.

(Storage stabilizer)

In the ink and the undercoat liquid (preferably ink) used in the present invention, a storage stabilizer may be added for the purpose of suppressing an undesirable polymerization during the storage. The storage stabilizer is preferably used in co-existence with the polymerizable or crosslinking material, and is preferably one soluble in the liquid droplet or the liquid containing the same, or in other co-existent components.

Examples of the storage stabilizer include a quaternary ammonium salt, a hydroxylamine, a cyclic amide, a nitrile, a substituted urea, a heterocyclic compound, an organic acid, hydroquinone, a hydroquinone monoether, an orgaphic phosphine, and a copper compound, more specifically benzyltrimethylammonium chloride, diethylhydroxylamine, benzothiazole, 4-amino-2,2,6,6-tetramethylpiperidine, citric acid, hydroquinone monomethyl ether, hydroquinone monobutyl ether and copper naphthenate.

An amount of the storage stabilizer is preferably regulated suitably according to the activity and polymerizing property of the polymerization initiator, the polymerizing property of the crosslinking material and the type of the storage stabilizer, but, in view of the balance of the storage stability and the curing property, the content is preferably from 0.005 to 1% by mass, as calculated in the solid in the liquid, more preferably from 0.01 to 0.5% by mass and further preferably from 0.01 to 0.2% by mass.

(Conductive salt)

A conductive salt is a solid compound used for increase the electrical conductivity. In the present invention, it is preferably not used substantially because of concern for deposition during storage, but the conductive salt may be added in an appropriate amount, in the case that a satisfactory solubility is obtained by increasing the solubility of the conductive salt or by selecting a conductive salt having a high solubility in the liquid component.
Examples of the conductive salt include potassium thiocyanate, lithium nitrate, ammonium thiocyanate, and dimethylamine hydrochlorate.

(Solvent)

In the present invention, a known solvent may be used according to the necessity. The solvent may be used for the purposes of improving polarity, viscosity and surface tension of the liquid (ink), solubility and dispersibility of colorant, regulation of electrical conductivity and regulation of printing performance.
Since the solvent preferably is a water-insoluble liquid and does not contain an aqueous solvent in recording a quick-drying high-quality image having a uniform line width, a high-boiling organic solvent is employed desirably.
The high-boiling organic solvent in the present invention preferably has a satisfactory mutual solubility with the constituent material, particularly with the monomer.
Specifically, tripropylene glycol monomethyl ether, dipropylene glycol monomethyl ether, propylene glycol monomethyl ether, ethylene glycol monobutyl ether, diethylene glycol monobutyl ether, triethylene glycol monobutyl ether, ethylene glycol monobenzyl ether, or diethylene glycol monobenzyl ether is preferable.

The known solvents include low-boiling organic solvents which are organic solvents having a boiling point of 100°C or lower, but such low-boiling organic solvent is desirably not used as it may affect the curing property and in consideration of the environmental pollution. When such solvent is used, it is preferable to use one of high safety, and the solvent of high safety means a solvent having a high controlled concentration (index indicated by the standard for evaluating the work environment), and is preferably that of 100 ppm or higher, more preferably 200 ppm or higher. Examples thereof include alcohols, ketones, esters, ethers, and hydrocarbons, and more specifically methanol, 2-butanol, acetone, methyl ethyl ketone, ethyl acetate and tetrahydrofuran.

The solvent may be used not only singly but also in a combination of plural kinds, but in the case of using water and/or low-boiling organic solvent, the amount of use thereof in each liquid is preferably from 0 to 20% by mass, more preferably from 0 to 10% by mass and particularly preferably is substantially not contained. In the ink and the undercoat liquid of the invention, substantial absence of water is advantageous in the stability in time, such as inhomogenization in time and turbidity generation in the liquid resulting for example from a dye deposition, and in the drying property in case of utilizing a non-permeating or slow-permeating recording medium. The substantial absence means that the presence of unavoidable impurities is permissible.

(Other additives)

Already known additives may also be used in combination, such as a polymer, a surface tension regulating agent, an ultraviolet absorber, an antioxidant, an antifading agent, and a pH regulating agent.
As to the surface tension regulating agent, the ultraviolet absorber, the antioxidant, the antifading agent, and the pH regulating agent, known compounds may be suitably selected and used, but, more specifically, additives described for example in JP-A No. 2001-181549 may be used.
In addition, a set of compounds, which react upon being mixed to generate an agglomerate or an increase in viscosity, may be respectively contained in the ink and the undercoat liquid of the present invention. Such set of compounds have a feature of rapidly forming an agglomerate or rapidly increasing the viscosity of liquid, thereby more effectively suppressing the uniting of mutually adjacent liquid droplets.
Examples of the reaction between the set of compounds include an acid/base reaction, a hydrogen bonding reaction by a carboxylic acid and an amide group-containing compound, a crosslinking reaction represented by a boronic acid and a diol, and a reaction by a cation/anion electrostatic interaction.
In the following, the ink jet recording apparatus of the present invention will be described.
The ink jet recording apparatus of the present invention includes an undercoat liquid-providing apparatus for providing a recording medium with an undercoat liquid containing a polymer and an oligomer, an undercoat liquid curing apparatus which is disposed at a downstream side of the undercoat liquid-providing apparatus in a moving direction of the recording medium and which provides at least a part of the undercoat liquid with an actinic energy ray to semi-cure the undercoat liquid, and an image recording apparatus which is disposed at a downstream side of the undercoat liquid curing apparatus in the moving direction of the recording medium and which records an image by discharging an ink, curable by irradiation with the actinic energy ray, onto the semi-cured undercoat liquid.
Also the ink jet recording apparatus of the present invention may be constructed by further including conveying means which conveys the recording medium, and actinic energy ray irradiating means which is disposed at a downstream side of the image recording apparatus in the conveying direction in a conveying path of the conveyed recording medium and which irradiates the recording medium, on which an image is recorded by the image recording apparatus, with an actinic energy ray, to promote the curing of the undercoat liquid and the discharged ink (namely the image).
The image recording apparatus is adapted to discharge the ink, preferably utilizing at least a line-type ink jet head, disposed parallel to a direction perpendicular to the conveying direction of the recording medium and having a length corresponding to an entire recordable width of the recording medium.

- Recording principle and recording apparatus for image -

In the following, the principle of the present invention, for reproducibly recording an image (in the invention an image portion of a low dot density with a small liquid amount) on the recording medium while avoiding interference of deposited droplets, will be explained by an example, with reference to Figs. 5A to 5D.
At first, as shown in Fig. 5A, an undercoat liquid not containing a colorant is provided for example by a roll coater 102P onto a recording medium 16, to form a liquid film 81 of the undercoat liquid on the surface of the recording medium 16. As to the mode of such providing of the undercoat liquid, a mode by coating is illustrated, but any mode such as by droplet deposition (also called droplet discharge) with an ink jet head or by spray coating may be adopted.
A thickness of thus provided liquid film of the undercoat liquid is an average thickness obtained by dividing the volume of the provided undercoat liquid with the area of a part where the undercoat liquid is provided. In the case that the undercoat liquid is provided by droplet deposition, it can be determined from the volume of the deposited droplets and the area of the part where the undercoat liquid is deposited by droplets. The thickness of the liquid film of the undercoat liquid is desirably uniform and does not include a local difference in the thickness. In view of this point, the undercoat liquid preferably has a property of easily wetting and spreading on the recording medium, namely a small static surface tension, within such an extent that the undercoat liquid can be stably discharged from the ink jet head.
Then, as shown in Fig. 5B, after the undercoat liquid is semi-cured (semi-cured undercoat liquid (undercoat layer): 81a) by irradiation with an actinic light from a light source W (semi-curing light source 103P), an ink droplet 82a is deposited. Such droplet deposition causes, as shown in Fig. 5C, an ink liquid droplet 82a to be landed on the undercoat layer 81a. In this state, the surface of the undercoat layer has a curing degree lower than that of the interior, and can easily adapt to the ink droplet 82a.
Then, as shown in Fig. 5D, a succeeding ink droplet 82b is deposited within the area of the undercoat layer 81 a on the recording medium 16 and in the vicinity of the landed position of the ink liquid droplet 82a. In this state, the surface of the undercoat layer 81a has a curing degree lower than that of the interior, and can easily adapt to the ink droplet 82a. A uniting force is exerted on the ink droplet 82a and the ink droplet 82b, but the interference of the deposited droplets is suppressed by a satisfactory adhesion between the ink droplet and the surface of the undercoat layer, and by a fact that the internal part, in a cured state, of the undercoat layer functions as a resistance to the uniting of the ink droplets.

In the prior technology, the undercoat liquid contains a substance cause a chemical reaction of coagulating or insolubilizing the colorant contained in the ink, in order to avoid the interference of the deposited droplets, but, the present invention is capable of preventing the interference of the deposited droplets without including such substance in the undercoat liquid.

Then, while the ink droplets 82a, 82b are prevented from interference and maintain shapes thereof as illustrated in Fig. 5D (in the invention, within a time of from several hundred milliseconds to 5 seconds), the ink droplets 82a, 82b are cured or semi-cured in such an extent that the shapes are not destructed, thereby fixing the colorant in the ink droplets 82a, 82b to the recording medium 16. The ink at least contains a polymerizable compound curable by an actinic energy ray, and is cured by so-called polymerization reaction under irradiation by an actinic energy ray such as an ultraviolet light. The polymerizable compound may also be contained in the undercoat liquid, and this is preferable for improving the adhesion as all the discharged liquids are cured.

In the following, the entire construction of an in-line label printing apparatus will be explained with reference to the accompanying drawings, as an example of the image recording apparatus equipped with the ink jet recording apparatus of the present invention.

Fig. 6 is a view illustrating the entire construction of an in-line label printing apparatus (image recording apparatus) 100. The image recording apparatus 100 includes an ink jet recording unit 100A of the present invention, a post-processing unit 100B for applying a post-process to the recording medium 16 subjected to image drawing, and a buffer 104 as a buffering unit between the ink jet recording unit 100A and the post-processing unit 100B.

The ink jet recording apparatus of the present invention is applicable to the ink jet recording unit 100A. The ink jet recording unit 100A is constituted of an undercoat liquid film forming unit 100A1 for forming a semi-cured undercoat liquid film, not containing a colorant, on the recording medium (label) 16, and a drawing unit 100A2 for providing four inks, containing colorants, in predetermined positions of the recording medium 16 thereby forming a desired image on the recording medium 16.

A satisfactory image can be formed by employing, as the recording medium 16, a recording medium without permeability (such as OPP (oriented polypropylene film), CPP (casted polypropylene film), PE (polyethylene), PET (polyethylene terephthalate), PP (polypropylene), a soft packaging material, a laminated paper, a coated paper or an art paper).

Referring to Fig. 6, the ink jet recording unit 100A is equipped with an undercoat liquid film forming unit 100A1 for coating the undercoat liquid by a roll coater 102P, and a drawing unit 100A2 for providing the recording medium 16 with the ink by ink droplet deposition.

The image recording apparatus 100 is further equipped with an unillustrated light-shielded liquid storage part for storing the undercoat liquid and the inks to be supplied to the undercoat liquid film forming unit 100A1 and the drawing unit 100A2, a sheet feeding unit 101 for supplying the recording medium 16, an image detection unit 104c for reading the image formed as a result of ink droplet deposition (landed state of the ink droplets) by the drawing unit 100A2, and a winding unit 109 for winding the recording medium 16 after recording.

Fig. 6 illustrates a sheet feeding unit 101 of a type of feeding a rolled sheet (continuous sheet) as an example, but a unit feeding pre-cut sheets may also be utilized.

Now the ink jet recording unit 100A will be explained further. The ink jet recording unit 100A is constituted of a drawing part 100A2, including ink droplet deposition heads 102Y, 102C, 102M and 102K for depositing ink droplets onto the recording medium 16 in a single pass, pinning light sources 103Y, 103C and 103M, and a final curing light source 103K, and an undercoat liquid film forming unit 100A1, including a roll coater 102P and a semi-curing light source 103P. More specifically, utilized is so-called full-line type heads, each formed by a line head of a length corresponding to the recordable width of the recording medium 16, and disposed in a direction perpendicular to the medium conveying direction (indicated by an arrow S in Fig. 6). At the downstream sides of the heads 102Y, 102C and 102M, the pinning light sources 103Y, 103C and 103M are respectively disposed for curing the dots deposited by the respective color inks in at least such an extent that the dot shape is not destructed.

The roll coater and the droplet deposition heads 102Y, 102C, 102M and 102K respectively have a coating roller and plural nozzles (liquid discharge ports), over a length exceeding the length of at least a side of the recording medium 16 of a maximum size, to be processed by the ink jet recording unit 100A.

Also droplet deposition heads 102Y, 102C, 102M and 102K are disposed, along the medium conveying direction S and from the upstream side (left-hand side in Fig. 6), in the order of a yellow-colored ink (Y), a cyan-colored ink (C), a magenta-colored ink (M) and a black-colored ink (K), thus capable of forming a color image on the recording medium 16.

In the actual operation, at first the undercoat liquid is uniformly coated by the roller coater (102P) onto the recording medium 16 and is then subjected to a semi-curing by the semi-curing ultraviolet light source 103P. Then the yellow ink deposition head 102Y deposits the ink droplets onto the recording medium 16, and pinning light source 103Y disposed at the downstream side of the head 102Y semi-cures the yellow ink on the recording medium to such a state that the surface is not cured and the shape is not destructed. Subsequently, similar processes as in the case of yellow ink are repeated by the heads 102C and 102M, then the black ink droplet deposition head 102K executes the droplet deposition, and the curing is completed by the final curing light source 103K, having the ability of completely curing the

undercoat liquid and all the inks. The semi-curing of the undercoat liquid and the inks after the respective depositions thereof enables to avoid the interference between the deposited droplets.

The drawing unit 100A2, constituted of the full-line type droplet deposition heads, can record the image over the entire surface of the recording medium 16, by a single operation of relative displacement of the recording medium 16 and the drawing unit 100A2 along the medium conveying direction. Thus, the printing can be executed at a higher speed with an improved productivity, in comparison with a shuttle type droplet deposition head that is reciprocated in a direction perpendicular to the medium conveying direction while the recording medium 16 is conveyed.

The present embodiment has shown a construction utilizing the standard YMCK colors (four colors), but the number and combination of the ink colors are not restricted such exemplary construction, and a pale ink, a dense ink, a special color ink of white or another color, or a transparent ink may be added according to the necessity. For example, there may be adopted a construction additionally including a droplet deposition head for discharging a light ink such as of light cyan color or light magenta color, a construction of drawing a background with a white-colored ink, or a construction of regulating the luster by a transparent ink.

The UV light sources 103P, 103Y, 103C, 103M, and 103K serve to irradiate the recording medium 16 with ultraviolet lights for curing the inks containing the polymerizable compound. The ultraviolet light source may be a known light source, such as a medium-pressure mercury lamp, a high-pressure mercury lamp, an ultra high-pressure mercury lamp, a metal halide lamp, a xenon lamp, a carbon arc light, an ultraviolet fluorescent lamp, an ultraviolet LED, or an ultraviolet LD, but a high-pressure mercury lamp, an ultra high-pressure mercury lamp, or a metal halide lamp is preferable in consideration of the practical performance. Also the UV light source preferably has a light amount peak within a wavelength region of from 200 to 400 nm, and, at such light amount peak wavelength, an irradiating light intensity within a range of from 1 to 500 $mW/cm^2$. Also the UV light source preferably has a construction, including a cold mirror as a reflector and an infrared cut-off glass as a cover glass, in order to prevent a temperature increase of the recording medium by the irradiated heat ray. In the case of inks containing a radical polymerizing compound, the atmosphere of curing by the final curing light source 103K may substituted with an inert gas (such as nitrogen) to suppress the inhibition of polymerization by oxygen, thereby achieving curing and fixation of the inks more satisfactorily, though such construction is omitted in Fig. 6.

Also, though not illustrated, an electron beam irradiating apparatus may be used for curing the inks containing the polymerizable compound.

In the foregoing, a UV light source and an electron beam irradiating apparatus have been explained as means for curing the polymerizable compound, but such means is not restricted to these examples and other radiation, such as an $\alpha$-ray, a $\gamma$-ray or an X-ray, may also be utilized.

The image detection unit 104c includes an image sensor (such as a line sensor) for reading the result of droplet deposition in the drawing unit 100A2, and functions as means for checking a nozzle clogging or other abnormalities in the discharge, based on the read image.

A buffer 104 is disposed as a buffering unit between the ink jet recording unit 100A and the post-processing unit 100B. The recording material after ink jet recording passes the buffer 104, including several upper rollers 104a and several lower rollers 104b, repeating several up-down motions. As the upstream ink jet recording unit 100A and the downstream post-processing unit 100B, to be described later, are different in the operation velocity (conveying speed of the recording medium 16), the buffer 104 serves as a regulating part for absorbing such velocity difference.

A varnish coater 105 is disposed at the downstream side of the buffer 104. The varnish coater 105 coats a varnish thinly on the surface of the label, thereby improving the friction resistance of the label surface.

A label cutting unit 106, at the downstream side of the varnish coater 105, is constituted of a marking reader 106a, a die cutter driver 106b, a die cutter 106c mounted with a blade-containing plate 106e, and a counter roller 106d.

The labels, cut by the die cutter 106c of the label cutting unit 106, are wound as product labels by the label winding unit 109 at the downstream side of a branching roller 107, and other unused parts are peeled off and discarded as a waste in a waste collecting unit 108.

* Structure of droplet deposition head

Fig. 7A is a planar perspective view showing an example of a basic entire structure of a droplet deposition head, represented by a symbol 50, as a representative example of the droplet deposition heads 102Y, 102C, 102M and 102K shown in Fig. 6.

The droplet deposition head 50, illustrated as an example in Fig. 7A, is so-called full-line type head, has a structure in which a plurality of nozzles (liquid discharge ports) 51 for discharging a liquid toward the recording medium 16 are two-dimensionally arranged, over a length corresponding to the width Wm of the recording medium 16 in a direction (main scanning direction indicated by an arrow M in the drawing) perpendicular to the conveying direction of the recording medium (sub scanning direction indicated by an arrow S in the drawing).

In the droplet deposition head 50, plural pressure chamber units 54, each including a nozzle 51, a pressure

chamber 52 communicating with the nozzle 51 and a liquid supply opening 53, are arranged along two directions which are a main scanning direction M and an oblique direction forming a predetermined acute angle $\theta$ (0° < $\theta$ < 90°) with the main scanning direction M. In Fig. 7A, the pressure chamber units 54 are illustrated only in a part, for the purpose of simplicity.

The nozzles 51 are arranged at a constant pitch d along the oblique direction, forming a predetermined acute angle $\theta$ to the main scanning direction M, and can therefore be considered equivalent to those arranged with a pitch of "d x cos$\theta$" on a line along the main scanning direction M.

Fig. 7B shows a cross-sectional view, along a line b-b in Fig. 7A, of the pressure chamber unit 54 as a single discharge element constituting the droplet deposition head 50.

As illustrated in Fig. 7B, each pressure chamber 52 communicates with a common liquid chamber 55 through a liquid supply opening 53. The common liquid chamber 55 communicates with an unillustrated tank serving as a liquid supply source, and the liquid supplied from the tank is distributed and supplied to each pressure chamber 52 through the common liquid chamber 55.

On a vibration plate 56 constituting the ceiling part of the pressure chamber 52, a piezoelectric member 58a is disposed, and an individual electrode 57 is provided on the piezoelectric member 58a. The vibration plate 56 is grounded and serves as a common electrode. The vibration plate 56, the individual electrode 57 and the piezoelectric member 58a constitute a piezoelectric actuator 58 serving as means for generating a liquid discharging force.

When a predetermined driving voltage is applied to the individual electrode 57 of the piezoelectric actuator 58, the piezoelectric member 58a causes a deformation to cause a variation in the volume of the pressure chamber 52, and a resulting pressure change in the pressure chamber 52 causes the liquid to be discharged from the nozzle 51. After the liquid discharge, when the volume of the pressure chamber 52 returns to the original state, a new liquid is supplied to the pressure chamber 52 from the common pressure chamber 55 through the liquid supply opening 53.

Fig. 7A illustrates a case where the plural nozzles 51 are two-dimensionally arranged as a structure capable of forming a high-resolution image at a high speed on the recording medium 16, but the droplet deposition head in the present invention is not particularly restricted to a structure in which the plural nozzles 51 are two-dimensionally arranged but may assume a structure in which the plural nozzles 51 are one-dimensionally arranged. Also the pressure chamber unit 54 illustrated in Fig. 7B as a discharge element constituting the droplet deposition head is merely an example that is not restrictive. For example, the common liquid chamber 55 may be disposed, instead of being disposed under the pressure chamber 52 (namely at a side of the pressure chamber 52 closer to a discharge face 50a), above the pressure chamber 52 (namely at an opposite side to the discharge face 50a). Also, the liquid discharging force may be generated, instead of the piezoelectric member 58a, by a heat generating member.

Also in the ink jet recording apparatus of the present invention, the undercoat liquid may be provided onto the recording medium 16, instead of the coating, by other means such as a discharge of the undercoat liquid from a nozzle. An apparatus to be used for coating is not particularly restricted, but may be suitably selected from known coating apparatuses according to the purpose, such as an air doctor coater, a blade coater, a rod coater, a knife coater, a squeeze coater, a dip coater, a reverse roll coater, a transfer roll coater, a gravure coater, a kiss roll coater, a cast coater, a spray coater, a curtain coater, and an extrusion coater.

* Liquid supply system

Fig. 8 is a schematic view showing the construction of a liquid supply system in the image recording apparatus 100.

A liquid tank 60 is a base tank for supplying the droplet deposition head 50 with a liquid. In a pipe path connecting the liquid tank 60 and the droplet deposition head 50, a liquid supply pump 62 is provided for sending the liquid from the liquid tank 60 to the droplet deposition head 50. The pipe path connecting the liquid tank 60 and the droplet deposition head 50 is preferably temperature controlled, together with the ink therein, by a temperature detector and a heater. In such case, the ink is preferably controlled at a temperature of from 40 to 80°C.

The image recording apparatus 100 also includes a cap 64 as means for preventing a drying of a meniscus in the nozzle 51 or a viscosity increase in the vicinity of the meniscus in the case of a prolonged pause in discharge, and a cleaning blade 66 as means for cleaning the discharge face 50a. A maintenance unit including the cap 64 and the cleaning blade 66 is rendered movable relative to the droplet deposition head 50 by an unillustrated mechanism, and is moved, when necessitated, from a predetermined retracted position to a maintenance position beneath the droplet deposition head 50.

The cap 64 is elevated or lowered relative to the droplet deposition head 50, by an unillustrated elevator mechanism. The elevator mechanism elevates the cap 64 to a predetermined elevated position, in close contact with the droplet deposition head 50, thereby covering at least a nozzle area of the discharge face 50a by the cap 64.

Preferably, the cap 64 has such a construction that the interior thereof is divided by partition walls into plural areas corresponding to the nozzle rows and each divided area can be selectively subjected to a suction for example by a selector.

The cleaning blade 66 is formed by an elastic member such as of rubber, and is rendered slidable on the discharge face 50a of the droplet deposition head 50 by an unillustrated cleaning blade moving mechanism. When a liquid droplet or a foreign substance is deposited on the discharge face 50a, the cleaning blade 66 is made to slide on the discharge face 50a, thus wiping and cleaning the discharge face 50a.
In a state where the cap 64 covers the discharge face 50a of the droplet deposition head 50, a suction pump 67 sucks a liquid from the nozzles 51 of the droplet deposition head 50 and sends the sucked liquid to a recovery tank 68.
Such suction operation is executed when the liquid tank 60 is mounted on the image recording apparatus 100 and the liquid is filled from the tank 60 into the droplet deposition head 50 (initial filling), and also in case of eliminating the liquid of increased viscosity after a prolonged pause (at the start of use after a prolonged pause).
In summary, the liquid discharge from the nozzle 51 includes firstly an ordinary discharge to the recording medium 16 such as paper for image formation thereon, and secondly a purge (also called an idle discharge) to the cap 64, which serving as a liquid receiver.
Also in the case that a bubble enters the nozzle 51 or the pressure chamber 52 of the droplet deposition head 50 or that the viscosity increase in the nozzle 51 exceeds a certain level, the liquid cannot be discharged from the nozzle 51 by the idle discharge described above. In such case, therefore, executed is an operation of applying the cap 64 to the discharge face 50a of the droplet deposition head 50 and sucking out the liquid containing the bubble or the liquid with increased viscosity, from the pressure chamber 52 of the droplet deposition head 50 by the suction pump 67.
The droplet deposition head 50, the liquid tank 60, the liquid supply pump 62, the cap 64, the cleaning blade 66, the suction pump 67, the recovery tank 68, the ink flow paths connecting these elements, and other members and devices directly contacted by the ink preferably has resistances to dissolution and swelling. Also these members and devices preferably have a light-shielding property.

* Control system

Fig. 9 is a schematic block diagram, showing a system construction of the image recording apparatus 100.
Referring to Fig. 9, the image recording apparatus 100 is principally constituted of a drawing unit 102, an image detection unit 104c, a UV light source 103, a communication interface 110, a system controller 112, a memory 114, an image buffer memory 152, a conveying motor 116, a motor driver 118, a heater 122, a heater driver 124, a medium type detection unit 132, an ink type detection unit 134, an illuminance detection unit 135, an ambient temperature detection unit 136, an ambient humidity detection unit 137, a medium temperature detection unit 138, a liquid supply unit 142, a liquid supply driver 144, a print control unit 150, a head driver 154, and a light source driver 156.
The drawing unit 102 representatively indicates the droplet deposition heads 102Y, 102C, 102M and 102K shown in Fig. 6, and the UV light source 103 representatively indicates the curing light sources 103P, 103Y, 103C, 103M and 103K. The image detection unit 104c is same as shown in Fig. 6 as already described, so that further explanation will be omitted.
The communication interface 110 is image data input means for receiving image data transmitted from a host computer 300. As the communication interface 110, a wired interface such as USB (universal serial bus) or IEEE1394 or a wireless interface may be used. The image data, input into the image recording apparatus 100 through the communication interface 110, are once stored in the memory 114 for image data storage.
The system controller 112 is main control means, constituted of a central processing unit (CPU) and peripheral circuits thereof, and controlling the entire image recording apparatus 100 according a predetermined program stored in advance in the memory 114. The system controller 112 controls various units such as the communication interface 110, the motor driver 118, the heater driver 124, the medium type detection unit 132, the ink type detection unit 134 and the print control unit 150.
The conveying motor 116 provides rollers and belts for conveying the recording medium 16, with a driving power. The conveying motor 116 causes a relative movement of the droplet deposition head 50 constituting the drawing unit 102 and the recording medium 16. The motor driver 118 is a circuit for driving the conveying motor 116, according an instruction from the system controller 112.
The heater 122 is a circuit for driving an unillustrated heater (or a cooling element) 122, for maintaining the recording medium 16 at a constant temperature. The heater driver 124 is a circuit for driving the heater 122 according to an instruction from the system controller 112.
The medium type detection unit 132 detects the type of the recording medium 16. Various modes are available for detecting the type of the recording medium 16, such as a mode of detection by disposing a sensor in an unillustrated sheet feeding unit, a mode utilizing an input by a user operation, a mode utilizing an input from the host computer 300, and a mode of automatic detection by analyzing the image data (for example resolution or color) entered from the host computer 300 or additional data to the image data.
The ink type detection unit 134 detects the type of the ink. Various modes are available for detecting the type of the ink, such as a mode of detection by disposing a sensor in an unillustrated liquid storage/filling unit, a mode utilizing

an input by a user operation, a mode utilizing an input from the host computer 300, and a mode of automatic detection by analyzing the image data (for example resolution or color) entered from the host computer 300 or additional data to the image data.

The illuminance detection unit 135 detects the illuminance of the ultraviolet light, emitted from the UV light source 103. The illuminance can be detected for example by a mode of detection by disposing an illuminance sensor in the vicinity of the UV light source 103 shown in Fig. 6. The output of the UV light source 103 is feedback controlled based on the output of the illuminance sensor.

The ambient temperature detection unit 136 detects the temperature of the external air or the temperature in the image recording apparatus. The ambient temperature can be detected by a mode of detection by disposing a temperature sensor outside of or within the apparatus.

The ambient humidity detection unit 137 detects the humidity of the external air or the humidity in the image recording apparatus. The ambient humidity can be detected by a mode of detection by disposing a humidity sensor outside of or within the apparatus.

The medium temperature detection unit 138 detects the temperature of the recording medium 16 at the image formation. Various modes are available for detecting the medium temperature, such as a mode of detection by a contact-type temperature sensor, and a mode of detection by a non-contact temperature sensor disposed above the recording medium 16. The recording medium 16 is maintained at a constant temperature by the heater 122.

The liquid supply unit 142 is constituted for example of a pipe path for ink flow from the liquid tank 60 shown in Fig. 8 to the drawing unit 102, and the liquid supply pump 62.

The liquid supply driver 144 is a circuit for driving the liquid supply pump 62 constituting the liquid supply unit 142, in order to supply the drawing unit 102 with the liquid.

The print control unit 150 generates, based on the image data input into the image recording apparatus 100, data (droplet deposition data) necessary for executing the discharge (droplet deposition) onto the recording medium 16 by each droplet deposition head 50 constituting the drawing unit 102. More specifically, the print control unit 150 functions as image processing means for executing an image processing such as various workings and corrections necessary for generating the droplet deposition data from the image data stored in the memory 114, under the control by the system controller 112, and supplies the head driver 154 with the generated droplet deposition data.

An image buffer memory 152 is associated with the print control unit 150, and, at the image processing by the print control unit 150, the droplet deposition data and the like are temporarily stored in such image buffer memory 152.

In Fig. 9, the image buffer memory 152 is illustrated in a form associated with the print control unit 150, but the memory 114 may also be used for such memory. Also the print control unit 150 and the system controller 112 may be integrally constructed by a single processor.

The head driver 154 outputs, based on the droplet deposition data supplied from the print control unit 150 (in fact droplet deposition data stored in the image buffer memory 152), a discharge drive signal to each droplet deposition head 50 constituting the drawing unit 102. In response to the discharge drive signal given from the head driver 154 to each droplet deposition head 50 (more specifically the actuator 58 shown in Fig. 7B), the liquid (liquid droplet) is discharged from the droplet deposition head 50 toward the recording medium 16.

The light source driver 156 is a circuit for driving the UV light source 103 by controlling the voltage to the UV light source 103 and a time and a timing thereof, based the instruction from the print control unit 150, the illuminance detected by the illuminance detection unit 135, the ambient temperature detected by the ambient temperature detection unit 136, the ambient humidity detected by the ambient humidity detection unit 137, and the medium temperature detected by the medium temperature detection unit 138.

## EXAMPLES

Now the present invention will be explained in more details by examples, but the present invention, unless the scope thereof is exceeded, is not limited to such examples.

### (Example 1)

<Preparation of cyan pigment dispersion P-1>

16 g of PB15:3 (Irgalite® Blue GLO; manufactured by Ciba Specialty Chemicals Inc.), 48 g of dipropylene glycol diacrylate (DPGDA; manufactured by Daicel-Cytec Ltd.) and 16 g of Solsperse® 32000 (manufactured by Zeneca Ltd.) were mixed and agitated for 1 hour by a stirrer. The mixture after agitation was dispersed by an Eiger mill to obtain a cyan pigment dispersion P-1.

The dispersion was conducted by filling zirconia beads of a diameter of 0.65 mm with a fill rate of 70% and under conditions of a peripheral speed of 9 m/s and a dispersion time of 1 hour.

<Preparation of cyan ink jet recording liquid I-1>

An ink jet recording liquid I-1 for cyan image recording was prepared by mixing and dissolving components of following formulation under agitation. The ink jet recording liquid I-1 had a surface tension (25°C) of 27 mN/m and a viscosity (25°C) of 15 mPa·s.

<Formulation>

* above pigment dispersion P-1 2.16 g
* dipropylene glycol diacrylate (polymerizable compound) (DPGDA: manufactured by Daicel-Cytec Ltd.) 9.84 g
* following polymerization initiator Irg907 (manufactured by Ciba Specialty Chemicals Inc.) 1.5 g
* following sensitizer Darocure® ITX (manufactured by Ciba Specialty Chemicals Inc.) 0.75 g
* following sensitizer Darocure® EDB (manufactured by Ciba Specialty Chemicals Inc.) 0.75 g

<Preparation of magenta pigment dispersion P-2>

A magenta pigment dispersion P-2 was prepared in the same manner as the cyan pigment dispersion P-1, except that the pigment PB15:3 (Irgalite® Blue GLO; manufactured by Ciba Specialty Chemicals Inc.), employed in the preparation of the cyan pigment dispersion P-1, was replaced by PV19 (Cinquasia Magenta RT-355D; manufactured by Ciba Specialty Chemicals Inc.) and that the dispersant Solsperse 32000 was replaced by BYK168 (manufactured by BYK Chemie GmbH).

<Preparation of yellow pigment dispersion P-3>

A yellow pigment dispersion P-3 was prepared in the same manner as the cyan pigment dispersion P-1, except that the pigment PB15:3 (Irgalite® Blue GLO; manufactured by Ciba Specialty Chemicals Inc.), employed in the preparation of the cyan pigment dispersion P-1, was replaced by PY155 (Novoperm® Yellow 4G01; manufactured by Clarient Inc.) and that the dispersant Solsperse® 32000 was replaced by BYK168 (manufactured by BYK Chemie GmbH).

<Preparation of black pigment dispersion P-4>

A black pigment dispersion P-4 was prepared in the same manner as the cyan pigment dispersion P-1, except that the pigment PB15:3 (Irgalite® Blue GLO; manufactured by Ciba Specialty Chemicals Inc.), employed in the preparation of the cyan pigment dispersion P-1, was replaced by carbon black (Special Black 250; manufactured by Degussa Inc.) and that 16 g of the dispersant Solsperse® 32000 (manufactured by Zeneca Ltd.) were changed to 14 g of Solsperse® 32000 (manufactured by Zeneca Ltd.) and 2 g of Solsperse® 5000 (manufactured by Zeneca Ltd.).

<Preparation of magenta ink jet recording liquid I-2>

An ink jet recording liquid I-2 for magenta image recording was prepared by mixing and dissolving components of following formulation under agitation. The magenta ink jet recording liquid 1-2 had a surface tension (25°C) of 27 mN/m and a viscosity (25°C) of 16 mPa·s.

<Formulation>

* above pigment dispersion P-2 5.86 g
* dipropylene glycol diacrylate (polymerizable compound) (DPGDA: manufactured by Daicel-Cytec Ltd.) 6.14 g
* following polymerization initiator Irg907 (manufactured by Ciba Specialty Chemicals Inc.) 1.5 g
* following sensitizer Darocure ITX (manufactured by Ciba Specialty Chemicals Inc.) 0.75 g
* following sensitizer Darocure EDB (manufactured by Ciba Specialty Chemicals Inc.) 0.75 g

<Preparation of yellow ink jet recording liquid I-3>

An ink jet recording liquid I-3 for yellow image recording was prepared by mixing and dissolving components of following formulation under agitation. The ink jet recording liquid 1-3 had a surface tension (25°C) of 27 mN/m and a viscosity (25°C) of 16 mPa·s.

<Formulation>

* above pigment dispersion P-3 4.68 g
* dipropylene glycol diacrylate (polymerizable compound) (DPGDA: manufactured by Daicel-Cytec Ltd.) 7.32 g
* following polymerization initiator Irg907 (manufactured by Ciba Specialty Chemicals Inc.) 1.5 g
* following sensitizer Darocure® ITX (manufactured by Ciba Specialty Chemicals Inc.) 0.75 g
* following sensitizer Darocure® EDB (manufactured by Ciba Specialty Chemicals Inc.) 0.75 g

<Preparation of black ink jet recording liquid I-4>

An ink jet recording liquid 1-4 for black image recording was prepared by mixing and dissolving components of following formulation under agitation. The ink jet recording liquid 1-4 had a surface tension (25°C) of 27 mN/m and a viscosity (25°C) of 15 mPa·s.

<Formulation>

* above pigment dispersion P-4 3.3 g
* dipropylene glycol diacrylate (polymerizable compound) (DPGDA: manufactured by Daicel-Cytec Ltd.) 8.7 g
* following polymerization initiator Irg907 (manufactured by Ciba Specialty Chemicals Inc.) 1.5 g
* following sensitizer Darocure® ITX (manufactured by Ciba Specialty Chemicals Inc.) 0.75 g
* following sensitizer Darocure® EDB (manufactured by Ciba Specialty Chemicals Inc.) 0.75 g

<Preparation of undercoat liquid II-1>

An undercoat liquid II-1 was prepared by mixing and dissolving components of following formulation under agitation. The undercoat liquid II-1 had a surface tension (25°C) of 22 mN/m and a viscosity (25°C) of 12 mPa·s.

<Formulation>

* dipropylene glycol diacrylate (polymerizable compound) (DPGDA: manufactured by Daicel-Cytec Ltd.) 11.85 g
* following polymerization initiator Irg907 (manufactured by Ciba Specialty Chemicals Inc.) 1.5 g
* following sensitizer Darocure® ITX (manufactured by Ciba Specialty Chemicals Inc.) 0.75 g
* following sensitizer Darocure® EDB (manufactured by Ciba Specialty Chemicals Inc.) 0.75 g
* BYK-307 (manufactured by BYK Chemie GmbH) 0.15 g

[kagaku 13]

Irg907

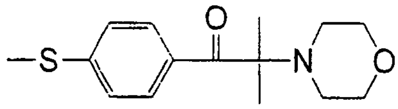

Darocure ITX

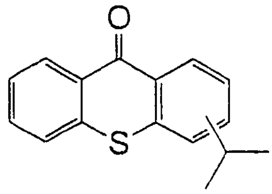

Darocure EDB

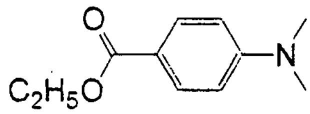

<Preparation of undercoat liquids II-2 to II-21>

Undercoat liquids II-2 to II-21 were prepared in the same manner as the undercoat liquid II-1, except that a polymer and an oligomer of amounts shown in Table 1 were respectively added.
In the preparations of these undercoat liquids, the DPGDA was decreased from the amount in the undercoat liquid II-1 corresponding to the addition amounts of the polymer and the oligomer, in such a manner that the total amount of the polymer, the oligomer and DPGDA became equal to 15g.

[Table 1]

| undercoat liquid type | polymer | weight-average molecular weight | added amount [% by mass to undercoat liquid] | oligomer | added amount [% by mass to undercoat liquid] |
|---|---|---|---|---|---|
| II-1 | - | - | - | - | - |
| II-2 | P-17 | 20,000 | 10 % | - | - |
| II-3 | P-17 | 20,000 | 20 % | - | - |
| II-4 | P-17 | 20,000 | 30 % | - | - |
| II-5 | - | - | | R1204 | 10 % |
| II-6 | - | - | | R1204 | 20 % |
| II-7 | - | - | | R1204 | 30 % |
| II-8 | P-17 | 20,000 | 10 % | R1204 | 10 % |
| II-9 | P-17 | 20,000 | 10 % | R1302 | 10 % |
| II-10 | P-17 | 20,000 | 10 % | R1303 | 10 % |

(continued)

| undercoat liquid type | polymer | weight-average molecular weight | added amount [% by mass to undercoat liquid] | oligomer | added amount [% by mass to undercoat liquid] |
|---|---|---|---|---|---|
| II-11 | P-17 | 20,000 | 10 % | R1901 | 10 % |
| II-12 | P-17 | 20,000 | 10 % | Ebecryl®1290K | 10 % |
| II-13 | P-17 | 20,000 | 10 % | M8030 | 10 % |
| II-14 | P-82 | 20,000 | 10 % | R1204 | 10 % |
| II-15 | P-44 | 20,000 | 10 % | R1204 | 10 % |
| II-16 | P-67 | 20,000 | 10 % | R1204 | 10 % |
| II-17 | P-25 | 20,000 | 10 % | R1204 | 10 % |
| II-18 | P-84 | 20,000 | 10 % | R1204 | 10 % |
| II-19 | P-23 | 20,000 | 10 % | R1204 | 10 % |
| II-20 | P-13 | 20,000 | 10 % | R1204 | 10 % |
| II-21 | P-27 | 20,000 | 10 % | R1204 | 10 % |

* R1204, R1302, R1303 and R1901: manufactured by Dai-ichi Kogyo Seiyaku Co., Ltd.
* Ebecryl® 1290K: manufactured by Daicel-Cytec, Ltd.
* M8030: manufacured by Toa Gosei Co., Ltd.

Each of the undercoat liquids II-2 to II-21 above had a surface tension and a viscosity as shown in following Table 2.

[Table 2]

| undercoat liquid type | surface tension [mN/m] | viscosity [mPa/s] | undercoat liquid type | surface tension [mN/m] | viscosity [mPa/s] |
|---|---|---|---|---|---|
| II-2 | 22 | 95 | II-12 | 22 | 430 |
| II-3 | 22 | 480 | II-13 | 22 | 390 |
| II-4 | 22 | 1500 | II-14 | 22 | 610 |
| II-5 | 22 | 30 | 11-15 | 22 | 690 |
| II-6 | 22 | 60 | II-16 | 22 | 670 |
| II-7 | 22 | 120 | II-17 | 22 | 590 |
| II-8 | 22 | 570 | II-18 | 22 | 650 |
| II-9 | 22 | 520 | II-19 | 22 | 530 |
| II-10 | 22 | 560 | II-20 | 22 | 690 |
| II-11 | 22 | 510 | II-21 | 22 | 510 |

In the present example, the surface tension was measured by a surface tension meter CBVP-Z (manufactured by Kyowa Interface Science Co., Ltd.), and the viscosity was measured by a viscometer TVE-22LT (manufactured by Toki Sangyo Co., Ltd.).

<Image recording and evaluation>

As the image recording apparatus, prepared was an experimental equipment including a conveying mechanism, which conveys the recording medium by rotating a conveying roller, a roll coater constituting undercoat liquid providing means for coating the undercoat liquid on the recording medium, an undercoat liquid semi-curing light source (formed by plural ultra high-pressure mercury lamps arranged in a direction perpendicular to the conveying direction of the

recording medium (namely in the main scanning direction (width direction) in case of recording on the recording medium) constituting the undercoat liquid semi-curing means for semi-curing the undercoat liquid after coating, an ink jet printer unit mounted with a head unit constituting the image recording means (manufactured by Toshiba TEC Corp., formed by four head sets in each of which heads, each having a droplet deposition frequency: 6.2 kHz, a number of nozzles: 636, a nozzle density: 300 npi (nozzle/inch, hereinafter same), and a droplet size: variable in 7 levels within 6 - 42 pl, are so arranged as to have a nozzle density of 600 npi between two heads, and are further arranged in a full-line arrangement), and a metal halide lamp constituting the actinic energy ray irradiating means for further curing the undercoat liquid and the recorded image on the recording medium.

Along the conveying path for conveying the recording medium, as shown in Fig. 6, the roller coater and the undercoat liquid semi-curing light source are disposed in succession from the upstream side to the downstream side. At the downstream side of the light source, disposed is the head unit including the discharge heads for yellow, cyan, magenta and black colors in such a manner that the recording medium can move immediately below each head, and further disposed are the ink semi-curing ultra-high pressure mercury lamps respectively at the downstream side, in the conveying direction, of the respective discharge heads. The heads are so constructed that the discharge heads respectively for yellow, cyan, magenta and black colors are fixed to the body of the equipment along the conveying path for the recording medium and in succession from the upstream side of the conveying direction. Also the metal halide lamp is disposed at the further downstream side of the black discharge head in the conveying direction of the recording medium.

In the present example, the undercoat liquid II-1 was charged in the experimental equipment above and the ink jet recording liquids I-1 to II-4 were charged in the ink jet printer unit thereof, and images were recorded on the recording medium in the following manner.

At first, in the experimental equipment, the undercoat liquid was uniformly coated with a thickness of 5 $\mu$m by the roll coater (coating speed: 400 mm/s). After the coating of the undercoat liquid, an exposure was executed by the undercoat liquid semi-curing light source (light intensity: 500 mW/cm$^2$) to semi-cure the coated undercoat liquid.

A transfer test was conducted, utilizing a plain paper (copy paper C2, product code: V436, manufactured by Fuji-Xerox Co., Ltd.) as a non-permeating medium. On the undercoat liquid in the semi-cured state or the ink in the semi-cured state on an extracted recording medium, a plain paper was pressed under a uniform force (500 mN/cm$^2$), and was let to stand for about 1 minute. Thereafter the plain paper was gently peeled off and the mass thereof was measured to determine the amount of uncured liquid. In case of an image formation with 12 pico-liter droplets, the amount of uncured liquid was from 0.10 to 0.12 mg/cm$^2$. In the present example, the maximum mass m of the ink discharged per unit area was, in the case of 600 dpi x 600 dpi and of 12 pico-liters, from 0.74 to 0.87 mg/cm$^2$.
Therefore the relation between the weight M (undercoat liquid) of the uncured portion of the undercoat liquid per unit area and the maximum weight m (recording liquid) of the colored liquid discharged per unit area satisfies "m(recording liquid)/10 < M(undercoat liquid) < m(recording liquid)/5".

Thereafter, by the head charged with the ink jet recording liquids I-1 to 1-4, one of the ink jet recording liquids I-1 to I-4 singly (without utilizing the associated ultra-high pressure mercury lamp for semi-curing the ink) onto the recording medium on which the undercoat liquid was provided and semi-cured, and was fixed by irradiation (curing) by the metal halide lamp with an ultraviolet light (wavelength: 365 nm) of an intensity of 3000 mW/cm$^2$.
The monochromatic image drawn by discharging each of the ink jet recording liquids I-1 to 1-4 was a line (using 1-drop mode, with a droplet size of 6 pL) with 600 dpi in the main scanning direction and 150 dpi in the sub scanning direction.

Also, on the recording medium on which the undercoat liquid was provided and semi-cured, the ink jet recording liquids I-3 was deposited on the solid area (using 2-drop mode, with a droplet size of 12 pL) with 600 dpi in the main scanning direction and 600 dpi in the sub scanning direction, and a pinning exposure (light intensity: 500 mW/cm$^2$) was conducted by the ink semi-curing ultra-high pressure mercury lamp.
Thereafter, each of the ink jet recording liquids I-1, 1-2 and I-4 was used to form a grid image formed by grid lines of a width of 3 pixels (in each unit grid, an area surrounded by grid lines and not containing the grid line has a width of 3 pixels). In this image formation, the image was fixed by an ultraviolet irradiation (wavelength: 365 nm) by the metal halide lamp of a light intensity of 3000 mW/cm$^2$. This image formation was conducted with 600 dpi in the main scanning direction and 600 dpi in the sub scanning direction (using 2-drop mode with a droplet size of 12 pL).

Also a full-color image (practical image) of a person (female) of 600 dpi in the main scanning direction and 600 dpi in the sub scanning direction was formed, utilizing all the colors. In this case, pinning exposures (light intensity: 500 mW/cm$^2$) by the ink semi-curing ultra-high pressure mercury lamp were repeated for the respective colors, thereby semi-curing the inks (recording medium conveying speed: 400 mm/s, 3-level drawing of 6 to 12 pL, with anti-aliasing process). Then the image was fixed by an ultraviolet irradiation (wavelength: 365 nm) by the metal halide lamp with a light intensity of 3000 mW/cm$^2$.

In the present example, the maximum mass m of the ink discharged per unit area was, in the case of 600 dpi x 600 dpi and of 12 pico-liters, from 0.74 to 0.87 mg/cm$^2$. Further, an uncured liquid amount of the yellow liquid after the exposure to the pinning light source, an uncured liquid amount of the cyan liquid after the exposure to the pinning light source, and an uncured liquid amount of the magenta liquid after the exposure to the pinning light source were measured

in the transfer test by extracting samples after the respective process. In the case of image formation with 12 pico-liters, the amount of uncured liquid was 0.10 to 0.12 mg/cm$^2$.
Therefore, in a combination of liquids having different colors, the relation between the mass M(liquid A) of the uncured portion of the liquid A deposited at first on the recording medium per unit area and the maximum weight m(liquid B) of the liquid B deposited subsequently per unit area satisfies "m(liquid B)/10 < M(liquid A) < m(liquid B)/5".

In the foregoing, an interval from the completion of the semi-curing of the undercoat liquid to the droplet deposition of the yellow ink jet recording liquid I-3 as the first color was selected as 0.2 seconds.
Also Lintec® Yupo 80 (manufactured by Lintec Corp.) was used as the recording medium.

After the image formation with the undercoat liquid II-1, image formations were conducted separately with the undercoat liquids II-2 to II-21 instead of the undercoat liquid II-1.

The obtained monochromatic image was cut by a microtome and was observed under an optical microscope (Measuring Microscope MM-40 manufactured by Nikon Corp.). For obtaining a section, a microtome (Microtome® RM2255 manufactured by Leitz GmbH) was used.

In the image portion in the obtained image, as illustrated in Fig. 1, a part of the cured substance of the ink emerged at the surface 22 of the undercoat layer, and a part thereof was embedded in the undercoat layer 20. Also under the cured substance of the ink, the undercoat layer 20 was observed. Also formation of a uniform cured layer of the recording liquid could be confirmed.
Similarly, in the full-color image portion, as illustrated in Fig. 3, a part of the cured substance of the ink 28, constituting the ink B, emerged at the surface, and a part thereof was embedded in the layer of the ink 24 constituting another ink A. Also under the ink 28 as the ink B, the layer of the ink 24 as the ink A was observed. Also formation of a uniform cured layer of the ink B 28 could be confirmed.

Each of the images was subjected to the following measurement and evaluation.
Results of measurement and evaluation are shown in Tables 3 to 7.

- 1. Measurement of [A(after polymerization)/A(before polymerization)] -

Infrared absorption spectrum of the undercoat liquid was measured after the coating of the undercoat liquid and before and after the exposure by the undercoat liquid semi-curing light source to determine [A(after polymerization)/A(before polymerization)].
The measurement of the infrared absorption spectrum was executed with an infrared spectrophotometer FTS-6000 manufactured by BIO-RAD® Laboratories, Inc. The A(after polymerization) is an absorbance of the infrared absorption peak by the polymerizable group after the polymerization reaction, and the A(before polymerization) is an absorbance of the infrared absorption peak by the polymerizable group before the polymerization reaction.
An infrared absorption peak at about 810 cm$^{-1}$ was used as the infrared absorption peak for measurement.

- 2. Evaluation of line width -

A line width of the image drawn in a line shape was measured by a dot analyzer DA6000 (manufactured by Oji Scientific Instruments, Ltd.). In case of drawing a line under the conditions above, the ideal line width at 600 dpi is from 42 to 43 $\mu$m.

- 3. Evaluation of grid image formed with cyan, magenta or black ink jet recording liquid I-1, 2 or 4 after solid deposition of yellow ink jet recording liquid I-3.

The grid image was observed with the dot analyzer, and a level of narrowing of the area, where the grid pattern was not drawn, was evaluated.

(Criteria of evaluation)

A: no narrowing (narrowing less than 1 %)
B: narrowing of 1% or more but less than 10% was observed
C: narrowing of 10% or more was observed

- 4. Evaluation of practical image -

The full-color practical image of a person (female) was visually observed and evaluated according to the

following evaluation criteria:

(Criteria of evaluation)

AA: satisfactory clear image with sufficient density obtained
A: clear image obtained
B: high density portion such as of hairs felt somewhat pale
C: colors felt pale over the entire image
D: blurred image

[Table 3]

| <Cyan ink> | | | |
|---|---|---|---|
| undercoat liquid type | line width | narrowing of grid | remarks |
| II-1 | 60 μm | C | comparative example |
| II-2 | 42 μm | B | comparative example |
| II-3 | 38 μm | B | comparative example |
| II-4 | 36 μm | B | comparative example |
| II-5 | 65 μm | C | comparative example |
| II-6 | 66 μm | C | comparative example |
| II-7 | 67 μm | B | comparative example |
| II-8 | 42 μm | A | present invention |
| II-9 | 42 μm | A | present invention |
| II-10 | 42 μm | A | present invention |
| II-11 | 42 μm | A | present invention |
| II-12 | 42 μm | A | present invention |
| II-13 | 42 μm | A | present invention |
| II-14 | 42 μm | A | present invention |
| II-15 | 42 μm | A | present invention |
| II-16 | 42 μm | A | present invention |
| II-17 | 42 μm | A | present invention |
| II-18 | 42 μm | A | present invention |
| II-19 | 45 μm | A | present invention |
| II-20 | 43 μm | A | present invention |
| II-21 | 54 μm | A | present invention |

[Table 4]

| <Magenta ink> | | | |
|---|---|---|---|
| undercoat liquid type | line width | narrowing of grid | remarks |
| II-1 | 60 μm | C | comparative example |
| II-2 | 42 μm | B | comparative example |
| II-3 | 38 μm | B | comparative example |

(continued)

| <Magenta ink> | | | |
|---|---|---|---|
| undercoat liquid type | line width | narrowing of grid | remarks |
| II-4 | 36 μm | B | comparative example |
| II-5 | 65 μm | C | comparative example |
| II-6 | 66 μm | C | comparative example |
| II-7 | 67 μm | B | comparative example |
| II-8 | 42 μm | A | present invention |
| II-9 | 42 μm | A | present invention |
| II-10 | 42 μm | A | present invention |
| II-11 | 42 μm | A | present invention |
| II-12 | 42 μm | A | present invention |
| II-13 | 42 μm | A | present invention |
| II-14 | 42 μm | A | present invention |
| II-15 | 42 μm | A | present invention |
| II-16 | 42 μm | A | present invention |
| II-17 | 42 μm | A | present invention |
| II-18 | 42 μm | A | present invention |
| II-19 | 45 μm | A | present invention |
| II-20 | 43 μm | A | present invention |
| II-21 | 54 μm | A | present invention |

[Table 5]

| <Yellow ink> | | |
|---|---|---|
| undercoat liquid type | line width | remarks |
| II- 1 | 60 μm | comparative example |
| II-2 | 42 μm | comparative example |
| II-3 | 38 μm | comparative example |
| II-4 | 36 μm | comparative example |
| II-5 | 65 μm | comparative example |
| II-6 | 66 μm | comparative example |
| II-7 | 67 μm | comparative example |
| II-8 | 42 μm | present invention |
| II-9 | 42 μm | present invention |
| II-10 | 42 μm | present invention |
| II-11 | 42 μm | present invention |
| II-12 | 42 μm | present invention |
| II-13 | 42 μm | present invention |
| II-14 | 42 μm | present invention |

(continued)

| <Yellow ink> | | |
|---|---|---|
| undercoat liquid type | line width | remarks |
| II-15 | 42 μm | present invention |
| II-16 | 42 μm | present invention |
| II-17 | 42 μm | present invention |
| II-18 | 42 μm | present invention |
| II-19 | 45 μm | present invention |
| II-20 | 43 μm | present invention |
| II-21 | 54 μm | present invention |

[Table 6]

| <Black ink> | | | |
|---|---|---|---|
| undercoat liquid type | line width | narrowing of grid | remarks |
| II-1 | 60 μm | C | comparative example |
| II-2 | 42 μm | B | comparative example |
| II-3 | 38 μm | B | comparative example |
| II-4 | 36 μm | B | comparative example |
| II-5 | 65 μm | C | comparative example |
| II-6 | 66 μm | C | comparative example |
| II-7 | 67 μm | B | comparative example |
| II-8 | 42 μm | A | present invention |
| II-9 | 42 μm | A | present invention |
| II-10 | 42 μm | A | present invention |
| II-11 | 42 μm | A | present invention |
| II-12 | 42 μm | A | present invention |
| II-13 | 42 μm | A | present invention |
| II-14 | 42 μm | A | present invention |
| II-15 | 42 μm | A | present invention |
| II-16 | 42 μm | A | present invention |
| II-17 | 42 μm | A | present invention |
| II-18 | 42 μm | A | present invention |
| II-19 | 45 μm | A | present invention |
| II-20 | 43 μm | A | present invention |
| II-21 | 54 μm | A | present invention |

[Table 7]

| <Practical image> | | |
|---|---|---|
| undercoat liquid type | practical image | remarks |
| II-1 | B | comparative example |
| II-2 | A | comparative example |
| II-3 | A | comparative example |
| II-4 | A | comparative example |
| II-5 | B | comparative example |
| II-6 | B | comparative example |
| II-7 | B | comparative example |
| II-8 | AA | present invention |
| II-9 | AA | present invention |
| II-10 | AA | present invention |
| II-11 | AA | present invention |
| II-12 | AA | present invention |
| II-13 | A | present invention |
| II-14 | AA | present invention |
| II-15 | AA | present invention |
| II-16 | AA | present invention |
| II-17 | AA | present invention |
| II-18 | AA | present invention |
| II-19 | AA | present invention |
| II-20 | A | present invention |
| II-21 | A | present invention |

As shown in Tables 3 to 6, in the evaluation of line width, it can be seen that Comparative Examples utilizing the polymer only and Examples of the present invention utilizing both the polymer and the oligomer showed an extremely satisfactory fine line drawing ability. On the other hand, Comparative Examples utilizing the oligomer only showed a slight spreading in the line width.
In the evaluation of level of grid narrowing, a grid narrowing was observed in Comparative Examples utilizing the polymer or the oligomer singly, but such grid narrowing was not observed and an extremely satisfactory image could be obtained in the present invention in which both the polymer and the oligomer were added. It can be seen that the effect of the present invention is an effect that cannot be anticipated from the effect of utilizing the polymer or the oligomer singly.
Also in the evaluation of practical image in Table 7, as in the result of grid narrowing, it can be seen that the present invention in which both the polymer and the oligomer were added showed an extremely excellent effect.
Also the cases of present invention shown in Tables 3 to 7 showed the values "A(after polymerization)/A(before polymerization)" within a range of from 0.3 to 0.7, thus confirming the semi-cured state. (Precision of quantitative determination was estimated as about $\pm$20%, based on the fluctuation in the coating thickness and the stability of light source.)

(Example 2)

Inks and an undercoat liquid were prepared by regulating the amount of the initiator, in the preparation of the cyan ink liquid (I-1), the magenta ink liquid (I-2) and the yellow ink liquid (I-3) and at the preparation of the undercoat liquid (II-4) in Example 1, in such a manner that the curing sensitivity ratio Sc/Su of the sensitivity Sc of each ink liquid and the curing sensitivity Su of the undercoat liquid became as shown in the following Table. An increase or a decrease in the amount of the initiator was compensated by decreasing or increasing dipropylene glycol diacrylate.
After the undercoat liquid was cured to a state same as the cured state in Example 1, the experimental equipment is

Example 1 was used in 2-drop mode for each color, to obtain an image which is formed by alternating a non-ink-deposited area and a 1 mm line formed by superposed depositions of yellow, magenta and cyan inks, then by superposing thereon a black dot image (150 dpi x 150 dpi, 1-drop mode). After the discharge of each color, an exposure was so executed that the color ink was cured in the same state as in Example 1.
On the prepared sample, a black ink dot diameter du in the area in which the color inks were absent, and a black ink dot diameter dc on the droplet depositions of three colors were measured. A ratio dc/du is shown in Table 8.

[Table 8]

| Sc/Su | dc/du |
|---|---|
| 5 | 0.7 |
| 2 | 1.0 |
| 1 | 1.0 |
| 1/2 | 1.1 |
| 1/5 | 1.3 |

From Table 8, it can be seen that the dot diameter of the black ink deposited on the undercoat liquid and the dot diameter of the black ink deposited on the previously deposited ink liquid show a smaller change when the curing sensitivity ratio Sc/Su between the ink and the undercoat liquid is within a range from unity to less than 5 times.

## Claims

1. An ink-jet recording method comprising:

    providing a recording medium (26) with an undercoat liquid comprising a polymer and an oligomer in a mass ratio of 1:5-5:1;
    semi-curing the undercoat liquid; and
    recording an image by discharging an irradiation-curable ink (24) onto the semi-cured undercoat liquid (20).

2. An ink-jet recording method according to Claim 1, wherein the polymer is an acrylamide polymer.

3. An ink-jet recording method according to Claim 1, wherein the oligomer is a urethane acrylate oligomer.

4. An ink-jet recording method according to Claim 1, wherein the undercoat liquid is semi-cured by irradiation with an actinic energy ray.

5. An ink-jet recording method according to Claim 1, wherein the undercoat liquid further comprises a radical-polymerizable compound.

6. An ink-jet recording method according to Claim 5, wherein the content of the radical-polymerizable compound in the undercoat liquid is 50-90% by mass with respect to the total mass of each liquid droplet.

7. An ink-jet recording method according to Claim 1, wherein the image is recorded with an ink set including multi-coloured inks, and the discharged ink of at least one colour is semi-cured.

8. An ink-jet recording method according to Claim 1, which further comprises promoting the curing of the undercoat liquid and the discharged ink.

9. An ink-jet recording method according to Claim 1, wherein the ink has a curing sensitivity equal to or higher than the curing sensitivity of the undercoat liquid.

10. An ink-jet recording apparatus (100) comprising:

    an undercoat liquid-providing apparatus (102P) which provides a recording medium (16) with an undercoat

liquid containing a polymer and an oligomer in a mass ratio of 1:5-5:1;
an undercoat liquid-curing apparatus (103P) which is disposed at a downstream side of the undercoat liquid-providing apparatus (102P) with respect to the direction of movement of the recording medium (16) and which irradiates at least part of the undercoat liquid with an actinic energy ray to semi-cure the undercoat liquid; and
an image-recording apparatus (100A2) which is disposed at a downstream side of the undercoat liquid-curing apparatus with respect to the direction of movement of the recording medium (16) and which records an image by discharging an ink which is curable by irradiation with the actinic energy ray onto the semi-cured undercoat liquid.

**11.** An ink-jet recording apparatus (100) according to Claim 10, further comprising:

means (101) for conveying the recording medium (16); and
an actinic energy ray irradiating means (103K) which is disposed on the path of the conveyed recording medium (16) and at a downstream side of the image-recording apparatus (100A2) in the conveying direction, and which irradiates the recording medium (16) subjected to image recording by the image-recording apparatus (100A2) with an actinic energy ray to further promote the curing of the undercoat liquid and the discharged ink;
wherein the image-recording apparatus (100A2) comprises a line-type head (102Y, 102C, 102M, 102K) which discharges the ink, the line-type head being disposed perpendicular to the conveying direction of the recording medium (16) and having a length corresponding to the entire recordable width of the recording medium (16).

**Patentansprüche**

**1.** Tintenstrahl-Aufzeichnungsverfahren, umfassend:

Bereitstellen eines Aufzeichnungsmediums (26) mit einer Unterbeschichtungsflüssigkeit, umfassend ein Polymer und ein Oligomer in einem Massenverhältnis von 1:5 bis 5:1;
Semi-Härten der Unterbeschichtungsflüssigkeit; und
Aufzeichnen eines Bildes durch Ausstoßen einer durch Strahlung härtbaren Tinte (24) auf die semi-gehärtete Unterbeschichtungsflüssigkeit (20).

**2.** Tintenstrahl-Aufzeichnungsverfahren gemäß Anspruch 1, worin das Polymer ein Acrylamidpolymer ist.

**3.** Tintenstrahl-Aufzeichnungsverfahren gemäß Anspruch 1, worin das Oligomer ein Urethan-Acrylat-Oligomer ist.

**4.** Tintenstrahl-Aufzeichnungsverfahren gemäß Anspruch 1, worin die Unterbeschichtungsflüssigkeit durch Bestrahlung mit aktinischen Energiestrahlen semigehärtet wird.

**5.** Tintenstrahl-Aufzeichnungsverfahren gemäß Anspruch 1, worin die Unterbeschichtungsflüssigkeit ferner eine radikalisch polymerisierbare Verbindung umfasst.

**6.** Tintenstrahl-Aufzeichnungsverfahren gemäß Anspruch 5, worin der Gehalt der radikalisch polymerisierbaren Verbindung in der Unterbeschichtungsflüssigkeit 50 bis 90 Masse% beträgt, bezogen auf die Gesamtmasse von jedem Flüssigkeitstropfen.

**7.** Tintenstrahl-Aufzeichnungsverfahren gemäß Anspruch 1, worin das Bild mit einem Tintenset aufgezeichnet wird, das mehrfarbige Tinten umfasst, und die ausgestoßene Tinte von zumindest einer Farbe semi-gehärtet wird.

**8.** Tintenstrahl-Aufzeichnungsverfahren gemäß Anspruch 1, welches ferner das Fördern des Härtens der Unterbeschichtungsflüssigkeit und der ausgestoßenen Tinte umfasst.

**9.** Tintenstrahl-Aufzeichnungsverfahren gemäß Anspruch 1, worin die Tinte eine Härtungsempfindlichkeit aufweist, die gleich oder höher ist als die Härtungsempfindlichkeit der Unterbeschichtungsflüssigkeit.

**10.** Tintenstrahl-Aufzeichnungsvorrichtung (100), umfassend:

eine Vorrichtung zum Vorsehen einer Unterbeschichtungsflüssigkeit (102P), die ein Aufzeichnungsmedium (16) mit einer Unterbeschichtungsflüssigkeit versieht, die ein Polymer und ein Oligomer in einem Massenverhältnis

von 1:5 bis 5:1 enthält;
eine Vorrichtung zum Härten der Unterbeschichtungsflüssigkeit (103P), die der Vorrichtung vom Vorsehen einer Unterbeschichtungsflüssigkeit (102P) in Bezug auf die Bewegungsrichtung des Aufzeichnungsmediums (16) nachgeschaltet angeordnet ist und die zumindest einen Teil der Unterbeschichtungsflüssigkeit mit aktinischen Energiestrahlen bestrahlt, um die Unterbeschichtungsflüssigkeit zu semi-härten; und
eine Bildaufzeichnungsvorrichtung (100A2), die in Bezug auf die Bewegungsrichtung des Aufzeichnungsmediums (16) der Vorrichtung zum Härten der Unterbeschichtungsflüssigkeit nachgeschaltet angeordnet ist und die ein Bild durch Ausstoßen einer Tinte, die durch Bestrahlung mit den aktinischen Energiestrahlen härtbar ist, auf die semi-gehärtete Unterbeschichtungsflüssigkeit aufzeichnet.

**11.** Tintenstrahl-Aufzeichnungsvorrichtung (100) gemäß Anspruch 10, ferner umfassend:

Mittel (101) zum Befördern des Aufzeichnungsmediums (16); und
Mittel zum Einstrahlen von aktinischen Energiestrahlen (103K), welches auf dem Weg des beförderten Aufzeichnungsmediums (16) und an einer Position, die in Beförderungsrichtung der Bildaufzeichnungsvorrichtung (100A2) nachgeschaltet ist, angeordnet ist, und die das Aufzeichnungsmedium (16), das der Bildaufzeichnung durch die Bildaufzeichnungsvorrichtung (100A2) unterworfen worden ist, mit aktinischen Energiestrahlen bestrahlt, um das Härten der Unterbeschichtungsflüssigkeit und der ausgestoßenen Tinte weiter zu fördern;
worin die Bildaufzeichnungsvorrichtung (100A2) einen Kopf vom Zeilentyp (102Y, 102C, 102M, 102K) umfasst, welcher die Tinte ausstößt, worin der Kopf vom Zeilentyp rechtwinklig zur Bewegungsrichtung des Aufzeichnungsmediums (16) angeordnet ist und eine Länge aufweist, die der gesamten aufzeichnungsfähigen Breite des Aufzeichnungsmediums (16) entspricht.

## Revendications

**1.** Procédé d'enregistrement à jet d'encre comprenant le fait :

d'alimenter un support d'enregistrement (26) en liquide de sous couche comprenant un polymère et un oligomère dans un rapport de masse de 1 : 5 à 5 : 1 ;
d'effectuer un semi-durcissement du liquide de sous couche ; et
d'enregistrer une image par décharge d'une encre durcissable par irradiation (24) sur le liquide de sous couche semi-durci (20).

**2.** Procédé d'enregistrement à jet d'encre selon la revendication 1, dans lequel le polymère est un polymère acrylamide.

**3.** Procédé d'enregistrement à jet d'encre selon la revendication 1, dans lequel l'oligomère est un oligomère d'acrylate d'uréthane.

**4.** Procédé d'enregistrement à jet d'encre selon la revendication 1, dans lequel le liquide de sous couche est semi-durci par irradiation avec un rayonnement d'énergie actinique.

**5.** Procédé d'enregistrement à jet d'encre selon la revendication 1, dans lequel le liquide de sous couche comprend en outre un composé polymérisable par voie radicalaire.

**6.** Procédé d'enregistrement à jet d'encre selon la revendication 5, dans lequel la teneur du composé polymérisable par voie radicalaire dans le liquide de sous couche est de 50 à 90% en masse par rapport à la masse totale de chaque gouttelette de liquide.

**7.** Procédé d'enregistrement à jet d'encre selon la revendication 1, dans lequel l'image est enregistrée avec un jeu d'encres comportant des encres multicolores, et l'encre déchargée d'au moins une couleur est semi-durcie.

**8.** Procédé d'enregistrement à jet d'encre selon la revendication 1, qui comprend en outre le fait de favoriser le durcissement du liquide de sous couche et de l'encre déchargée.

**9.** Procédé d'enregistrement à jet d'encre selon la revendication 1, dans lequel l'encre a une sensibilité au durcissement supérieure ou égale à la sensibilité au durcissement du liquide de sous couche.

**10.** Appareil d'enregistrement à jet d'encre (100) comprenant :

un appareil d'alimentation en liquide de sous couche (102P) qui alimente un support d'enregistrement (16) en liquide de sous couche contenant un polymère et un oligomère dans un rapport de masse de 1 : 5 à 5 : 1 ;
un appareil de durcissement de liquide de sous couche (103P) qui est disposé au niveau d'un côté en aval de l'appareil d'alimentation en liquide de sous couche (102P) par rapport à la direction de déplacement du support d'enregistrement (16) et qui irradie au moins une partie du liquide de sous couche avec un rayonnement d'énergie actinique pour effectuer un semi-durcissement du liquide de sous couche ; et
un appareil d'enregistrement d'image (100A2) qui est disposé au niveau d'un côté en aval de l'appareil de durcissement de liquide de sous couche par rapport à la direction de déplacement du support d'enregistrement (16) et qui enregistre une image en déchargeant une encre qui est durcissable par irradiation avec le rayonnement d'énergie actinique sur le liquide de sous couche semi-durci.

**11.** Appareil d'enregistrement à jet d'encre (100) selon la revendication 10, comprenant en outre :

un moyen (101) destiné à transporter le support d'enregistrement (16) ; et
un moyen d'irradiation par rayonnement d'énergie actinique (103K) qui est disposé sur le chemin du support d'enregistrement transporté (16) et au niveau d'un côté en aval de l'appareil d'enregistrement d'image (100A2) dans la direction de transport, et qui irradie le support d'enregistrement (16) soumis à un enregistrement d'image par l'appareil d'enregistrement d'image (100A2) avec un rayonnement d'énergie actinique pour favoriser davantage le durcissement du liquide de sous couche et de l'encre déchargée ;
dans lequel l'appareil d'enregistrement d'image (100A2) comprend une tête de type ligne (102Y, 102C, 102M, 102K) qui décharge l'encre, la tête de type ligne étant disposée perpendiculairement à la direction de transport du support d'enregistrement (16) et ayant une longueur correspondant à la largeur enregistrable totale du support d'enregistrement (16).

Fig. 1

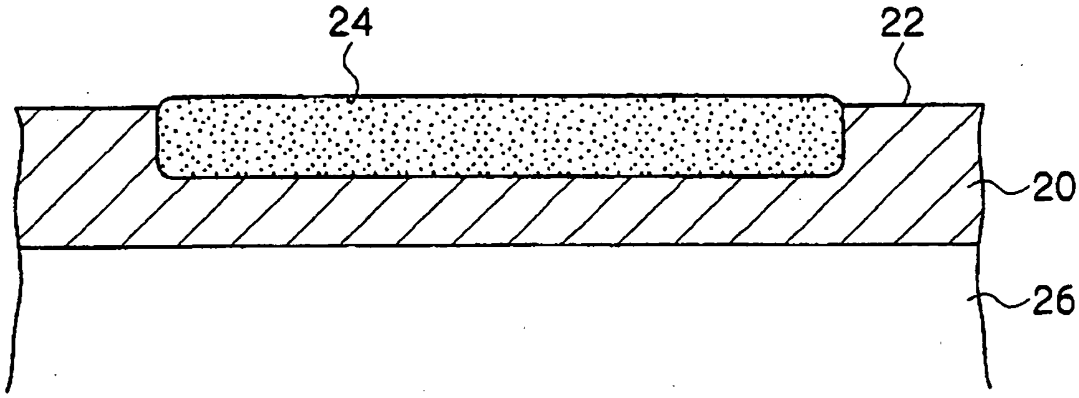

Fig. 2A

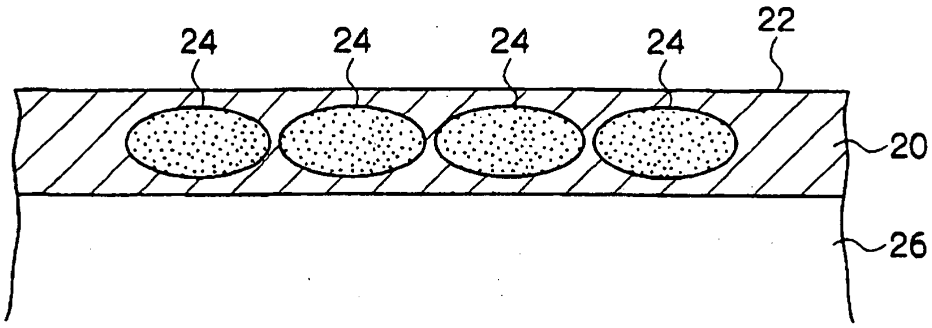


Fig. 2B

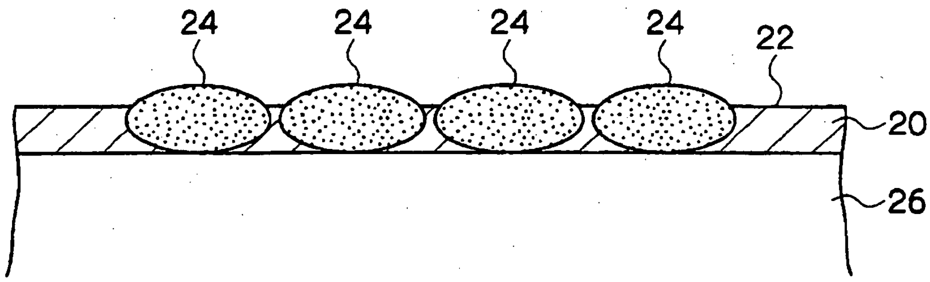


Fig. 2C

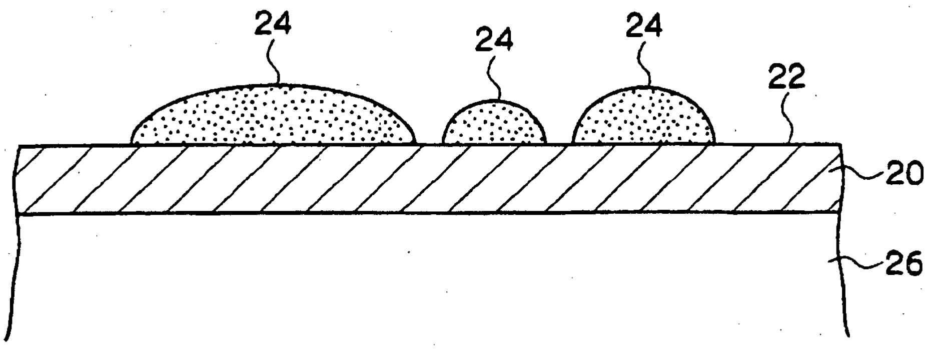

Fig. 3

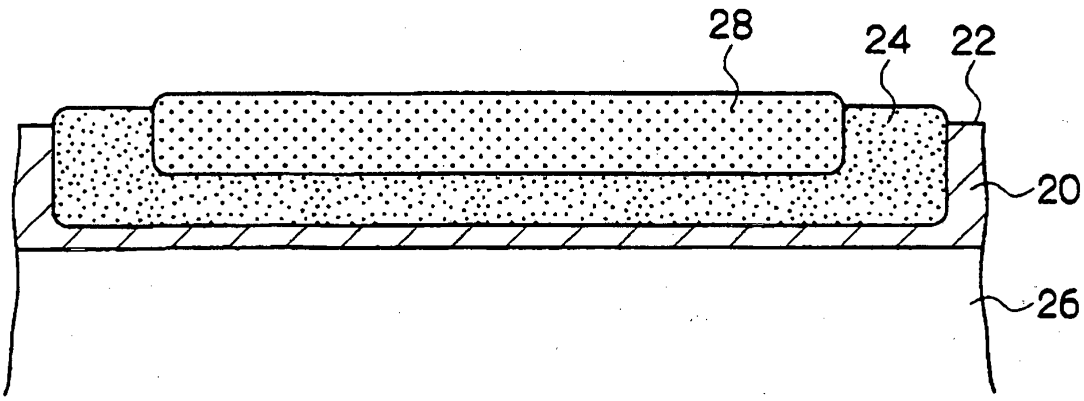

Fig. 4A

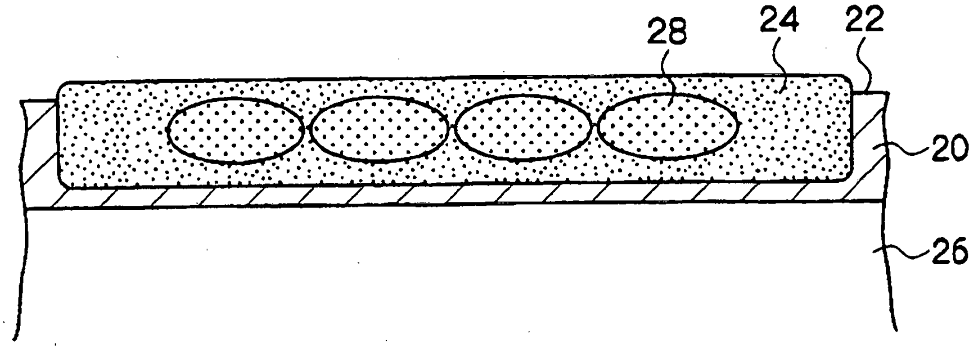


Fig. 4B

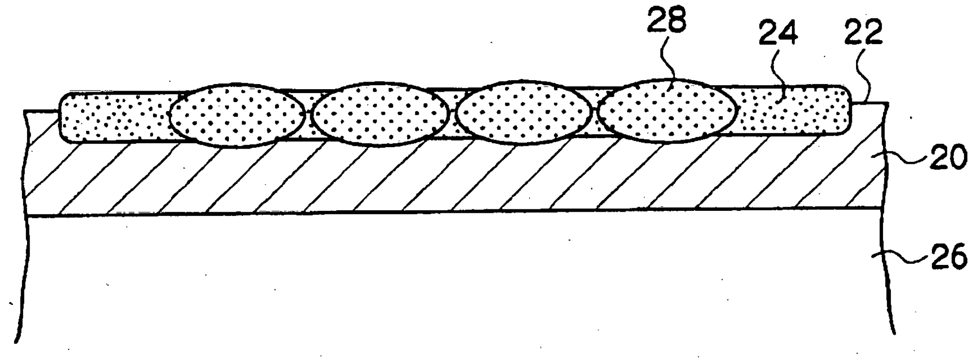


Fig. 4C

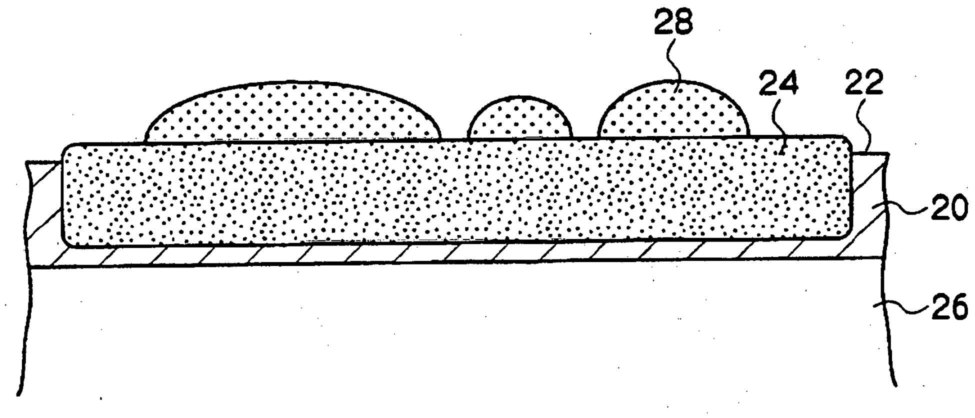

Fig. 5A

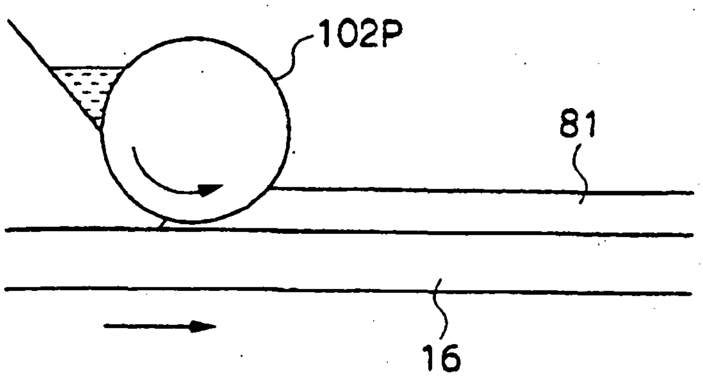


Fig. 5B

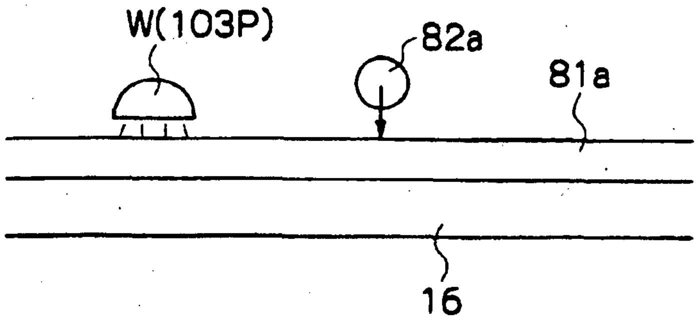


Fig. 5C

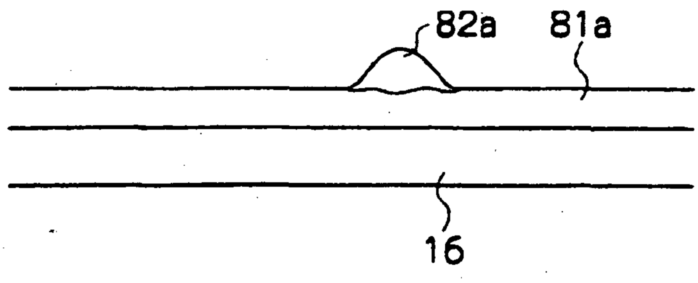


Fig. 5D

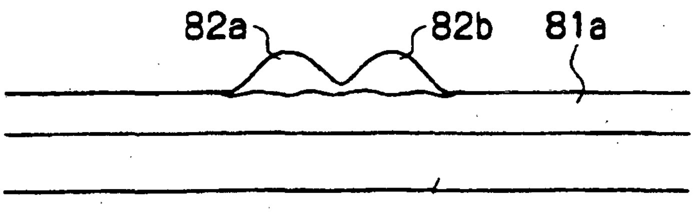

Fig.6

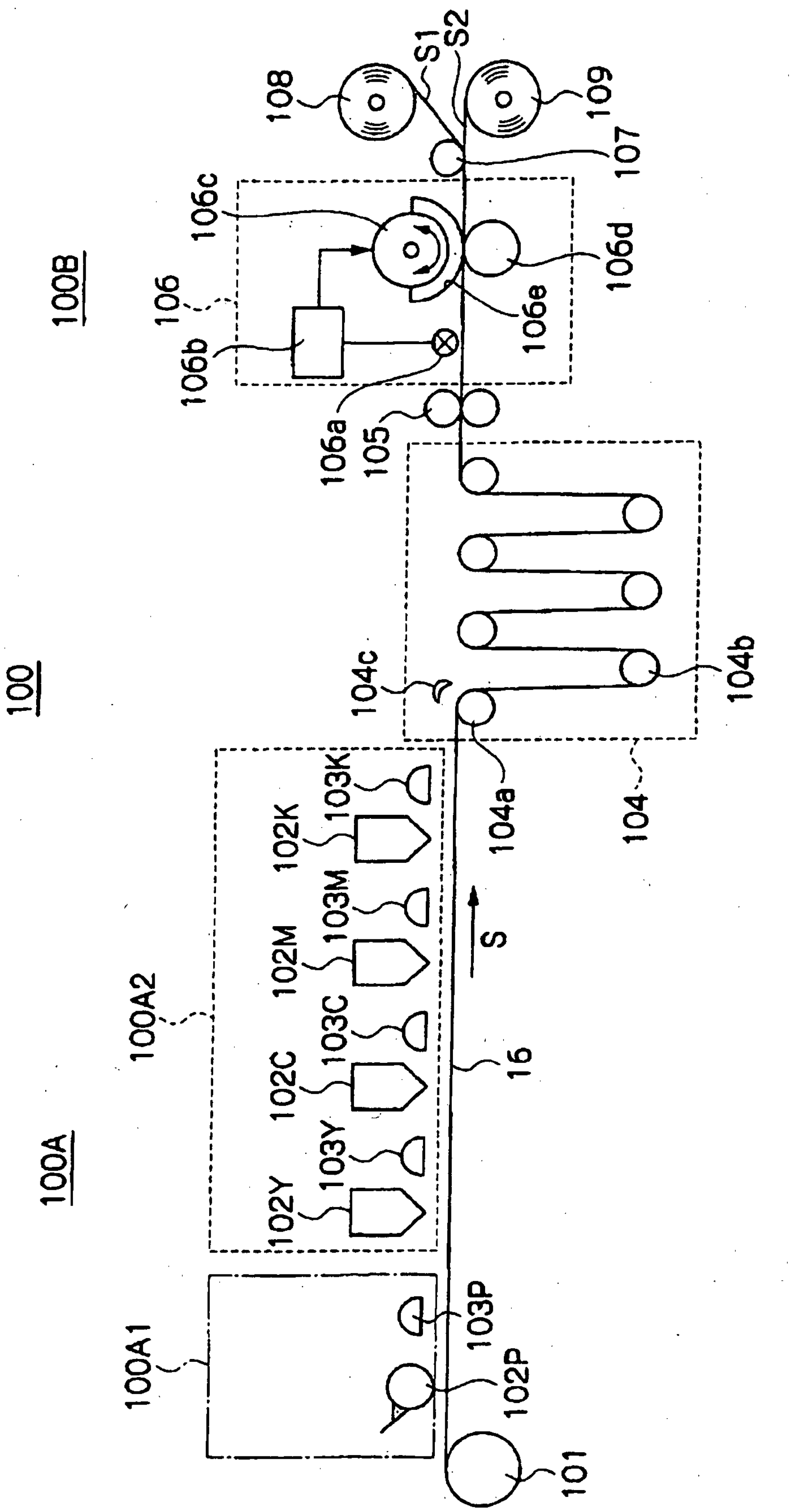
100
100A
100B
100A1
100A2
101
102P
103P
102Y
103Y
102C
103C
102M
103M
102K
103K
16
S
104
104a
104b
104c
105
106
106a
106b
106c
106d
106e
107
108
109
S1
S2

Fig. 7A

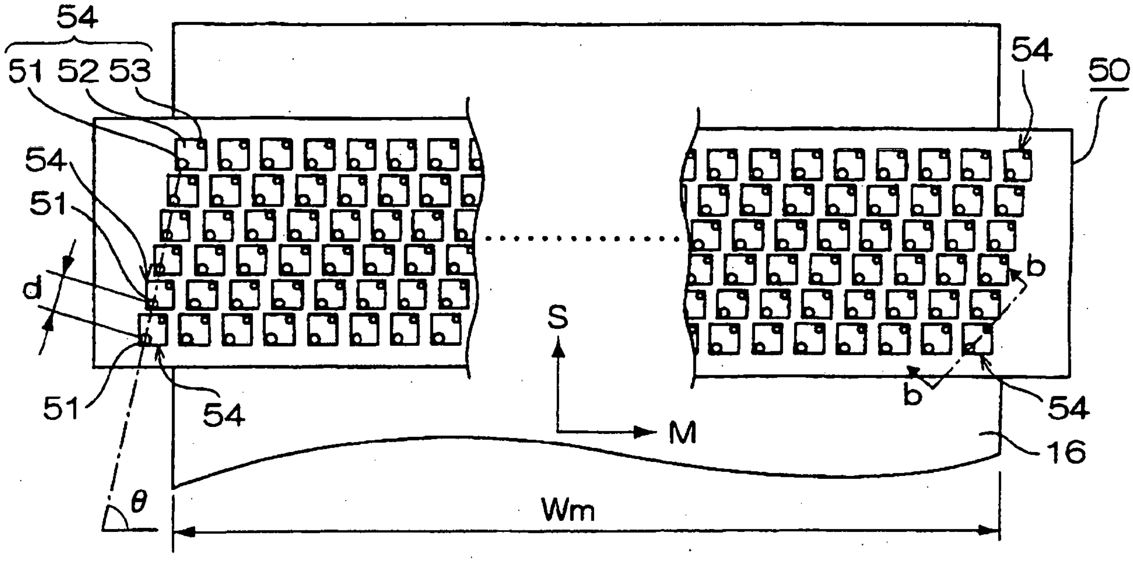
54
51 52 53
54
50
54
51
d
51
54
S
M
b
b
54
16
θ
Wm

Fig. 7B

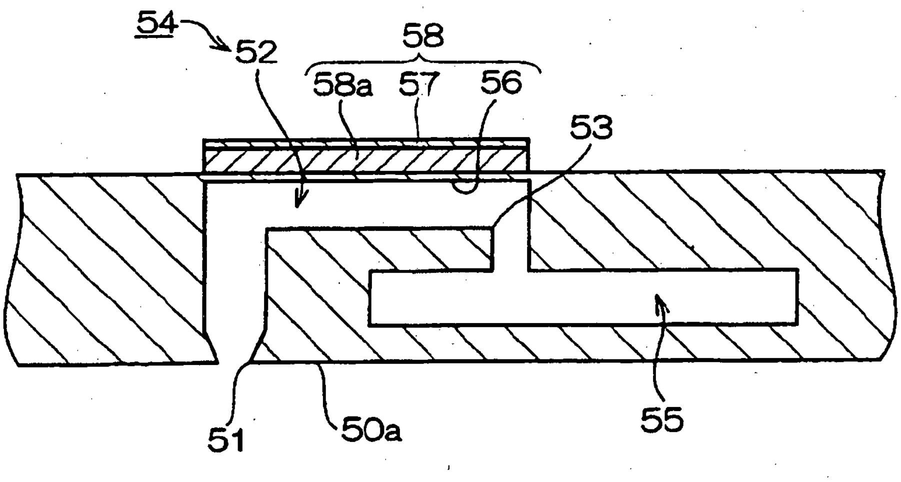
54
52
58
58a 57 56
53
51
50a
55

Fig. 8

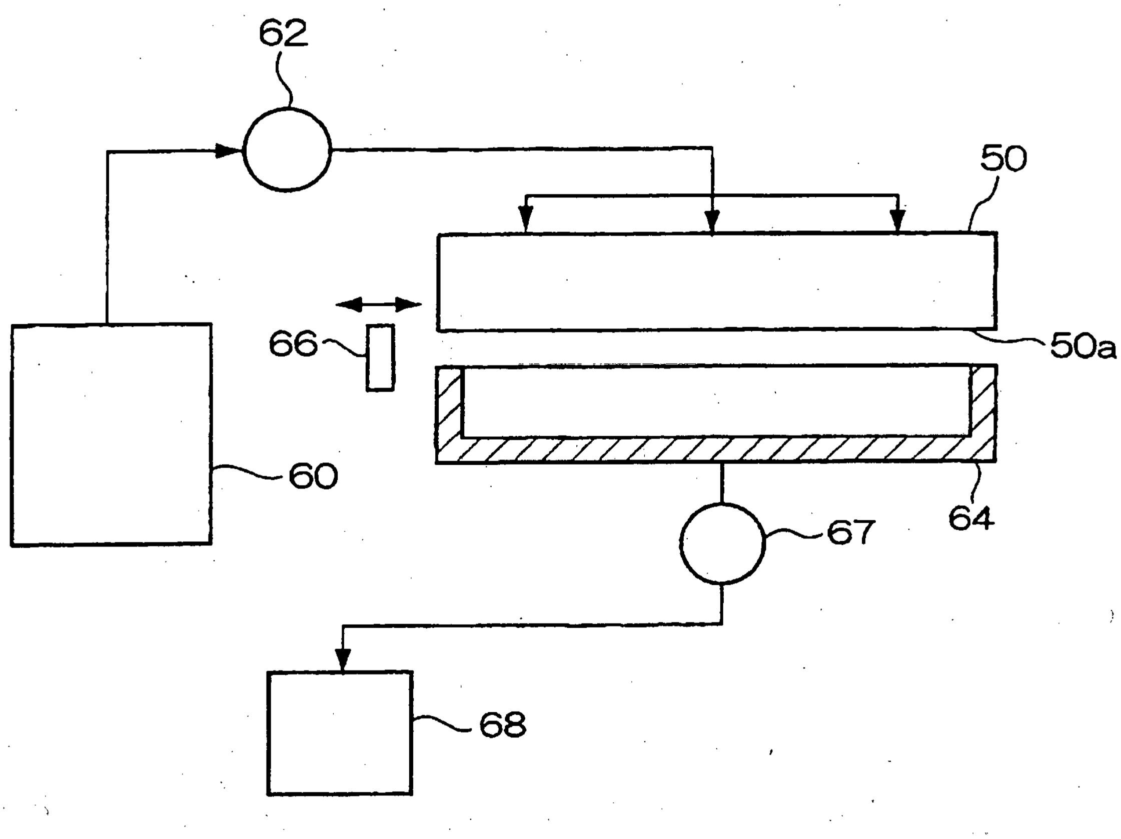

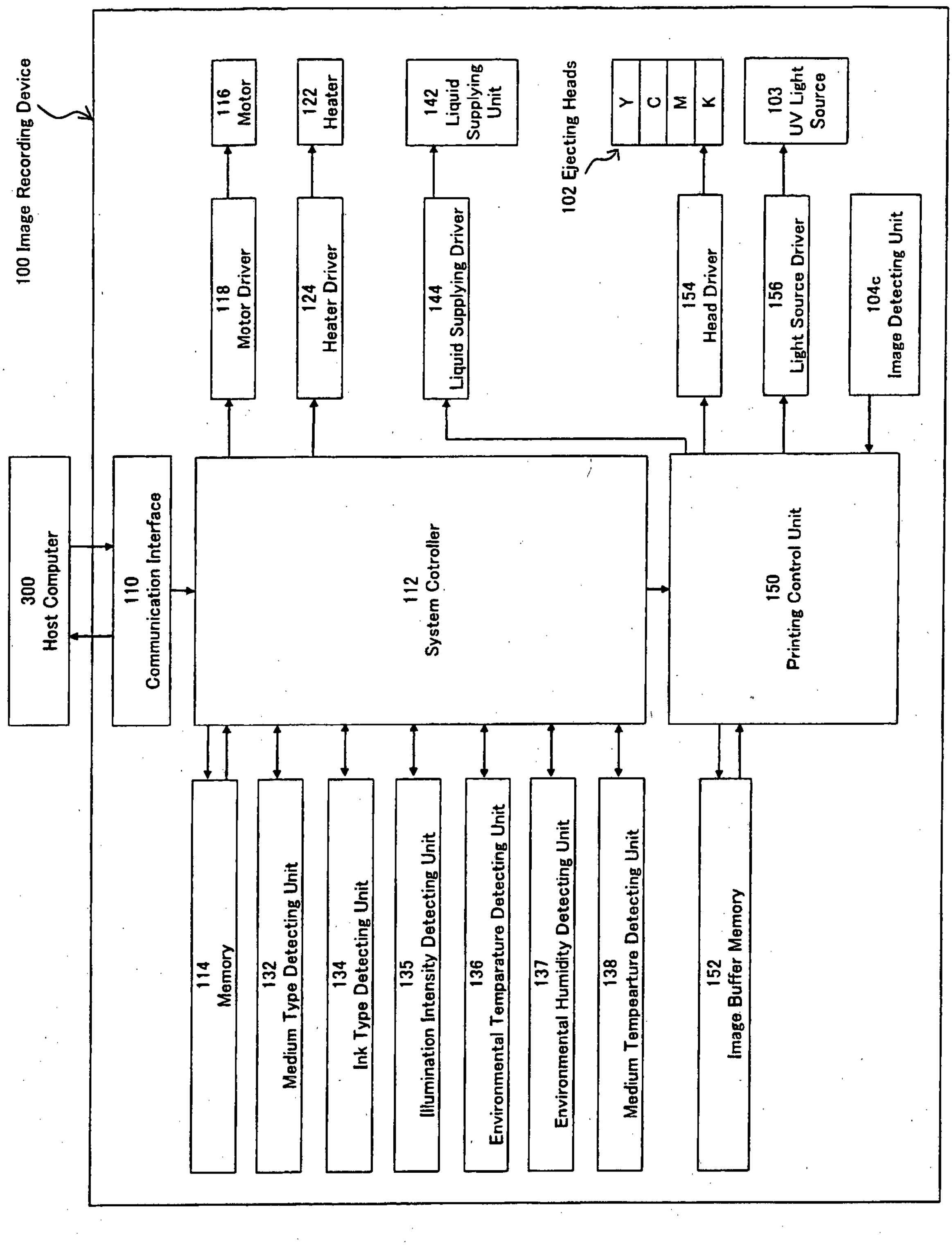
100 Image Recording Device
300 Host Computer
110 Communication Interface
112 System Cotroller
150 Printing Control Unit
118 Motor Driver
116 Motor
124 Heater Driver
122 Heater
144 Liquid Supplying Driver
142 Liquid Supplying Unit
102 Ejecting Heads
Y
C
M
K
154 Head Driver
156 Light Source Driver
103 UV Light Source
104c Image Detecting Unit
114 Memory
132 Medium Type Detecting Unit
134 Ink Type Detecting Unit
135 Illumination Intensity Detecting Unit
136 Environmental Temparature Detecting Unit
137 Environmental Humidity Detecting Unit
138 Medium Tempearture Detecting Unit
152 Image Buffer Memory

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 63060783 A
- JP 8174997 A
- JP 2004042548 A
- JP 2003145745 A
- JP 2004042525 A
- JP 2005096254 A
- EP 1728644 A
- US 2006077243 A
- JP 7040649 A
- US 2006075917 A
- EP 1902849 A
- JP 2001181549 A
- EP 1905608 A
- JP 10067905 A
- JP 62173463 A
- JP 62183457 A
- WO 8800723 A
- JP 63044658 A
- JP 60151636 A
- JP 6250331 A
- JP 47006416 B
- JP 47003981 B
- JP 47022326 B
- JP 47023664 B
- JP 57030704 A
- JP 60026483 B
- JP 60026403 B
- JP 62081345 A
- JP 1034242 B
- US 4318791 A
- EP 0284561 A1
- JP 2211452 A
- JP 61194062 A
- JP 2009597 B
- JP 2009596 B
- JP 63061950 B
- JP 59042864 B
- EP 104143 A
- US P4837124 A
- JP 2150848 A
- JP 2096514 A
- EP 370693 A
- EP 233567 A
- EP 297443 A
- EP 297442 A
- EP 279210 A
- EP 422570 A
- US P3902144 A
- US P4933377 A
- US P4760013 A
- US P4734444 A
- US P2833827 A
- US P4743528 A
- JP 63138345 A
- JP 63142345 A
- JP 63142346 A
- JP 46042363 B
- JP 52147277 B
- JP 52014278 B
- JP 52014279 B
- JP 4537377 B
- JP 4486516 B
- US P3567453 A
- US P4343891 A
- EP 109772 A
- EP 109773 A
- JP 63143537 A
- JP 59152396 A
- JP 61151197 A
- JP 63041484 A
- JP 2000249 A
- JP 2004705 A
- JP 1304453 A
- JP 1152109 A
- EP 0290750 A
- EP 046083 A
- EP 156153 A
- EP 271851 A
- EP 0388343 A
- US P3901710 A
- US P4181531 A
- JP 60198538 A
- JP 53133022 A
- EP 0199672 A
- EP 84151 A
- EP 199672 A
- EP 044115 A
- EP 0101122 A
- US P4618564 A
- US P4371605 A
- US P4431774 A
- JP 6418143 A
- JP 2245756 A
- JP 4365048 A
- JP 62006223 B
- JP 63014340 B
- JP 59174831 A
- WO 1388492 A

- JP 53133428 A
- WO 3337024 A
- JP 62058241 A
- JP 5281728 A
- WO 2641100 A
- WO 3333450 A
- WO 3021590 A
- WO 3021599 A
- JP 4420189 B
- JP 51082102 A
- JP 52134692 A
- JP 59138205 A
- JP 60084305 A
- JP 62018537 A
- JP 6433104 A
- JP 53000702 A
- JP 55500806 B
- JP 5142772 A
- JP 56075643 A
- JP 48042965 B
- JP 55034414 B
- JP 6308727 A
- JP 6250387 A
- JP 8065779 A

**Non-patent literature cited in the description**


- **BRUCE M. MONROE et al.** *Chemical Revue,* 1993, vol. 93, 435
- **R. S. DAVIDSON.** *Journal of Photochemistry and biology A: Chemistry,* 1993, vol. 73, 81
- **J. P. FAUSSIER.** Phtoinitiaed Polymerization - Theory and Application. *Repra Review Vol. 9, Report Repra Technology,* 1998
- **M. TSUNOOKA et al.** *Prog. Polym. Sci.,* 1996, vol. 21, 1
- **F. D. SAEVA.** *Topics in Current Chemistry,* 1990, vol. 156, 59
- **G. G. MASLAK.** *Topic in Current Chemistry,* 1993, vol. 168, 1
- **H. B. SHUSTER et al.** *JACS,* 1990, vol. 112, 6329
- **I. D. F. EASON et al.** *JACS,* 1980, vol. 102, 3298
- **J. P. FOUASSIER ; J. F. RABEK.** *Radiation Curing in Polymer Science and Technology,* 1993, 77-117
- **WAKABAYASHI et al.** *Bull. Chem. Soc. Japan,* 1969, vol. 42, 2924
- **F. C. SCHAEFER et al.** *J. Org. Chem.,* 1964, vol. 29, 1527
- **M. R. SANDERS et al.** *Journal of Polymer Society,* 1972, vol. 10, 3173